(19) Europäisches Patentamt
European Patent Office
Office européen des brevets

(11) EP 4 053 771 A1

(12) EUROPÄISCHE PATENTANMELDUNG

(43) Veröffentlichungstag:
07.09.2022 Patentblatt 2022/36

(21) Anmeldenummer: 22151700.6

(22) Anmeldetag: 19.02.2019

(51) Internationale Patentklassifikation (IPC):
G06Q 20/02 (2012.01)      G06Q 20/20 (2012.01)
G06Q 20/38 (2012.01)

(52) Gemeinsame Patentklassifikation (CPC):
G06Q 20/385; G06Q 20/027; G06Q 20/20

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(62) Dokumentnummer(n) der früheren Anmeldung(en) nach Art. 76 EPÜ:
19157958.0 / 3 699 851

(71) Anmelder: VR Payment GmbH
60528 Frankfurt am Main (DE)

(72) Erfinder: BARTEL, Oliver
60486 Frankfurt (DE)

(74) Vertreter: Richardt Patentanwälte PartG mbB
Wilhelmstraße 7
65185 Wiesbaden (DE)

Bemerkungen:
•Diese Anmeldung ist am 17-01-2022 als Teilanmeldung zu der unter INID-Code 62 erwähnten Anmeldung eingereicht worden.
•Die Patentansprüche wurden nach dem Anmeldetag / dem Tag des Eingangs der Teilanmeldung eingereicht (R. 68(4) EPÜ).

(54) ABLEITUNG EINES TOKENS MITTELS EINES TRANSAKTIONS-BEZOGENEN EINMALSCHLÜSSELS

(57) Die Erfindung betrifft Verfahren zur Autorisierung einer bargeldlosen Transaktion, umfassend:
- Erzeugung (102) einer Nachricht (243), eine Hardware-ID (258) eingeht, durch ein Zahlungsauslöseendgerät (204);
- Ableitung (104) eines ersten Authentifizierungstokens (AUT1) aus der Nachricht mit einem Einmalschlüssel (252);
- Senden (106) des ersten Authentifizierungstokens und der Nachricht vom Zahlungsauslöseendgerät (204) an einen Vermittlungs-Server (250);
- Prüfen des ersten Authentifizierungstoken und der Nachricht durch den Vermittlungs-Server (250);
- Nur falls die Prüfungen ergeben, dass das erste Authentifizierungstoken (AUT1) valide ist und die Nachricht einen Referenzwert enthält, Senden (112) eines zweiten Authentifizierungstoken (AUT2) von dem Vermittlungs-Server an einen Autorisierungsserver (234);
- Nach jeder Prüfung eines von dem Zahlungsauslöseendgerät empfangenen ersten Authentifizierungstokens, Erzeugung (116) eines neuen Einmalschlüssels und eines neuen Prüfschlüssels durch den Vermittlungs-Server und Senden (118) des neuen Einmalschlüssels an das Zahlungsauslöseendgerät; und
- Speichern (120) des neuen Einmalschlüssels durch das Zahlungsauslöseendgerät.

Fig. 2

**Beschreibung**

**Technisches Gebiet**

Die Erfindung betrifft Zahlungsauslöseendgeräte, insbesondere Kassensysteme, zur Durchführung bargeldloser Transaktionen, sowie entsprechende Verfahren zur Initialisierung bargeldloser Transaktionen.

**Stand der Technik**

Um ein möglichst breites Publikum anzusprechen, möchten viele Anbieter von Waren und Dienstleistungen neben und/oder statt der Barzahlung ihren Kunden auch eine Option zum bargeldlosen Zahlen anbieten. Diese bargeldlose Zahlmöglichkeit soll sowohl für den Anbieter von Ware und/oder Dienstleistungen (im Folgenden als "Händler" bezeichnet) als auch für den Kunden einfach in der Handhabung und dabei zugleich sicher vor Manipulation und Betrug sein. Zudem sollen die erforderlichen Geräte möglichst günstig und wenig wartungsintensiv sein.

In Deutschland hat sich für die Durchführung bargeldloser Zahlungen insbesondere das Girokartensystem durchgesetzt. Die hierfür verwendeten POS-Terminals werden von mehreren Herstellern angeboten, die teilweise im Verband der Terminal-Hersteller in Deutschland e. V. organisiert sind. Um Kunden wie Händlern die Sicherheit zu geben, dass die Transaktionen auch wirklich von einem hierfür zugelassenen, vertrauenswürdigen und nicht manipulierten POS Terminal durchgeführt werden, statten die Hersteller die POS Terminals derzeit mit Hardware-Sicherheitsmodulen (HSMs) aus. In diesen HSMs der POS Terminals ist jeweils ein geheimer kryptographischer Schlüssel gespeichert, welcher von den einzelnen POS Terminals zur Ableitung einer Prüfsumme genutzt wird. Diese Prüfsumme wiederum wird mittels geeigneter kryptographischer Schlüssel seitens eines Empfänger- und Autorisierungssystems geprüft, um sicherzustellen, dass die Prüfsumme von einem autorisierten, vertrauenswürdigen POS Terminal gebildet wurde. In der Regel werden alle POS Terminals eines Herstellers so initialisiert, dass derselbe geheime kryptographische Schlüssel in den HSMs aller POS Terminals dieses Herstellers oder zumindest in den HSMs aller POS Terminals einer bestimmten Bauserie gespeichert wird. Das Empfängersystem verfügt also über einen einzigen kryptographischen Schlüssel, der zur Prüfung der transaktionsbezogenen Nachrichten einer Vielzahl von POS Terminals verwendet wird.

Diese Infrastruktur hat den Nachteil, dass in jedem Kartenzahlungsterminal der gleiche Schlüssel geladen ist. Wenn dieser Schlüssel kompromittiert wird, sind eine Vielzahl von POS Terminals betroffen. Es muss sowohl auf Seiten des Empfängersystems als auch auf Seiten der POS Terminals jeweils ein neuer Schlüssel in die lokalen HSMs eingebracht und die bisherigen Schlüssel gelöscht oder invalidiert werden. Dieser Prozess ist technisch komplex, sehr zeitaufwendig und damit teuer, denn Sinn und Zweck eines HSMs ist ja eine Speicherung von geheimen Schlüsseln derart, dass diese nicht ohne weiteres verändert oder ausgetauscht werden können. In manchen Fällen müsste das HSM oder das ganze Terminal ausgetauscht werden, und auch wenn im Falle eines kompromittierten Schlüssels der Austausch dieser Schlüssel möglich ist, ist dieser Prozess zeitaufwändig, sodass einem Angreifer ein gewisses Zeitfenster zur Verfügung steht, in welchem das System verwundbar ist.

US-Patent Nr. 4,578,530 beschreibt ein Ende-zu-Ende-Verschlüsselungssystem mit Schlüsselverwaltungsprozeduren zur Bereitstellung einer sicheren Finanzdatenkommunikation. Die Kommunikation erfolgt zwischen einem Systembenutzer an einem von mehreren Transaktionsterminals einer von mehreren Empfänger-Institutionen einerseits und einer von mehreren Herausgeber-Institutionen andererseits. Hierbei werden ausgewählte Elemente der Daten unter Verwendung eines einmaligen Sitzungsschlüssels verschlüsselt, entschlüsselt und verarbeitet. Der Sitzungsschlüssel wird mit Master-Schlüsseln verschlüsselt und effizient zusammen mit den spezifischen Segmenten der Anfrage- und Antwortnachrichten gesendet. Ein Sitzungsschlüssel-Authentifizierungscode wird verwendet, um die Wiederverwendung eines zuvor verwendeten Sitzungsschlüssels zu verhindern, wodurch eine unentdeckte Nachrichtenwiederholung oder ein unentdecktes Ersetzen oder Einfügen von Nachrichten oder Datenelementen ausgeschlossen wird.

**Zusammenfassung**

Ziel der vorliegenden Erfindung ist es, ein verbessertes Verfahren, ein Zahlungsauslöseendgerät und einen Vermittlungs-Server zur Autorisierung einer bargeldlosen Transaktion gemäß den unabhängigen Ansprüchen bereitzustellen. Ausführungsformen der Erfindung sind in den abhängigen Ansprüchen angegeben. Ausführungsformen der vorliegenden Erfindung können frei miteinander kombiniert werden, wenn sie sich nicht gegenseitig ausschließen.

In einem Aspekt betrifft die Erfindung ein Verfahren zur Autorisierung einer bargeldlosen Transaktion. Das Verfahren umfasst:

- Erzeugung einer Nachricht durch eine Terminalsoftware eines Zahlungsauslöseendgeräts, wobei in die Nachricht zumindest transaktionsbezogene Daten der Transaktion, Daten eines digitalen und/oder elektronischen Zahlungsmittels, und eine für das Zahlungsauslöseendgerät eindeutige Hardware-ID eingehen;

- Ableitung eines ersten Authentifizierungstokens aus der Nachricht durch die Terminalsoftware mit Hilfe eines nur einmal für die Transaktion gültigen Einmalschlüssels;

- Senden des ersten Authentifizierungstokens und der Nachricht vom Zahlungsauslöseendgerät an einen Vermittlungs-Server über eine geschützte Netzwerkverbindung, wobei der Vermittlungs-Server einen Prüfschlüssel und zumindest einen Referenzwert umfasst, wobei der Prüfschlüssel ein zur einmaligen Verwendung bestimmter und dem Zahlungsauslöseendgerät aktuell zugeordneter Wert ist, wobei der zumindest eine Referenzwert einen Referenzwert für die Hardware-ID des Zahlungsauslöseendgeräts umfasst;

- Prüfung des ersten Authentifizierungstokens anhand der gesendeten Nachricht und des dem Zahlungsauslöseendgerät aktuell zugeordneten Prüfschlüssel durch den Vermittlungs-Server;

- Prüfen der Nachricht durch Vergleich der Nachricht mit dem zumindest einen Referenzwert durch den Vermittlungs-Server, wobei der zumindest eine Referenzwert den Referenzwert für die Hardware-ID umfasst; beispielsweise kann der Vermittlungs-Server Validität des ersten Authentifizierungstokens selektiv dann feststellen, wenn Identität des zumindest einen Referenzwertes mit dem jeweils verglichenen Teil der Nachricht gegeben ist; optional können weitere Merkmale geprüft werden, z.B. die Gültigkeit von Zertifikaten, ein maximales Alter des Zahlungsmittels oder der Terminalsoftware, etc.;

- Nur falls die Prüfungen ergeben, dass das erste Authentifizierungstoken valide ist und die Nachricht den zumindest einen Referenzwert enthält, Senden eines zweiten Authentifizierungstoken von dem Vermittlungs-Server an einen Autorisierungsserver, welcher zur Autorisierung der Transaktion in Abhängigkeit vom Ergebnis einer Prüfung des zweiten Authentifizierungstoken ausgebildet ist;

- Nach jeder Prüfung eines von dem Zahlungsauslöseendgerät empfangenen ersten Authentifizierungstokens, Erzeugung eines neuen Einmalschlüssels für das Zahlungsauslöseendgerät und eines diesem neuen Einmalschlüssel zugeordneten neuen Prüfschlüssels durch den Vermittlungs-Server und Senden des neuen Einmalschlüssels an das Zahlungsauslöseendgerät; und

- Speichern des neuen Einmalschlüssels durch das Zahlungsauslöseendgerät so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

Diese Merkmale können vorteilhaft sein, da ein hohes Maß an Sicherheit vor dem Einsatz manipulierter und/oder nicht registrierter Zahlungsauslöseendgeräte gewährt wird, ohne dass hierfür die Verwendung eines HSMs auf Seiten des Zahlungsauslöseendgeräts erforderlich ist: Ein Einmalschlüssel, der nach jedem (erfolgreichen oder nicht erfolgreichen) transaktionsbezogenen Autorisierungsversuch neu gebildet wird, wird zur Ableitung eines Authentifizierungstokens aus zumindest einer Hardware-ID des Zahlungsauslöseendgeräts verwendet. Ein entsprechender Referenzwert wurde (z.B. im Zuge eines einmaligen Registrierungsprozesses des Zahlungsauslöseendgeräts beim Vermittlungs-Server) beim Vermittlungs-Server hinterlegt. Der Vermittlungs-Server kann also prüfen, ob die Nachricht mit dem ersten Authentifizierungstoken von einem Zahlungsauslöseendgerät gesendet wurde, welches dem Vermittlungs-Server als "registriertes" Zahlungsauslöseendgerät "bekannt" ist. Größere Manipulationen an der Hardware des Zahlungsauslöseendgeräts, welche zu einer Änderung der Hardware-ID führen, würden ebenfalls erkannt und zu einer Zurückweisung der Autorisierungsanforderung führen, da ein aus einer manipulierten Hardware-ID abgeleiteter Authentifizierungstoken nicht mehr mit dem hinterlegten Referenzwert übereinstimmt. Außerdem wird der Einmalschlüssel von dem Vermittlungs-Server für jedes neue Transaktion bzw. für jede neue transaktionsbezogene Autorisierungsanfrage-Nachricht neu erstellt. Wenn der Vermittlungs-Server feststellt, dass die Hardware-ID des Zahlungsauslöseterminals verändert wurde, dass dem Händler seine Händlerlizenz zur Verwendung der Zahlungsauslöseendgeräte bzw. des Vermittlungs-Servers entzogen wurde oder wenn der Hersteller der Zahlungsauslöseendgeräte ein Sicherheitsproblem an den Geräten bemerkt, kann der Vermittlungs-Server die Erstellung eines neuen Einmalschlüssels für ein bestimmtes Zahlungsauslöseendgerät oder für alle Zahlungsauslöseendgeräte eines Herstellers unterlassen und dadurch die Anbahnung weiterer Transaktionen über möglicherweise unsichere Zahlungsauslöseendgeräte sehr schnell und unkompliziert unterbinden.

Die Latenzzeit bis zur Sperrung von Zahlungsauslöseendgeräten bei Sicherheitsproblemen kann somit erheblich reduziert werden. Außerdem stellt der Umstand, dass der Einmalschlüssel für jede neue Transaktion neu erstellt wird, sicher, dass eine Manipulation an dem Zahlungsauslöseendgerät, welche sich auf die Hardware-ID und/oder das Verfahren zur Ableitung des ersten Authentifizierungstoken auswirkt, praktisch unmittelbar zu funktionalen Deaktivierung des Zahlungsauslöseendgeräts führt, denn ein erstes Authentifizierungstoken, das auf Basis einer manipulierten Hardware-ID und/oder eines manipulierten Ableitverfahrens erstellt wurde, führt dazu, dass das erste Authentifizierungstoken vom Vermittlungs-Server als nicht valide erkannt wird. Auch eine Manipulation des Einmalschlüssels würde sofort erkannt, da eine solche Manipulation in einer Erzeugung eines ersten Authentifizierungstokens führen würde, dass die Prüfung des ersten Authentifizierungstoken mittels eines mit dem Prüfschlüssel aus der erhaltenen Nachricht abgeleiteten Werts ergibt, dass das erste Authentifizierungstoken nicht valide ist. Ein Angreifer müsste sowohl den Einmalschlüssel als auch den Prüfschlüssel gleichzeitig und in kongruenter Weise manipulieren, was praktisch unmöglich ist, da beide Werte auf verschiedenen Geräten gespeichert sind und für jede Transaktion vorab neu erstellt werden.

Die Verwendung des oben beschriebenen Verfahrens ermöglicht eine Verwendung eines Zahlungsauslöseendgeräts, das kein HSM beinhaltet bzw. beinhalten muss, sodass Updates an der Software und/oder der Austausch von Schlüsseln jederzeit problemlos und schnell durchgeführt werden kann. Dennoch ist das Verfahren auch ohne HSM sehr sicher, da das erste Authentifizierungstoken mit der Hardware (über die Hardware-ID) verschränkt ist und sowie mit einem Verfahren und Einmalschlüssel erstellt wird, welche beide zu entsprechenden Prüfverfahren und Prüfschlüsseln, die von einem Vermittlungs-Server verwaltet werden, korrespondieren muss. Es wird somit ein sehr sicheres aber dennoch im Hinblick auf Software- und Schlüssel-Updates höchst flexibles Verfahren zur Anbahnung und Autorisierung von bargeldlosen Transaktionen bereitgestellt. Die Erleichterung von Softwareupdates des Zahlungsauslöseendgeräts, also z.B. die Installation neuer Versionen der Terminalsoftware, kann die Sicherheit weiter erhöhen, da z.B. komplexere Verschlüsselungsalgorithmen bereitgestellt und/oder sicherheitsrelevante Softwarefehler, die bekannt geworden sind, schnell behoben werden können.

In einem weiteren vorteilhaften Aspekt werden Hardwarekosten reduziert, da die Terminalsoftware im Prinzip auf jeglicher Hardware installiert werden kann, z.B. Computern, Smartphones oder speziellen Kassensystemen, unabhängig davon, ob diese ein spezielles HSM aufweisen oder nicht. Somit wird auch eine sichere und dabei kostengünstige Lösung zur Autorisierung von bargeldlosen Transaktionen bereitgestellt.

Nach Ausführungsformen der Erfindung ist das Zahlungsmittel als Chipkarte oder als eine auf einem portablen Nutzer-Computersystem instanziierte virtuelle Bezahlkarte ausgebildet.

Die Chipkarte kann beispielsweise als EC-Karte, Giro-Karte, Kreditkarte oder eine sonstige Karte, die von einem Kreditinstitut oder sonstigen Gläubiger herausgegeben wird, ausgebildet sein. Die Chipkarte kann zum Beispiel ein Trägermaterial im Scheckkartenformat aus Karton, Plastik oder Verbundstoffen umfassen. Die Chipkarte kann einen Chip und optional auch einen Magnetstreifen enthalten. Auf der Chipkarte können optische oder sonstige Sicherheitsmerkmale aufgebracht sein wie zum Beispiel Hologramme.

Als besonders vorteilhaft hat sich der Einsatz des Verfahrens zur Durchführung von Transaktionen von einem Girokonto eines Kunden auf ein Konto des Transaktionsempfängers erwiesen. Hierzu kann eine Girocard, früher und umgangssprachlich Electronic Cash Card (EC-Karte) als Zahlungsmittel verwendet werden. Karten mit dem "Girocard"- oder "Electronic Cash"-Logo werden nur von Kreditinstituten ausgegeben, üblicherweise in Verbindung mit einem Girokonto. Die Kartenzahlung erfolgt im Stand der Technik durch Eingabe der PIN (Persönliche Identifikationsnummer) durch den Karteninhaber an einem sogenannten EFT-POS-Terminal (englisch Electronic Funds Transfer Terminal Terminal für elektronische Überweisungen', "Geldübertragungen"). Die Girocard ist in Deutschland sehr weit verbreitet. Allerdings waren bisher teure und unflexible POS Terminals mit einem HSM erforderlich um mittels einer Girocard bei einem Händler zahlen zu können.

Die Ausführungsformen, wonach das Zahlungsmittel als eine auf einem portablen Nutzer-Computersystem instanziierte virtuelle Bezahlkarte ausgebildet ist, kann vorteilhaft sein, da eine völlig medienbruchfreie Anbahnung und Durchführung einer Transaktion ermöglicht wird. Der Nutzer muss also nicht mehr eine physikalische Bezahlkarte mit sich führen, sondern lediglich eine entsprechende App auf dem Smartphone installiert haben, um mit dieser App ("Bezahlapp") die Transaktion einzuleiten.

Nach einer Ausführungsform handelt es sich bei dem Zahlungsauslöseendgerät um ein Mobilfunkgerät, ein Notebook, einen Tablet-Computer oder um einen Standard-Desktop Computer. Die Durchführung des oben beschriebenen Verfahrens auf derlei Endgeräten kann den Vorteil haben, dass der Händler keine teure Spezial-Hardware (spezielle Kassensysteme/POS-Terminals) erwerben und vorhalten müssen. Es ist ausreichend, die Terminalsoftware auf vorhandener Standard-Hardware zu installieren. Insbesondere für die Betreiber sehr kleiner oder mobiler Läden ist der Einsatz von günstiger Standardhardware in Kombination mit der Terminalsoftware attraktiv, da Anschaffungskosten vermieden werden und außerdem wertvoller Platz im Laden/an der Kasse gewonnen wird. Insbesondere wenn ein Standard-Smartphone als Zahlungsauslöseendgerät verwendet wird, wird Geld und Raum gespart, da praktisch jeder Verkäufer eines selbst geführten kleinen Ladens über ein Smartphone verfügt.

Nach anderen Ausführungsformen der Erfindung handelt es sich bei dem Zahlungsauslöseendgerät um ein POS Terminal, insbesondere um ein konventionelles POS Terminal mit Eingabe-Tastaturfeld und Display und/oder um eine Selbstbedienungskasse (Self-Checkout Terminal). Eine Selbstbedienungskasse (kurz SB-Kasse, oft auch als self-scanning bzw. self-checkout bezeichnet) ist eine Kasse im Einzelhandel, bei der kein fester Kassierer arbeitet, sondern die Kunden selbst die Waren einscannen und bezahlen. Meist steht ein Mitarbeiter in der Nähe, der bei Problemen hilft.

Der Einsatz des Verfahrens im Kontext von Selbstbedienungskassen kann vorteilhaft sein, da diese Art von Kassensystem oftmals längere Zeit unbeaufsichtigt in den Verkaufsräumen von Händlern steht und somit vor einer Manipulation nicht verlässlich geschützt sind. Während ein einzelner Händler sein als Zahlungsauslöseendgerät verwendetes Smartphone in der Regel mit sich führt und dadurch das Smartphone vor dem Zugriff unberechtigter Dritter vergleichsweise gut geschützt ist, ist dies bei Selbstbedienungskassen in der Regel nicht der Fall. Gemäß Ausführungsformen der Erfindung wird hier die benötigte Sicherheit aber durch die Ableitung eines ersten Authentifizierungstokens aus einer Hardware-ID mittels eines Einmalschlüssels gewährleistet. Ausführungsformen der Erfindung eignen sich daher in besonderer Weise zum Schutz von Zahlungsauslöseendgeräten wie zum Beispiel Selbstbedienungskassen, welche bei bestimmungsgemäßeM Gebrauch längere Zeit unbeaufsichtigt in wenig geschützten Räumlichkeiten vorgehalten werden.

Nach Ausführungsformen der Erfindung handelt es sich bei der Transaktion um eine Transaktion, die keine PIN Eingabe durch den Inhaber des Zahlungsmittels erfordert. Beispielsweise kann das Verfahren insbesondere zur Transaktion kleinerer Beträge unterhalb eines vordefinierten Grenzwerts verwendet werden. Der Grenzwert kann beispielsweise bei 1000 €, 500 € oder 100 € liegen. Zahlungsbeträge, die diesen vordefinierten Grenzwert übersteigern, führen dazu, dass eine PIN Eingabe erforderlich ist. Beispielsweise kann die Terminalsoftware dazu ausgebildet sein, zu prüfen, ob der Grenzwert überstiegen ist und nur in diesem Fall den Nutzer aufzufordern, z.B. über einen Bildschirm des Endgeräts, seine PIN einzugeben. Hier bietet das oben beschriebene Verfahren zur Ableitung und Prüfung des ersten Authentifizierungstokens hinreichenden Schutz vor Manipulation und ermöglicht darüber hinaus eine besonders schnelle und nutzerfreundliche Einleitung und Durchführung der Transaktion, da ein Nutzer die Transaktion nicht mehr explizit per PIN-Eingabe bestätigen muss.

Nach Ausführungsformen der Erfindung wird die Nachricht in Reaktion auf eine Interaktion eines Nutzers mit dem Zahlungsauslöseendgerät automatisch erzeugt, um die Durchführung der Transaktion zu initialisieren. Dies kann vorteilhaft sein, da die sicherstellt, dass der Nutzer die Transaktion auch wirklich einleiten möchte. Beispiele für eine derartige Interaktion wären eine Eingabe eines Nutzers über einen Tastaturfeld und/oder einen berührungssensitiven Bildschirm des Zahlungsauslöseendgeräts. Die Interaktion kann auch darin bestehen, dass ein Nutzer einen gefüllten Warenkorb durch eine Schranke mit RFID Sensoren bewegt und/oder dass ein Nutzer, der mehrere Waren über den Scanner einer Selbstbedienungskasse gezogen hat, nun die Zahlung durch Drücken eines Knopfes oder sonstigen Bedienelemente einleitet.

Nach Ausführungsformen der Erfindung bilden der Einmalschlüssel und der dem Zahlungsauslöseendgerät aktuell zugeordnete Prüfschlüssel eine funktionale Einheit zur Prüfung der Integrität einer einzigen, die Transaktion initialisierenden Nachricht. Sowohl der Einmalschlüssel als auch der diesem zugeordnete Prüfschlüssel liegen bereits vor der Erzeugung der Nachricht in den jeweiligen Geräten (Zahlungsauslöseendgerät bzw. Vermittlungs-Server) vor.

Dies kann vorteilhaft sein, da eine Manipulation des Einmalschlüssels oder ein verpasster Empfang eines vom Vermittlungs-Servers neu ausgestellten Einmalschlüssels automatisch zur Folge hat, dass ein mit dem diesem Einmalschlüssel erzeugtes erstes Authentifizierungstoken bei der Prüfung Authentifizierungstokvom Vermittlungs-Server als nicht-valide erkannt wird (das Prüfergebnis also beinhaltet, dass die Nachricht oder die sie erzeugende Terminalsoftware manipuliert wurde).

Bei dem ersten Authentifizierungstoken kann es sich insbesondere um einen Message Authentication Code (MAC, Nachrichtenauthentifizierungscode) oder einen Datenwert, der einen MAC beinhaltet, handeln.

Dies kann vorteilhaft sein, da ein als MAC ausgebildeter Authentifizierungstoken eine verlässliche Überprüfung des Ursprungs und der Integrität einer Nachricht ermöglicht. MAC-Algorithmen erfordern zwei Eingabeparameter, erstens die zu schützenden Daten (hier: die Nachricht) und zweitens einen geheimen Schlüssel (hier: den aktuellen Einmalschlüssel), und berechnen aus beidem eine Prüfsumme, den Message Authentication Code. Vorzugsweise ist der Einmalschlüssel eine identische Kopie des durch den Vermittlungs-Server erzeugten Prüfschlüssels, sodass der Einmalschlüssel bzw. der Prüfschlüssel einem zwischen dem Endgerät und dem Vermittlungs-Server für eine Transaktion vereinbarten Geheimnis entsprechen. Die Prüfung des ersten Authentifizierungstokens durch den Vermittlungs-Server erfolgt vorzugsweise so, dass der Vermittlungs-Server mit dem Prüfschlüssel den Prüf-MAC zu der vom Endgerät empfangenen Nachricht berechnet und den so erhaltenen Prüf-MAC mit dem empfangenen ersten Authentifizierungstoken vergleicht. Die Übereinstimmung beider Werte interpretiert der Vermittlungs-Server als erfolgreichen Integritätstest: Die Nachricht wurde von einem Transaktionsauslösegerät abgeschickt, das den geheimen Schlüssel (Einmalschlüssel, der identisch ist zum aktuell dem Endgerät zugewiesenen Prüfschlüssel) kennt, und die Nachricht wurde während der Übertragung nicht verändert. MACs können beispielsweise auf Blockchiffren oder auf Hash-Funktionen oder sind speziell entwickelte MAC-Funktionen basieren. Ein gebräuchliches Verfahren zur MAC-Berechnung, der HMAC, basiert auf kryptographischen Hash-Funktionen.

Die Verwendung von MACs (anstatt einfacher kryptographischer Hashfunktionen) kann vorteilhaft sein, denn wenn eine Nachricht nur mit ihrem Hashwert als MAC übertragen würde, wäre dies weniger sicher, da die Hashfunktion öffentlich bekannt ist oder leicht bekannt werden kann. Ein Angreifer könnte die Nachricht modifizieren und einen neuen Hashwert für die neue Nachricht berechnen und diesen übertragen. Falls allerdings Sender und Empfänger ein Geheimnis teilen, das in die MAC-Wert Berechnung einfließt, kann ein Angreifer nach Modifikation einer Nachricht nicht den passenden Hashwert berechnen, da er das Geheimnis nicht kennt.

In einem weiteren vorteilhaften Aspekt bietet die Berechnung des ersten Authentifizierungstoken in Form einer MAC auch einen höheren Schutz vor Manipulation des eine Nachricht erstellenden Endgeräts als beispielsweise Signaturen und Signaturprüfungen, da gemäß Ausführungsformen der Erfindung das geteilte Geheimnis vom Vermittlungs-Server für jede neue Transaktion neu erstellt und an das Endgerät übermittelt werden muss. Ist das Endgerät beispielsweise als gestohlen gemeldet, kann die Neuausstellung des Geheimnisses und damit eine Erzeugung eines validen ersten Authentifizierungstokens auf Seiten des Vermittlungs-Servers selektiv für ein bestimmtes Endgerät unterbunden werden. Dies wäre bei der Verwendung von Nachrichtensignaturen nicht möglich, da hier die die Signatur prüfende Instanz nicht über einen Schlüssel zur Erzeugung der Signatur verfügt und auch ansonsten die Prüfinstanz keinen Einfluss auf den Prozess der Signaturerzeugung hat. Gemäß Ausführungsformen der Erfindung hat der Vermittlungs-Server als Prüfinstanz bezüglich des ersten Authentifizierungstokens auch die Kontrolle über die Erzeugung des geheimen Einmalschlüssels, der zur Erzeugung des Tokens für die nächste Transaktion erforderlich ist.

Nach Ausführungsformen der Erfindung ist das Zahlungsauslöseendgerät frei von Hardwaresicherheitsmodulen (HSMs) und frei von sonstigen internen oder externen Hardwarebauteilen, die speziell für die sichere Speicherung kryptographischer Schlüssel und/oder die sichere Ausführung kryptographischer Operationen oder Applikationen ausgebildet sind.

Dies kann vorteilhaft sein, da der Austausch des Zahlungsauslöseendgeräts und/oder das Updating der Terminalsoftware (einschließlich der Schlüssel bzw. Ableitungsalgorithmen) erheblich vereinfacht wird. Obwohl also kein teures und unflexibles HSM vorhanden ist, ist das Verfahren aus den oben genannten Gründen dennoch sehr sicher im Hinblick auf eine mögliche Manipulation des Zahlungsauslöseendgeräts.

Nach Ausführungsformen der Erfindung gehen in die Nachricht außerdem Metadaten der Terminalsoftware ein. Der zumindest eine Referenzwert umfasst auch ein oder mehrere Referenzwerte für die Metadaten. Außerdem gehen die Metadaten indirekt auch in den ersten Authentifizierungstoken ein und werden bei der Prüfung desselben berücksichtigt, da das Token ja von der Nachricht abgeleitet ist, die die Metadaten umfasst.

Dies kann vorteilhaft sein, da durch die Verwendung von Metadaten der Terminalsoftware die Sicherheit des Verfahrens weiter erhöht wird. Stimmen die Metadaten, die das Zahlungsauslöseendgerät für die Ableitung des ersten Authentifizierungstokens verwendet, nicht mit den entsprechenden Referenzwerten, die der Vermittlungs-Server gespeichert hat, überein, gilt das erste Authentifizierungstoken als nicht-valide. Die Metadaten können beispielsweise Angaben zum Herausgeber, Herausgabedatum, zur Version oder sonstigen Eigenschaften der Terminalsoftware beinhalten.

Die Metadaten können auch Werte umfassen, die von der Terminalsoftware, die auf dem Zahlungsauslöseendgerät instantiiert ist, abgeleitet sind, zum Beispiel Hash Werte der gesamten Terminalsoftware oder einzelner Teile der Terminalsoftware.

Nach Ausführungsformen umfasst das Verfahren eine Erzeugung der Metadaten oder eines Teils der Metadaten durch die Terminalsoftware durch Anwenden einer nicht-injektiven Funktion auf zumindest einen Teil oder die Gesamtheit des Quellcodes der Terminalsoftware, wobei die nicht-injektive Funktion insbesondere eine Hash-Funktion ist.

Die Erzeugung der Metadaten kann z.B. nach der Installation der Terminalsoftware auf dem Zahlungsauslöseendgerät und/oder im Zuge der Initialisierung des Zahlungsauslöseendgeräts und/oder nach jeder Instanziierung der Terminalsoftware automatisch erfolgen. Somit kann sichergestellt werden, dass die Metadaten abgeleitet sind von der Terminalsoftware in einem aktuellen Zustand, und die Metadaten auch in den ersten Authentifizierungstoken eingehen. Stimmen die Metadaten der Terminalsoftware nicht mit den Referenzwerten, die die erwarteten Metadaten widerspiegeln, überein, kann dies von dem Vermittlungs-Server als Hinweis darauf interpretiert werden, dass die Software-Version der Terminalsoftware, wie sie aktuell auf dem Zahlungsauslöseendgerät installiert ist, veraltet ist und/oder die Terminalsoftware manipuliert wurde. In beiden Fällen führt fehlende Übereinstimmung der Metadaten der Terminalsoftware mit den entsprechenden Referenzwerten dazu, dass der Vermittlungs-Server das erste Authentifizierungstoken als nicht-valide betrachtet.

Nach Ausführungsformen der Erfindung beinhalten die Metadaten einen Versionshinweis auf die Version der Terminalsoftware und/oder beinhaltet der Softwarecode der Terminalsoftware einen Versionshinweis auf die Version der Terminalsoftware. Die nicht-injektive Funktion wird auch auf den Versionshinweis angewendet. Dies kann sicherstellen, dass auch die Version beider Erstellung des ersten Authentifizierungstokens berücksichtigt wird.

Gemäß einer Ausführungsform ermöglicht der Vermittlungs-Server einem Nutzer, zum Beispiel einem Angestellten des Herstellers der Terminalsoftware und/oder eines Herstellers von Zahlungsauslöseendgeräten, die den Metadaten der Terminalsoftware zugehörigen Referenzwerte zu manipulieren, wobei vorzugsweise gezielt die Referenzwerte für bestimmte Versionen der Terminalsoftware manipuliert werden können. Dies kann vorteilhaft sein, da dadurch mit sofortiger Wirkung und global für eine Vielzahl von Zahlungsauslöseendgeräten alle Anforderungen zur Autorisierung einer Transaktion von dem Vermittlungs-Server zurückgewiesen werden, wenn diese Anforderungen (Nachrichten) mit einer Terminalsoftware generiert wurden, deren zugehöriger Referenzwert durch den Nutzer manipuliert wurde. Somit schützt das Verfahren nicht nur davor, dass die Terminalsoftware in den Zahlungsauslöseendgeräten durch Unberechtigte manipuliert wird, sie ermöglicht es außerdem dem Herausgeber der Terminalsoftware, sehr schnell und global mit sofortiger Wirkung eine bestimmte Version der Terminalsoftware zu deaktivieren bzw. dysfunktional zu machen. Für den Fall, dass ein gravierendes Sicherheitsproblem bei einer bestimmten Version erkannt wird, kann somit sofort eingegriffen und spezifisch die betroffene Softwareversion deaktiviert werden.

Nach Ausführungsformen ist der Vermittlungs-Server dazu konfiguriert, im Falle einer wiederholten Feststellung, dass die ersten Authentifizierungstoken eines bestimmten Zahlungsauslöseendgeräts, dessen Terminalsoftwarebezogene Metadaten nicht mit den auf dem Vermittlungs-Server hinterlegten Referenzwerten übereinstimmen, automatisch die aktuellste verfügbare Version der Terminalsoftware an das Zahlungsauslöseendgerät zu übertragen und dort zu instanziieren. Die Instanziierung der Terminalsoftware auf dem Zahlungsauslöseendgerät kann dabei einer erneuten Initiierung des Zahlungsauslöseendgerätes entsprechen oder Bestandteil einer erneuten Initiierung des Zahlungsauslöseendgerätes sein. Dies kann vorteilhaft sein, da die neu-Instanziierung der aktuellsten Version der Terminalsoftware automatisch und im Hintergrund erfolgt, wenn zum Beispiel eine vorgegebene Anzahl an gescheiterten Authentifizierungsversuchen des Zahlungsauslöseendgeräts gegenüber dem Vermittlungs-Server festgestellt wurde. Falls die Terminalsoftware also manipuliert wurde oder einer Version entspricht, die veraltet und/oder unsicher ist, führen die hier beschriebenen Schritte automatisch dazu, dass eine neue, aktuelle und sichere Version der Terminalsoftware installiert wird, ohne dass der Besitzer des Zahlungsauslöseendgeräts hierfür aktiv werden muss. Vorzugsweise wird auch eine aktuell von einem Käufer für eine bestimmte Transaktion initiierte Autorisierungsanfrage, die aufgrund dessen, dass der Vermittlungs-Server das erste Authentifizierungstoken als nicht-valide ansah, gescheitert ist, automatisch im Hintergrund wiederholt, also mit einer neuen Terminalsoftwareversion und einem neuen Einmalschlüssel erneut ein (anderes) erstes Authentifizierungstoken gebildet, das an den Vermittlungs-Server gesendet wird. Dies hat den Vorteil, dass vorzugsweise weder der Käufer noch der Händler erkennen, dass im Hintergrund ein oder mehrere gescheiterte Autorisierungsversuche und eine Neuinstallation einer aktuellen Version der Terminalsoftware erfolgte. Allenfalls kann gegebenenfalls der Transaktionsprozess hierdurch geringfügig verzögert werden.

Nach Ausführungsformen ist die Hardware-ID eine Media-Access-Control (MAC) Adresse des Zahlungsauslöseendgeräts. Es ist aber auch möglich, dass andere eindeutige Hardwarekennungen, zum Beispiel Seriennummern von einzelnen Bauteilen wie Netzwerkkarten, Prozessoren, Speicherbauteilen etc. oder Kombinationen aus Hardware-IDs mehrerer Bauteile des Zahlungsauslöseendgeräts als "Hardware-ID" verwendet werden. Vorzugsweise leitet sich die Hardware-ID aus Kennungen mehrerer Bauteile ab oder aus einem Bauteil, welches nur schwer oder gar nicht aus dem Zahlungsauslöseendgerät entfernt werden kann.

Nach Ausführungsformen umfasst der Autorisierungsserver einen geheimen kryptographischen Schlüssel, der zur Prüfung des zweiten Authentifizierungstoken ausgebildet ist. Das Verfahren umfasst ferner eine Erzeugung des zweiten Authentifizierungstokens (AUT2) durch den Vermittlungs-Server durch einen geheimen kryptographischen Schlüssel, welcher dem geheimen kryptographischen Schlüssel des Autorisierungsservers zugeordnet ist. Insbesondere kann diese Zuordnung bedeuten, dass der besagte geheime Schlüssel des Vermittlungs-Servers und der geheime kryptographische Schlüssel des Autorisierungsservers zusammen ein symmetrisches kryptographisches Schlüsselpaar bilden.

Dies kann vorteilhaft sein, da der Vermittlungs-Server nur diesen kryptografischen Schlüssel vorhalten muss, um eine Autorisierung durch den Autorisierungsserver für sämtliche Transaktionen sämtlicher bei dem Vermittlungs-Server registrierten Zahlungsauslöseendgeräte anzufordern. Aus Sicht des Autorisierungsservers kommuniziert der Autorisierungsserver also nur mit einem einzigen Client, nämlich dem Vermittlungs-Server, während in tatsächlicher Hinsicht der Vermittlungs-Server eine Vielzahl von Autorisierungsanfragen, die zu einer Vielzahl von unterschiedlichen Zahlungsauslöseendgeräten korrespondieren, vermittelt. Hierbei führt der Vermittlungs-Server eine Vorprüfung durch, denn das zweite Authentifizierungstoken wird nur für diejenigen Transaktionen erstellt und an den Autorisierungsserver weitergeleitet, die von einem Zahlungsauslöseendgerät stammen, deren erstes Authentifizierungstoken vom Vermittlungs-Server als valide und vertrauenswürdig erkannt wurden.

Insbesondere im Kontext der Verwendung im deutschen Girocardsystem kann dies vorteilhaft sein, da dort bereits Autorisierungsserver etabliert sind, die die Autorisierungsanfragen von POS-Terminals unterschiedlicher POS-Terminal-Hersteller prüfen und verarbeiten. Diese Autorisierungsserver "erwarten" jedoch seitens der Zahlungsauslöseendgerät der eine sichere Verwahrung der entsprechenden Schlüssel in einem HSM. Dadurch, dass gemäß Ausführungsformen der Erfindung die Sicherheit auf Seiten des Zahlungsauslöseendgerät des durch andere Maßnahmen bewerkstelligt wird, und dadurch, dass der Vermittlungs-Server eine Vorprüfung vornimmt, ist es möglich, die bestehende Infrastruktur für Girocard- Autorisierungsserver ohne Sicherheitseinbußen auch für Zahlungsauslöseendgerät zu nutzen, die über kein HSM verfügen.

Nach Ausführungsformen der Erfindung umfasst der Vermittlungs-Server eine Datenbank mit den Hardware-IDs einer Vielzahl von registrierten Zahlungsauslöseendgeräten. Das Verfahren umfasst ferner eine Verwendung des gleichen geheimen Schlüssels durch den Vermittlungs-Server zur Erstellung von zweiten Authentifizierungstoken für die Autorisierung von Transaktionen für jedes der registrierten Zahlungsauslöseendgeräte.

Dies kann vorteilhaft sein, da diese Maßnahme ebenfalls sicherstellt, dass das Verfahren gemäß Ausführungsformen der Erfindung kompatibel ist zu bestehenden Autorisierung-Servern im Kontext der Autorisierung von bargeldlosen Transaktionen im Girocard-Zahlungssystem.

Nach Ausführungsformen beinhaltet das Verfahren eine Initialisierung des Zahlungsauslöseendgeräts. Die Initialisierung kann nach Ausführungen der Erfindung vom Zahlungsauslöseendgerät und/oder vom Vermittlungsserver initiiert werden. Die Initialisierung beinhaltet:

- Senden einer Initialisierungsnachricht mit Metadaten der Terminalsoftware von dem Zahlungsauslöseendgerät an den Vermittlungs-Server; Bei den Metadaten kann es sich insbesondere um einen Hash des Quellcodes der Terminalsoftware oder von Teilen derselben handeln;

- Prüfen der Metadaten der Terminal-Software (und vorzugsweise auch der Hardware-ID) durch den Vermittlungs-Server und nur im Falle, dass die Terminal-Software des Zahlungsauslöseendgerätes valide (also insbesondere nicht manipuliert ist, also z.B. dem Referenzwert-Hash einer bekannten und validen Softwareversion entspricht) ist:

- Erzeugen eines neuen geheimen Zahlungsauslöseendgerät-individuellen kryptographischen Schlüssels durch den Vermittlungs-Server; Dieser kryptographische Schlüssel wird vorzugsweise in einem Speicher des Vermittlungs-Servers verknüpft mit einem Identifikator des Zahlungsauslöseendgeräts gespeichert, beispielsweise in einem HSM des Vermittlungs-Servers oder in einer anderen Form eines Datenspeichers; etwaige bestehende geheime kryptographische Schlüssel des Zahlungsauslöseendgeräts, die auf dem Vermittlungs-Server gespeichert sind und dem Zahlungsauslöseendgerät zugeordnet sind, werden gelöscht oder invalidiert; Gemäß Ausführungsformen wird hier zudem ein SSL-Client-Zertifikat für das Zahlungsauslöseendgerät vom Vermittlungs-Server erstellt;

- Übertragung des geheimen Zahlungsauslöseendgerät -individuellen kryptographischen Schlüssels über das Netzwerk an das Zahlungsauslöseendgerät; auch das gemäß Ausführungsformen erstellte SSL-Client-Zertifikat kann hierbei zum Endgerät übertragen werden;

- Speicherung des geheimen Zahlungsauslöseendgerät -individuellen kryptographischen Schlüssels in einem Speicher des Zahlungsauslöseendgeräts; insbesondere werden hierbei etwaige bestehende geheime kryptographische Schlüssel des Zahlungsauslöseendgeräts gelöscht oder invalidiert;

- Aufbau einer geschützten Netzwerkverbindung zwischen dem Zahlungsauslöseendgerät und dem Vermittlungs-Server mittels des Zahlungsauslöseendgerät-individuellen kryptographischen Schlüssels; Vorzugsweise wird zum Aufbau der geschützten Netzwerkverbindung das übermittelte SSL-Client-Zertifikat verwendet;

- Senden einer Anforderung zum Erhalt eines Einmalschlüssels von dem Zahlungsauslöseendgerät an den Vermittlungs-Server; insbesondere kann das Senden über die geschützte Verbindung erfolgen;

- In Antwort auf den Erhalt der Anfrage, Speicherung des erzeugten Zahlungsauslöseendgerät -individuellen kryptographischen Schlüssels in Verbindung mit der Hardware-ID des Zahlungsauslöseendgeräts in einer Datenbank durch den Vermittlungs-Server und Erzeugen eines Einmalschlüssels durch den Vermittlungs-Server; in manchen Ausführungsformen werden vor der Speicherung weitere Prüfschritte bezüglich der Schlüsselnummer und Version durch den Autorisierungsserver vorgenommen, welcher das Ergebnis dieser Prüfung an den Vermittlungs-Server kommuniziert;

- Speicherung des erzeugten Einmalschlüssels in Verbindung mit der Hardware-ID des Zahlungsauslöseendgeräts in der Datenbank durch den Vermittlungs-Server; und

- Übertragung des Einmalschlüssels an das Zahlungsauslöseendgerät über das Netzwerk;

- Initialisierung des Zahlungsauslöseendgeräts durch Speicherung des Einmalschlüssels in einem Datenspeicher des Zahlungsauslöseendgeräts.

Die Verwendung eines "zentralen" HSM-Moduls als Bestandteil des Vermittlungs-Servers kann vorteilhaft sein, da im Falle dessen, dass ein Schlüssel eines Zahlungsauslöseendgeräts ausgetauscht werden muss, beispielsweise da dieser öffentlich geworden ist oder der betreffende Händler nicht länger als registrierter Händler gilt, ist es nunmehr nur noch erforderlich, den betroffenen Schlüssel an der einen zentralen Stelle auszutauschen und nicht global bei einer Vielzahl von Zahlungsauslöseendgeräten.

Nach Ausführungsformen der Erfindung wird nach mehrfach vergeblichen Versuchen, eine Transaktion durch ein bestimmtes Zahlungsauslöseendgerät anzustoßen (z.B., wenn eine Maximalzahl an Fehlversuchen erreicht ist) automatisch eine Re-Initialisierung des Zahlungsauslöseendgerätes eingelöst. Eine fehlgeschlagene Transaktion kann beispielsweise eine Transaktion sein, für welche die Prüfung des ersten Authentifizierungstokens ergibt, dass dieses nicht valide ist, also nicht zu der übertragenen Nachricht passt, oder für welche die Prüfung der Nachricht ergab, dass diese bzw. ihre Bestandteile nicht mit den bei dem Vermittlungs-Server hinterlegten Referenzwerten übereinstimmen.

Im Zuge dieser Re-Initialisierung wird gemäß manchen Ausführungsformen der Erfindung automatisch eine aktuelle Version der Terminalsoftware auf dem Zahlungsauslöseendgerät instantiiert. Zusätzlich oder alternativ dazu wird im Zuge einer Re-Initialisierung des Zahlungsauslöseendgerätes ein neuer privater, für das Zahlungsauslöseendgerät spezifischer Schlüssel, der als SSL Schlüssel ausgebildet sein kann und dem ein SSL Zertifikat zugewiesen sein kann, sowie ein neuer Einmalschlüssel vom Vermittlungs-Server erzeugt und an das Zahlungsauslöseendgerät zur Speicherung übertragen.

Beispielsweise kann der für das Zahlungsauslöseendgerät spezifische private Schlüssel dazu verwendet werden, um den geheimen Einmalschlüssel sicher über eine Netzwerkverbindung an das Zahlungsauslöseendgerät zu übertragen.

Nach Ausführungsformen des Verfahrens berechnet die Terminalsoftware zumindest einen Teil der Metadaten durch Anwendung einer nicht-injektiven Funktion auf zumindest einen Teil oder die Gesamtheit des Quellcodes der Terminalsoftware. Die nicht-injektive Funktion kann insbesondere eine Hash-Funktion sein. Das Prüfen der Metadaten durch den Vermittlungs-Server umfasst eine Prüfung des mit der Funktion abgeleiteten Werts durch Vergleich dieses abgeleiteten Wertes mit einem Softwarereferenzwert, welcher durch Anwenden der gleichen Ableitungsfunktion auf eine valide Terminalsoftwareversion erhalten wurde.

Beispielsweise kann in einem Speichermedium, welches dem Vermittlungs-Server zugeordnet ist, für jede von einer Vielzahl verfügbarer Softwareversionen der Terminalsoftware ein Referenzwert bezüglich der Metadaten dieser Version vorliegen. Der Referenzwert kann beispielsweise aus einem Hashwert des Quellcodes der jeweiligen Version sein oder einen solchen Hashwert beinhalten. Der Vermittlungs-Server verwendet zur Erzeugung bzw. Ableitung der Metadaten die gleiche Funktion wie das Zahlungsauslöseendgerät. Das Zahlungsauslöseendgerät überträgt die Metadaten der Terminalsoftware, zum Beispiel einen Hash des Quellcodes der auf dem Zahlungsauslöseendgerät installierten Softwareversion, über das Netzwerk an den Vermittlungs-Server. Der Vermittlungs-Server vergleicht diesen Hashwert mit den als Referenzwert hinterlegten Hash Werten sämtlicher unterstützter, valider Terminalsoftware-Versionen. Wenn der von dem Zahlungsauslöseendgerät erhaltene Hashwert mit keinem der als Referenzwert hinterlegten Hash-Werte übereinstimmt, bedeutet das, dass die aktuell vom Zahlungsauslöseendgerät verwendete Terminalsoftware manipuliert wurde oder zumindest nicht einer aktuell unterstützten und als gültig angesehenen Softwareversion entspricht.

Nach Ausführungsformen ist der geheime Zahlungsauslöseendgerät-individuelle kryptographische Schlüssel ein SSL Schlüssel. Dies kann vorteilhaft sein, da dieser Schlüssel auch zum Aufbau einer geschützten Verbindung zwischen dem Zahlungsauslöseendgerät und dem Vermittlungs-Server in Form einer SSL- Verbindung verwendet wird.

Nach Ausführungsformen erfolgt das Senden des zweiten Authentifizierungstokens an den Autorisierungsserver, die Prüfung des zweiten Authentifizierungstokens und der Erhalt der Nachricht von dem Autorisierungsserver durch den Vermittlungs-Server gemäß des ZVT Protokolls.

Dies kann vorteilhaft sein, da das ZVT Protokoll von den aktuell im Kontext des Girocard-Bezahlungssystems eingesetzten Autorisierungsserver und verwendet wird. Dadurch, dass der Vermittlungs-Server zur Kommunikation mit dem Autorisierungsserver das ZVT-Protokoll verwendet, "simuliert" der Vermittlungs-Server, ein konventionelles POS-Terminal zu sein, mit welchem ein konventioneller Autorisierungsserver normalerweise kommuniziert. Gemäß Ausführungsformen der Erfindung kommuniziert der das ZVT-Protokoll-unterstützende Autorisierungsserver aber nicht (nur) mit einem konventionellen POS-Terminal, sondern mit einem Vermittlungs-Server, der in dem ZVT-Protokoll aus Sicht des Autorisierungsservers die Rolle eines konventionellen POS Terminals übernimmt und von diesem nicht zu unterscheiden ist. Tatsächlich aber agiert der Vermittlungs-Server als Relais für die Autorisierungsanfragen einer Vielzahl von Zahlungsauslöseendgeräten. Der Vermittlungs-Server vermittelt also transaktionsbezogene Autorisierungsanfragen, wobei er entsprechende Anfragen in Form der ersten Authentifizierungstoken empfängt und nur dann in entsprechende zweite Authentifizierungstoken übersetzt und an den zentralen Autorisierung-Server weiterleitet, wenn eine Prüfung durch den Vermittlungs-Server ergibt, dass das erste Authentifizierungstoken von einer validen Terminalsoftware und einem vertrauenswürdigen Gerät mit registrierter Hardware-ID stammt.

In einem weiteren Aspekt betrifft die Erfindung ein Zahlungsauslöseendgerät. Das Zahlungsauslöseendgerät umfasst eine Schnittstelle, die dazu ausgebildet ist, Daten aus einem elektronischen oder digitalen Zahlungsmittel auszulesen. Beispielsweise kann diese Schnittstelle als Kartenlesegerät ausgebildet sein, die ein integraler Bestandteil des Zahlungsauslöseendgeräts ist oder reversibel mit diesem verbindbar ist. Gemäß einer weiteren Ausführungsvariante kann die Schnittstelle auch als Softwareinterface für eine entsprechende Bezahl-App auf einem Kunden-Smartphone ausgebildet sein, welche mit der Terminalsoftware über eine NFC Schnittstelle und/oder über das Mobilfunknetz kommuniziert.

Das Zahlungsauslöseendgerät beinhaltet ferner eine für das Zahlungsauslöseendgerät oder eine seiner Hardware-Komponenten eindeutige Hardware-ID. Beispielsweise kann es sich hierbei um die MAC-Adresse des Zahlungsauslöseendgeräts handeln. Das Zahlungsauslöseendgerät beinhaltet ferner eine Schnittstelle zum Aufbau einer Netzwerkverbindung mit einem Vermittlungs-Server sowie einem Datenspeicher, welche einen Einmalschlüssel beinhaltet.

Außerdem beinhaltet das Zahlungsauslöseendgerät eine Terminalsoftware, welche dazu ausgebildet ist, eine bargeldlose Transaktion zu veranlassen. Die Veranlassung der bargeldlosen Transaktion umfasst die folgenden, von der Terminalsoftware ausgeführten Schritte:

- Erzeugung einer Nachricht, wobei in die Nachricht zumindest transaktionsbezogene Daten der Transaktion, aus dem digitalen und/oder elektronischen Zahlungsmittel ausgelesene Daten, und die Hardware-ID eingehen;

- Ableitung eines ersten Authentifizierungstokens aus der Nachricht mit Hilfe des nur für eine Transaktion gültigen Einmalschlüssels durch die Terminalsoftware;

- Senden des ersten Authentifizierungstokens und der Nachricht vom Zahlungsauslöseendgerät an einen Vermittlungs-Server über eine geschützte Netzwerkverbindung;

Außerdem ist die Terminalsoftware dazu ausgebildet, folgende Schritte durchzuführen um die Veranlassung einer weiteren bargeldlosen Transaktion zu ermöglichen:

- Empfang eines neuen Einmalschlüssels für das Zahlungsauslöseendgerät von dem Vermittlungs-Server; und

- Speichern des neuen Einmalschlüssels so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

Die Kommunikation zwischen Zahlungsauslöseendgerät und Vermittlungs-Server kann direkt aber auch unter Vermittlung eines Gateways erfolgen.

Nach Ausführungsformen der Erfindung hat das Zahlungsauslöseendgerät einen Zahlungsauslöseendgerät-spezifischen geheimen kryptographischen Schlüssel in einem Speicher des Zahlungsauslöseendgeräts gespeichert. Das Zahlungsauslöseendgerät ist dazu ausgebildet, diesen geheimen kryptographischen Schlüssel zum Aufbau der geschützten Netzwerkverbindung (z.B. in Form einer SSL-gesicherten Netzwerkverbindung) mit dem Vermittlungs-Server zur sicheren Übertragung des ersten Authentifizierungstokens zu verwenden. Nach Ausführungsformen ist der Vermittlungs-Server, der den Endgerät-individuelle geheime kryptographischen Schlüssel für ein spezifisches Endgerät erzeugt hat, dazu ausgebildet, nur zu solchen Endgeräten eine geschützte Verbindung aufzubauen, welche auch den für sie erzeugten Endgerät-individuellen geheime kryptographischen Schlüssel besitzen.

Der Aufbau einer SSL Verbindung und die Übertragung des ersten Authentifizierungstoken über die gesicherte Verbindung kann vorteilhaft sein, da eine Manipulation des ersten Authentifizierungstokens während des Transports zum Vermittlungs-Server verhindert werden kann.

Nach Ausführungsformen ist die Terminalsoftware dazu konfiguriert, im Zuge eines Updates, Upgrades oder einer Neuinstallation der Terminalsoftware automatisch eine Neu-Initialisierung zu veranlassen, wobei im Zuge der Neu-Initialisierung die Hardware-ID des Zahlungsauslöseendgeräts an den Vermittlungs-Server übermittelt und ein neuer Zahlungsauslöseendgerät-spezifischer geheimer kryptographischer Schlüssel und ein neuer Einmalschlüssel in dem Zahlungsauslöseendgerät gespeichert wird.

Nach Ausführungsformen der Erfindung wird der Zahlungsauslöseendgerät-spezifische geheime kryptographische Schlüssel von der Hardware-ID abgeleitet. Nach manchen Ausführungsformen geht zudem ein vom Quellcode der Terminalsoftware des Endgeräts abgeleiteter Wert in den Endgerät-individuellen Schlüssel ein.

In einem weiteren Aspekt betrifft die Erfindung einen Vermittlungs-Server.

Der Vermittlungs-Server beinhaltet eine Schnittstelle zum Aufbau einer Netzwerkverbindung mit einem Zahlungsauslöseendgerät und einem Autorisierungsserver.

Außerdem beinhaltet der Vermittlungs-Server einen Datenspeicher, welcher einen Prüfschlüssel und zumindest einen Referenzwert umfasst. Der Prüfschlüssel ist ein zur einmaligen Verwendung bestimmter und dem Zahlungsauslöseendgerät aktuell zugeordneter Wert. Der zumindest eine Referenzwert umfasst einen Referenzwert für die Hardware-ID des Zahlungsauslöseendgeräts. Der Ausdruck, dass ein Datenverarbeitungsgerät einen bestimmten Speicher umfasst solche so verstanden werden, dass das Datenverarbeitungsgerät Zugriff auf die in dem Speicher gespeicherten Daten hat. In räumlicher Hinsicht kann es sich bei dem Speicher um einen integralen Bauteil des Datenverarbeitungsgerätes handeln, aber auch um einen Speicher, der von einem entfernten Rechner, beispielsweise einem Rechner eines Cloud-Dienstes, über ein Netzwerk bereitgestellt wird.

Der Vermittlungs-Server beinhaltet ferner eine Vermittlungssoftware, welche dazu ausgebildet ist, eine Autorisierung einer angebahnten bargeldlosen Transaktion durch den Autorisierungsserver zu vermitteln. Diese Vermittlung umfasst folgende Schritte:

- Empfang einer ersten Authentifizierungstokens und einer Nachricht von dem Zahlungsauslöseendgerät über das Netzwerk;

- Prüfen des ersten Authentifizierungstokens anhand der empfangenen Nachricht und eines dem Zahlungsauslöseendgerät aktuell zugeordneten Prüfschlüssels(252') ;

- Prüfen der empfangenen Nachricht durch Vergleich der Nachricht mit dem zumindest einen Referenzwert, wobei der zumindest eine Referenzwert den Referenzwert für die Hardware-ID umfasst; beispielsweise kann der Vermittlungs-Server dazu ausgebildet sein, Validität des ersten Authentifizierungstokens nur dann festzustellen, wenn Identität des zumindest einen Referenzwerts mit dem jeweils verglichenen Teil der Nachricht gegeben ist und ggf. noch weitere, optionale Kriterien erfüllt sind;

- Nur falls die Prüfung ergibt, dass das erste Authentifizierungstoken valide ist und die Nachricht den zumindest einen Referenzwert enthält, Senden eines zweiten Authentifizierungstoken von dem Vermittlungs-Server an den Autorisierungsserver, welcher zur Autorisierung der Transaktion in Abhängigkeit vom Ergebnis einer Prüfung des zweiten Authentifizierungstoken ausgebildet ist;

Außerdem ist die Vermittlungssoftware dazu ausgebildet, folgende Schritte durchzuführen um die Veranlassung einer weiteren bargeldlosen Transaktion zu ermöglichen:

- Nach jeder Prüfung eines von dem Zahlungsauslöseendgerät empfangenen ersten Authentifizierungstokens, Erzeugung eines neuen Einmalschlüssels für das Zahlungsauslöseendgerät und eines diesem neuen Einmalschlüssel zugeordneten neuen Prüfschlüssels, und

- Senden des neuen Einmalschlüssels an das Zahlungsauslöseendgerät.

Nach Ausführungsformen ist die Vermittlungssoftware dazu ausgebildet, eine Nachricht, ob der Autorisierungsserver die angebahnte Transaktion vom Autorisierungsserver autorisiert wurde, an das Zahlungsauslöseendgerät weiterzuleiten.
Nach Ausführungsformen umfasst der Datenspeicher des Vermittlungs-Servers eine Datenbank, welche die Hardware-IDs einer Vielzahl von registrierten Zahlungsauslöseendgeräten umfasst. Jeder dieser Hardware-IDs in der Datenbank ist ein aktueller Prüfschlüssel zugeordnet, sodass ein erstes Authentifizierungstoken eines jeden der registrierten Zahlungsauslöseendgeräten, das jeweils mit einem Einmalschlüssel abgeleitet wurde, mittels des aktuell diesem Zahlungsauslöseendgerät zugeordneten Prüfschlüssels prüfbar ist.
Außerdem ist jeder dieser Hardware-IDs in der Datenbank zumindest ein Referenzwert zugeordnet. Der zumindest eine Referenzwert umfasst einen Referenzwert für die Hardware-ID des Zahlungsauslöseendgeräts, kann optional aber noch weitere Referenzwerte beinhalten, zum Beispiel im Hinblick auf Metadaten der Terminalsoftware, insbesondere einer Versionsnummer oder einen hiervon abgeleiteten Wert. Es ist aber auch möglich, dass eine Liste von als gültig angesehenen Referenzwerten bezüglich der Metadaten der Terminalsoftware unabhängig von den einzelnen Zahlungsauslöseendgeräten gespeichert sind.
Nach Ausführungsformen der Erfindung ist in der Datenbank des Vermittlungs-Servers für jede der Hardware-IDs ein geheimer Zahlungsauslöseendgerät-individueller kryptographischer Schlüssel gespeichert. Der Vermittlungs-Server ist vorzugsweise dazu ausgebildet, den Zahlungsauslöseendgerät-individuellen kryptographischer Schlüssel im Zuge der Initialisierung des Zahlungsauslöseendgeräts zu erzeugen und an das Zahlungsauslöseendgerät zu übertragen und/oder nach der Initialisierung eine SSL Verbindung mit dem Zahlungsauslöseendgerät mittels des Zahlungsauslöseendgerät-individuellen kryptographischen Schlüssels aufzubauen.
Nach Ausführungsformen ist in dem Speicher des Vermittlungs-Servers jeder der Hardware-IDs ein Zertifikat zugeordnet, welches eine maximale Gültigkeitsdauer des Zahlungsauslöseendgerät-individuellen kryptographischen Schlüssels angibt. Der Vermittlungs-Server ist dazu ausgebildet, beim Prüfen des ersten Authentifizierungstokens auch zu prüfen, ob der Zahlungsauslöseendgerät-individuellen kryptographischen Schlüssel die maximale Gültigkeitsdauer überschritten hat, und falls dies der Fall ist, die aktuelle Transaktion zu beenden und den Zahlungsauslöseendgerät automatisch neu zu initiieren oder diesen zur erneuten Initiierung aufzufordern.
Nach Ausführungsformen ist der Einmalschlüssel ein geheimer, symmetrischer kryptographischer Schlüssel. Insbesondere können der Einmalschlüssel, der aktuell im Speicher des Zahlungsauslöseendgeräts vorliegt und der diesen Zahlungsauslöseendgerät aktuell zugeordneten Prüfschlüssel ein symmetrisches kryptographisches Schlüsselpaar bilden.

Nach Ausführungsformen ist der Prüfschlüssel eine Kopie des Einmalschlüssels.

Nach Ausführungsformen wird die Nachricht so erzeugt, dass besonders sensible Teile der Nachricht, z.B. eine in der Nachricht enthaltene PAN (Permanent Account Number), in verschlüsselter Form in der Nachricht enthalten ist. Die Verschlüsselung kann vorzugsweise mit dem Einmalschlüssel erfolgen und die Prüfung der Nachricht durch den Vermittlungs-Server kann eine Entschlüsselung der verschlüsselten Nachrichtenbestandteile mittels des Prüfschlüssels beinhalten. Es ist auch möglich, dass andere symmetrische oder asymmetrische Schlüsselpaare, die zwischen dem Endgerät und dem Vermittlungsserver für jede Transaktion oder im Zuge einer Initialisierung des Endgeräts ausgetauscht werden, zur Ver- und Entschlüsselung von Nachrichtenteilen verwendet werden.

Nach Ausführungsformen ist der Vermittlungs-Server dazu ausgebildet, im Zuge der Initialisierung des Zahlungsauslöseendgeräts die Hardware-ID des Zahlungsauslöseendgeräts zu empfangen und als Referenzwert zu speichern, der bei der Prüfung der Nachricht verwendet wird.

Nach Ausführungsformen beinhaltet der zumindest eine Referenzwert einen Referenzwert, welcher durch Anwenden einer nicht-injektiven Funktion auf zumindest einen Teil oder die Gesamtheit des Quellcodes der Terminalsoftware erzeugt wurde, wobei die nicht-injektive Funktion insbesondere eine Hash-Funktion ist. Die von dem Vermittlungs-Server durchgeführte Prüfung des ersten Authentifizierungstokens umfasst einen Vergleich dieses durch Anwenden der nicht-injektiven Funktion erzeugten Referenzwerts mit Teilen der empfangenen Nachricht, um festzustellen, ob das Authentifizierungstoken mittels einer auf dem Zahlungsauslöseendgerät instanziierten und validen bzw. nicht-kompromittieren Terminalsoftware erzeugt wurde.

Nach Ausführungsformen ist in dem Vermittlungs-Server für jede von einer Vielzahl von Terminalsoftwareversionen ein zugehöriger versionsspezifischer Referenzwert verknüpft gespeichert.

Nach Ausführungsformen wurden die versionsspezifischen Referenzwerte jeweils durch Anwenden der nicht-injektiven Funktion auf zumindest einen Teil oder die Gesamtheit des Quellcodes der Terminalsoftware erzeugt.

Nach Ausführungsformen beinhaltet der Vermittlungs-Server ferner eine Nutzerschnittstelle, die es einem Benutzer ermöglicht, versionsspezifische Referenzwerte einzelner Versionen der Terminalsoftware zu löschen oder zu modifizieren, sodass eine Prüfung von ersten Authentifizierungstoken, die von einem Händler-‚Computer mit einer Terminalsoftware dieser einzelnen Version erzeugt wurden, immer ein negatives Ergebnis erbringt und keine Transaktion mit einer Terminalsoftware dieser Version veranlasst werden kann.

Dies kann vorteilhaft sein, da eine gezielte Sperrung einzelner Softwareversionen mit sofortiger blockierender Wirkung auf von gesperrten Terminalsoftwareversionen erzeugten Transaktionsanforderungen ermöglicht wird. In manchen Ausführungsformen initialisiert der Vermittlungsserver oder die Terminalsoftware bei wiederholtem Prüfergebnis, dass die von einem bestimmten Zahlungsauslöseendgerät erzeugten ersten Authentifizierungstoken nicht valide sind, eine Neu-Initialisierung des Zahlungsauslöseendgeräts, in Zuge deren vorzugsweise auch eine aktuelle und valide Version der Terminalsoftware auf dem Zahlungsauslöseendgerät instantiiert wird. Die Instanzierung kann z.B. eine Übertragung der Installationsdateien der Terminalsoftware vom Vermittlungs-Server an das betroffene Zahlungsauslöseendgerät und die Installation der Terminalsoftware auf dem Zahlungsauslöseendgerät beinhalten.

Nach Ausführungsformen ist der Vermittlungs-Server dazu ausgebildet, nach Prüfungen einer vordefinierten Zahl von ersten Authentifizierungstoken eines Zahlungsauslöseendgeräts die Neu-Initialisierung des Zahlungsauslöseendgeräts zu veranlassen. Beispielsweise kann dies durch Senden eines Initialisierungskommandos vom Vermittlungs-Server an das Zahlungsauslöseendgerät geschehen.

Dies kann vorteilhaft sein, da nach einer gewissen Zeit automatisch und ohne aktives Zutun eines Nutzers das Zahlungsauslöseendgerät neu initialisiert wird, d.h. es werden neue endgerät-individuelle Schlüssel, SSL-Client-Zertifikate und Einmalschlüssel erstellt und die korrespondierenden Schlüssel bzw. Prüfschlüssele unter einer aktuell im Zuge der Neu-Initialisierung erfassten Hardware-ID durch den Vermittlungsserver gespeichert. Damit kann sichergestellt werden, dass nach einer gewissen Zeit bzw. Nutzungsfrequenz des Endgeräts neue Schlüssel und Zertifikate im Endgerät gespeichert werden. Korrumpierte Daten und Schlüssel werden bei diesem Schritt gelöscht oder verlieren ihre Funktion.

Nach Ausführungsformen ist der Vermittlungs-Server dazu ausgebildet, nach der Durchführung der Transaktion für das Zahlungsauslöseendgerät automatisch den diesem Zahlungsauslöseendgerät zugeordneten Einmalschlüssel und zugeordneten Prüfschlüssel zu invalidieren, einen neuen Einmalschlüssel zu erzeugen und den neuen Einmalschlüssel an das Zahlungsauslöseendgerät zu senden.

Nach Ausführungsformen beinhaltet der Vermittlungs-Server ein HSM, in welchem ein oder mehrere der folgenden Daten gespeichert sind:

- Ein oder mehrere Einmalschlüssel (deren Kopie an ein entsprechendes Zahlungsauslöseendgerät übertragen wurde oder übertragen werden soll);

- Ein oder mehrere Zahlungsauslöseendgerät-spezifische geheime kryptographische Schlüssel (diese können insbesondere zum Aufbau einer geschützten Verbindung, z.B. einer SSL Verbindung zu dem jeweiligen Zahlungsauslöseendgerät verwendet werden);

- Ein kryptographischer Schlüssel, welcher zur Erzeugung des zweiten Authentifizierungstokens für ein oder mehrere Zahlungsauslöseendgeräte dient;

- Ein Ableitungsschlüssel zur Ableitung der Einmalschlüssel aus einem Datenwert (der Vermittlungsserver kann z.B. konfiguriert sein zum Ableiten der Einmalschlüssel aus einem transaktions-individuellen Wert, z.B. aus einem für eine aktuell angeforderte Transaktion T1 ersten Authentifizierungstoken $AUT1_{T1}$, wobei der erzeugte Einmalschlüssel sodann an das Zahlungsauslöseendgerät übertragen wird und von diesem Zur Erzeugung des ersten Authentifizierungstoken $AUT1_{T2}$ einer künftigen zweiten Transaktion T2 dient).

Nach Ausführungsformen ist der Vermittlungs-Server dazu ausgebildet, im Zuge der erstmaligen oder erneuten Initialisierung des Zahlungsauslöseendgerät für das Zahlungsauslöseendgerät einen endgerät-individuellen privaten Schlüssel (276) aus der Hardware-ID 258 des Zahlungsauslöseendgerätes und aus einem aus dem Quellcode der Terminalsoftware abgeleiteten Wert (242') abzuleiten. Der Vermittlungs-Server ist ferner dazu ausgebildet, diesen endgerät-individuellen privaten Schlüssel im Zuge der Initialisierung an das Endgerät zu übertragen.

Bei nach der Initialisierung stattfindenden Transaktionen verwendet der Vermittlungs-Server den endgerät-individuellen privaten Schlüssel jeweils zur Verschlüsselung des transaktionsspezifischen Einmalschlüssels und sendet den jeweils vom Vermittlungs-Server generierten Einmalschlüssel in verschlüsselter Form an das Zahlungsauslöseendgerät.

Dies kann vorteilhaft sein, da der endgerät-individuelle Schlüssel im Zuge der Initialisierung als geteiltes Geheimnis zwischen Endgerät und Vermittlungs-Server erzeugt wird und den sicheren Austausch von Daten über ein Netzwerk ermöglicht. Der Schlüssel verschränkt dabei Daten, die aus der Hardware des Endgerätes und dem Quellcode der auf dem Endgerät installierten Terminalsoftware abgeleitet sind und deren Validität und Integrität im Zuge der Initialisierung geprüft wurden. Die Verschränkung über die Hardware-ID stellt sicher, dass der Schlüssel Endgerätespezifisch ist und dadurch sichergestellt ist, dass bei einer serverseitigen Invalidierung oder Sperrung des endgerät-individuellen Schlüssels wirklich nur ein bestimmtes Endgerät betroffen ist.

In einem weiteren Aspekt betrifft die Erfindung ein verteiltes System zur Durchführung bargeldloser Transaktionen, welches ein oder mehrere Zahlungsauslöseendgeräte, welche jeweils als ein Zahlungsauslöseendgerät gemäß einem der hier beschriebenen Ausführungsformen ausgebildet sind, umfasst. Das System umfasst ferner einen Vermittlungs-Server gemäß einer der hier beschriebenen Ausführungsformen. Optional kann das verteilte System auch den Autorisierungsserver umfassen.

Ausführungsformen der Erfindung, bei welchen mehrere Endgeräte bei dem Vermittlungs-Server registriert sind, können vorteilhaft sein, da hierdurch verschiedene Typen von Endgeräten einfach an einen bestehenden Autorisierungsserver angegliedert werden können, da gemäß Ausführungsformen die Erzeugung des zweiten Authentifizierungstokens für alle Endgeräte im Wesentlichen gleich erfolgt, sodass auch die Prüfung auf Seiten des Autorisierungstoken nicht an einzelne Merkmale und Besonderheiten der Endgeräte angepasst werden muss. Der Vermittlungs-Server agiert also als Konverter, der ein zweites Authentifizierungstoken nur dann für eine bestimmte angeforderte Transaktion erzeugt und weiterleitet, wenn diese von einem Endgerät stammt, welches sich erfolgreich mittels eines ersten Authentifizierungstoken gegenüber dem Vermittlungs-Server authentifiziert hat.

Ein "Zahlungsauslöseendgerät" ist ein Terminal, insbesondere ein Online-Terminal, zum bargeldlosen Bezahlen, z.B. an einem Verkaufsort. Ein Terminal ist ein Endgerät zur Eingabe und Anzeige von Daten. Insbesondere kann das Zahlungsauslöseendgerät ein Terminal sein, welches einem Anbieter einer Transaktion, z.B. einem Anbieter von Waren und/oder Dienstleistungen, zugeordnet ist ("Händlerterminal"). Beispielsweise kann das Zahlungsauslösegerät dazu ausgebildet sein, in Zusammenarbeit mit ein oder mehreren über ein Netzwerk verbundenen Servern, welche von Zahlungsvermittlern und Geldinstituten bereitgestellt werden, ein Zahlungsmittel wie z.B. eine Girokarte auf Gültigkeit bzw. auf das Vorliegen einer Sperrung zu prüfen, das Ergebnis der Prüfung dem Händler anzuzeigen und bei Deckung des zum Zahlungsmittel gehörenden Kontos und Abwesenheit einer Sperrung eine angeforderte Transaktion zu veranlassen. Bei den im Stand der Technik bekannten Zahlungsauslöseendgeräten kann es sich beispielsweise um ein konventionelles POS-Terminal (engl. "Point of Sale", in der Schweiz EFT/POS-Terminal, zu Deutsch: bargeldlose Verkaufsstelle) mit integriertem HSM handeln. Bei erfindungsgemäßen Zahlungsauslöseendgeräten kann es sich um verschiedene Geräte und Gerätetypen handeln, auch solche, die nicht über ein HSM verfügen.

Unter einer "Transaktion" wird im Folgenden insbesondere ein Vorgang zur Durchführung einer Zahlung verstanden, bei welcher der Zahlungsempfänger über ein Zahlungsauslöseendgerät verfügt, der Zahlungserbringer eine entsprechende virtuelle oder physische Karte als Zahlungsmittel einsetzt, die Echtheit des Karteninhabers (cardholder verification) ohne unverhältnismäßig großen Aufwand und mit verhältnismäßig hoher Sicherheit erkannt wird (Authentifizierung) und die Belastung beim Karteninhaber und die Gutschrift beim Handels- und Dienstleistungsunternehmen ("Händler") automatisiert erfolgt.

Eine "Nachricht" im Sinne der Erfindung ist insbesondere eine Menge an Daten, welche von einem Sender an einen Empfänger übertragen wird oder zur Übertragung bestimmt ist. Die Daten können insbesondere als eine Sequenz bedeutungstragender Zeichen (z.B. Binärcode, ASCII Code) repräsentiert sein. Sie wird im Prozess der Kommunikation nach Maßgabe eines Codes von dem Sender an den Empfänger übermittelt, z.B. über ein Netzwerk. Für den Empfänger hat sie einen Neuigkeitswert und ruft beim Empfänger eine interpretative Reaktion hervor.

Eine "Software" im Sinne der Erfindung ist insbesondere ein von einem oder mehreren Prozessoren ausführbares Programm, welches optional auch nicht-ausführbare Daten, z.B. Konfigurationsdaten, Quelltext, Dokumentation etc. enthalten kann. Bei dem Programm kann es sich auch um eine funktionale Einheit aus mehreren Programmen handeln. Die Software kann in einer beliebigen Programmiersprache spezifiziert sein, insbesondere Java, C#, C++, Scala, Ruby, Python, Haskell und andere.

Ein "Zahlungsmittel" im Sinne der Erfindung kann insbesondere sein ein physikalisches Objekt (z.B. Girokarte) oder elektronisches Objekt (z.B. "virtuelles" Guthaben eines Nutzers (z.B. in Euro, USD oder Bitcoin, das in einer Bankdienstleistungs- oder Guthaben-Applikation verwaltet wird), welches einen zählbaren Wert repräsentiert, wobei der Wert ganz oder teilweise im Zahlungsverkehr übertragbar ist und als Gegenleistung (etwa beim Kaufvertrag) oder als Transferleistung (etwa bei der Schenkung) dient. Zahlungsmittel dienen im modernen Zahlungsverkehr dem zahlungsverpflichteten Schuldner dazu, seinem Gläubiger die aus Vertrag oder Gesetz resultierende Geldschuld rechtswirksam zu tilgen.

Ein "Authentifizierungstoken" im Sinne der Erfindung ist insbesondere ein Datenwert oder eine Menge mehrerer Datenwerte, welche zur Authentifizierung einer Entität (z.B. eines Benutzers als berechtigter/vertrauenswürdiger Benutzer und/oder eines Geräts als vertrauenswürdiges/nicht manipuliertes Gerät) gegenüber einer Prüfinstanz (Autorisierungsinstanz) und/oder zur Prüfung einer Eigenschaft der Nachricht oder des Nachrichtensenders (z.B. Nachrichtenintegrität, Integrität der den Token erstellenden Software) durch die Prüfinstanz dient. Beispielsweise kann ein Authentifizierungstoken ein Datenwert sein, welcher mittels ein oder mehreren kryptographischen Schlüsseln auf eine bestimmte, vordefinierte Weise aus einem oder mehreren Eingangswerten gebildet wurde.

Ein "Einmalschlüssel" im Sinne der Erfindung ist ein Datenwert, welcher zur Berechnung eines abgeleiteten Wertes aus ein oder mehreren Eingabewerten dient und welcher insbesondere in einem technischen Framework verwendet wird, welches sicherstellt, dass der Datenwert nur ein einziges Mal zur Durchführung der Ableitung verwendet wird. Eine zufällige erneute Verwendung des gleichen Einmalschlüssels für eine spätere Ableitung kann in manchen Ausführungsformen zulässig sein, solange sichergestellt ist, dass diese zufällige Wiederholung sehr unwahrscheinlich (vorzugsweise unter 1:1000) und auf nicht vorhersehbare Weise geschieht, etwa dadurch bedingt, dass ein Zufallsgenerator oder Quasi-Zufallsgenerator den Einmalschlüssel nach jedem Versuch, eine Transaktion zu autorisieren, neu erzeugt.

Bei dem Einmalschlüssel kann es sich insbesondere um einen kryptographischen Schlüssel handeln, also um einen Datenwert, der einen kryptographischen Algorithmus parametrisiert und ihn so steuert. Der abgeleitete Wert kann auch als "Chiffrat" angesehen werden.

Unter einer "Initialisierung" eines Endgeräts wird hier ein Prozess verstanden, in welchem wesentliche Parameter und Werte (z.B. Schlüssel), die für die Funktion des Endgerätes erforderlich sind (z.B. für die Einleitung einer Transaktion), erstellt und auf das Endgerät übertragen werden. Die Initialisierung muss also zumindest einmal durchgeführt werden, damit das Endgerät seine Funktion erfüllen kann, sie kann nach Ausführungsformen der Erfindung aber auch wiederholt im Laufe der Lebenszeit des Endgeräts durchgeführt werden, wobei jeweils neue Parameter und Werte erstellt und an das Endgerät übertragen werden, wobei die im Zuge der letzten Initialisierung erstellten Parameter und Werte invalidiert werden.

Ein "zahlungsauslöseendgerät individueller Schlüssel" bzw. "Endgerät-individueller Schlüssel" ist ein Datenwert, welcher spezifisch für ein bestimmtes Endgerät erzeugt wurde. Im Gegensatz zu einem Einmalschlüssel wir der Endgerät-individueller Schlüssel typischerweise zur Anbahnung mehrerer Transaktionen vom Endgerät verwendet. Beispielsweise kann der Endgerät-individuelle Schlüssel bei der erstmaligen Initialisierung des Endgeräts vom Vermittlungs-Server erstellt werden und vom Endgerät so lange verwendet werden, bis im Zuge einer Neu-Initialisierung des Endgeräts ein neuer Endgerät-individueller Schlüssel für das Endgerät erstellt wird. Beispielsweise kann "Endgerät-individuell" bedeuten, dass der Rechner, der den Schlüssel für das Endgerät erstellt hat (z.B. der Vermittlungs-Server) eine Datenbank mit Identifikatoren einer Vielzahl von Endgeräten beinhaltet, wobei in der Datenbank jedem der Endgeräte bzw. deren Identifikatoren ein für dieses Endgerät einzigartiger, eben "Endgerät-individueller", Schlüssel, zugewiesen ist.

Ein "Vermittlungs-Server" im Sinne der Erfindung ist ein Datenverarbeitungssystem, typischerweise ein Computer ("Server"), der über ein Netzwerk eine Kommunikationsschnittstelle für die Terminalsoftware eines oder mehrerer Zahlungsauslöseendgeräte bereitstellt. Beispielsweise kann der Vermittlungs-Server von einem Hersteller der Terminalsoftware und/oder einem Hersteller der Zahlungsauslöseendgeräte betrieben und bereitgestellt werden. Beispielsweise kann die Schnittstelle zwischen dem Vermittlungs-Server und der Terminalsoftware proprietär sein, sodass nur die Terminalsoftware bzw. die Zahlungsauslöseendgeräte eines bestimmten Herstellers mit dem Vermittlungs-Server interagieren können, um mittels des Vermittlungs-Servers und eines weiteren Autorisierungs-Servers eine aktuell angeforderte Transaktion zu autorisieren. Es ist jedoch auch möglich, dass der Vermittlungs-Server mit der Terminalsoftware und/oder den Zahlungsauslöseendgeräten verschiedener Hersteller interoperabel ist, sofern die Schnittstelle diesen Herstellern gegenüber offengelegt wurde.

Ein "Prüfschlüssel" im Sinne der Erfindung ist ein Datenwert, welcher zur Prüfung eines oder mehrerer Eingabewerte dient. Insbesondere kann der Prüfschlüssel in einem technischen Framework verwendet werden, welches sicherstellt, dass der Datenwert in analoger Weise wie für den Einmalschlüssel geschildert nur ein einziges Mal zur Durchführung der Prüfung verwendet wird. Eine zufällige erneute Verwendung des gleichen Prüfschlüssels ist möglich, beispielsweise wenn sowohl der Einmalschlüssel als auch der zugehörige Prüfschlüssel durch einen Zufallsgenerator oder Quasi-Zufallsgenerator erzeugt werden. Bei dem Prüfschlüssel kann es sich insbesondere um einen kryptographischen Schlüssel handeln. Beispielsweise können der aktuell in einem Zahlungsauslöseendgerät gespeicherte Einmalschlüssel und der diesem Zahlungsauslöseendgeräte aktuell zugeordnete Prüfschlüssel identische Werte darstellen, also als symmetrische kryptographische Schlüssel implementiert sein.

Ein "Referenzwert" im Sinne der Erfindung ist ein Datenwert oder eine Menge aus Datenwerten, welcher einen Vergleich des Referenzwerts mit einem empfangenen Wert im Zuge eines Prüfprozesses ermöglicht. Insbesondere kann ein Referenzwert einen Wert repräsentieren, der erwartet wird, wenn der Sender des zu Prüfzwecken empfangenen Wertes vertrauenswürdig und/oder nicht manipuliert ist. Insbesondere kann die Prüfung einen Vergleich umfassen, ob der empfangene Wert und der Referenzwert identisch sind und/oder anhand einer bekannten Funktion voneinander ableiten lassen.

## Kurzbeschreibung der Zeichnungen

In den folgenden Abbildungen werden Ausführungsformen der Erfindung in exemplarischer Weise näher erläutert:

Figur 1    zeigt ein Flussdiagramm eines Verfahrens zur Autorisierung einer bargeldlosen Transaktion;
Figur 2    zeigt ein Blockdiagramm eines verteilten Systems mit einem Zahlungsauslöseendgerät und einem Vermittlungs-Server;
Figur 3    zeigt ein Ablaufschema der Initialisierung eines Zahlungsauslöseendgeräts;
Figur 4    zeigt ein Ablaufschema einer Transaktion unter Einbeziehung eines Vermittlungs-Servers.

## Detaillierte Beschreibung

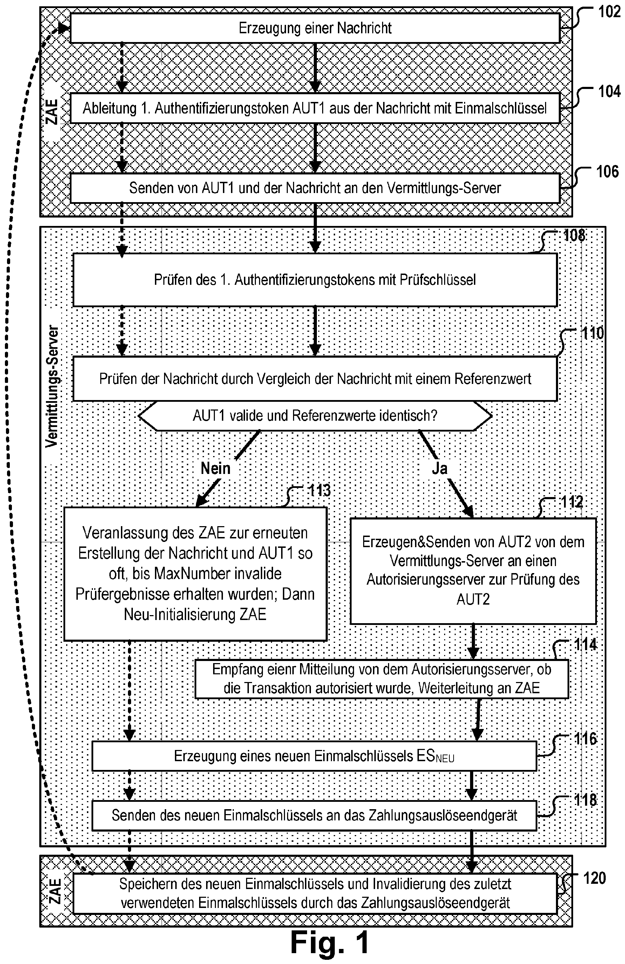

**Figur 1** ein Flussdiagramm eines Verfahrens zur Autorisierung einer bargeldlosen Transaktion.

Um ein möglichst breites Publikum ansprechen zu können, wollen viele Händler neben oder anstatt der Barzahlungsoption auch bargeldloses Bezahlen anbieten.

Dafür benötigen Händler und sonstige Anbieter von Waren und/oder Dienstleistungen die Möglichkeit, es ihren Kunden zu ermöglichen, elektronische Transaktionen zu initialisieren, die zu einer Übertragung von Guthaben von dem Kundenkonto auf das Händlerkonto führen. Bei heutigen Zahlungsverkehrsterminals wird bei der Datenübertragung zwischen Terminal (Sender) und Autorisierungssystem (Empfänger) auf ein Sicherheitskonzept gesetzt, bei welchem das Terminal zwingend ein HSM benötigt: Das Terminal beinhaltet ein HSM mit einem Sicherheitsprozessor und geheimen Schlüsseln, die durch das HSM vor unberechtigtem Zugriff geschützt werden. Das Empfängersystem verfügt über denselben Schlüssel. Das Terminal verwendet seinen geheimen Schlüssel um eine Prüfsumme zu berechnen. Hier geht es um die Nachrichtenintegrität, worüber nachgewiesen werden soll, dass die Nachricht nicht auf dem Transportweg verändert wurde. Das HSM basierte Verfahren ist unflexibel und erfordert teure Hardware, außerdem würde ein Bekanntwerden der geheimen Schlüssel eines Terminals eine Vielzahl von Terminals kompromittieren, da die geheimen Schlüssel in der Regel in identischer Kopie in den HSMs aller Terminals eines bestimmten Herstellers vorliegen.

Ausführungsformen des erfindungsgemäßen Verfahrens erlauben es dagegen, hardwaretechnisch einfache und damit günstige Zahlungsauslöseendgeräte zu verwenden, die zudem flexibel updatebar sind, ohne das Bezahlverfahren für Kunden oder Händler unsicher zu machen. Das Verfahren zur Autorisierung einer bargeldlosen Transaktion gemäß Ausführungsformen der Erfindung kann vorteilhaft sein, da es den Sicherheitsanforderungen der verschiedenen Kartenorganisationen entspricht und dennoch auf einer Terminalhardware aufsetzt, die kein spezielles HSM benötigt um die gewünschte Sicherheit zu bieten.

Die Zahlungsprozedur kann zum Beispiel wie folgt ablaufen: der Kunde wählt einige Produkte in einem Laden und bringt sie zur Kasse. Die Kasse stellt das Zahlungsauslöseendgerät dar oder beinhaltet dieses. Das Zahlungsauslöseendgerät kann beispielsweise als Selbstbedienungskasse ausgebildet sein, die es dem Kunden ermöglicht, die ausgewählten Produkte über ein optisches Lesegerät (Barcodescanner, etc.) zu ziehen, sodass der Preis der einzelnen Produkte erfasst und aufsummiert wird. Der aufsummierte Betrag wird dem Kunden typischerweise über ein Display des Zahlungsauslöseendgeräts angezeigt. Nachdem die Erfassung aller von dem Kunden ausgewählten Produkte abgeschlossen ist, kann der Kunde und/oder der Händler den Zahlungsvorgang zum Beispiel dadurch einleiten, dass ein Bestätigungsknopf getätigt oder über eine sonstige Benutzerschnittstelle eine Bestätigung eingegeben wird. Der Kunde wird daraufhin (oder wurde bereits zu einem früheren Zeitpunkt) dazu aufgefordert, sein Zahlungsmittel zu präsentieren, also zum Beispiel eine als Chipkarte ausgebildet Girokarte in ein Lesegerät des Zahlungsauslöseendgeräts einzuführen.

In der Folge wird die bargeldlose Zahlung des geschuldeten Betrages eingeleitet. Hierzu wird das Zahlungsmittel auf seine Plausibilität und Gültigkeit (zugelassen ja/nein, abgelaufen ja/nein) hin überprüft. Der Geldbetrag wird nur dann auf das Konto des Händlers überwiesen, wenn die Karte - beziehungsweise allgemein das verwendete Zahlungsmittel - einem gedeckten Konto zugeordnet, zugelassen und noch nicht abgelaufen ist. Optional kann von dem Kunden die Eingabe einer PIN angefordert werden, die zum Beispiel über eine Spezialtastatur des Zahlungsauslöseendgeräts eingegeben und sofort verschlüsselt wird. Vorzugsweise ist die Eingabe einer solchen PIN jedoch nicht erforderlich. Der Nutzer weist allein dadurch, dass er das physikalische oder elektronische Zahlungsmittel dem Zahlungsauslöseendgerät präsentiert, nach, dass der Nutzer mit der Transaktion einverstanden ist und im Besitz des Zahlungsmittels ist.

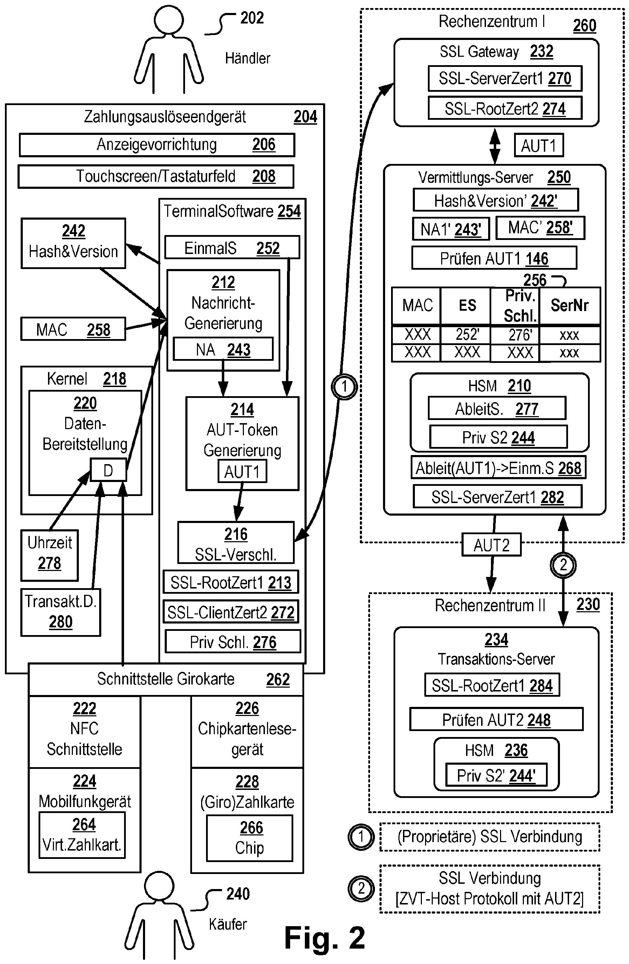

Die Einleitung, Autorisierung und Durchführung einer bargeldlosen Transaktion wird im Folgenden beispielhaft für Ausführungsformen der Erfindung beschrieben. Hierbei wird mittels Referenzzeichen Bezug genommen auf Elemente eines Zahlungsauslöseendgeräts bzw. eines Vermittlungs-Servers, wie sie in Figur 2 beispielhaft abgebildet sind.

Zunächst wird wie oben beschrieben eine bestimmte bargeldlose Transaktion angebahnt. Dies kann vom Käufer und/oder vom Händler durchgeführt werden, aber auch automatische oder semi-automatische Verfahren zur Ermittlung eines bestimmten Transaktionsbetrages sind möglich. Ein typischer Vorgang ist der oben geschilderte Bezahlvorgang an einer Kasse, zum Beispiel einer Selbstbedienungskasse. Beispielsweise könnte es sich bei der aktuell durchzuführenden Transaktion um die Zahlung von 90 € auf ein Händlerkonto mittels einer als Chipkarte ausgebildeten Girokarte des Kunden handeln.

Nach Empfang eines Triggersignals, zum Beispiel dem Einführen der Girokarte in einen Leseschlitz des Zahlungsauslöseendgerätes 204 erzeugt eine auf dem Zahlungsauslöseendgerät installierte Terminalsoftware 254 in Schritt 102 eine Nachricht 243. In diese Nachricht fließen zumindest transaktionsbezogene Daten 208 der Transaktion sowie eine eindeutige Hardware-ID 258 des Zahlungsauslöseendgerätes ein. Bei den transaktionsbezogenen Daten kann es sich zum Beispiel um den aktuell zu zahlenden Geldbetrag, die Währung, ein aktuelles Datum, eine aktuelle Uhrzeit, gegebenenfalls Ortsangaben und Ähnliches handeln. Optional können eine Vielzahl weiterer Daten in die Nachricht eingehen, insbesondere Metadaten zu der Terminalsoftware, zum Beispiel deren Versionsnummer, ein Hashwert über deren Quellcode oder einen Teil des Quellcodes o. ä.

Im nächsten Schritt 104 leitet die Terminalsoftware einen ersten Authentifizierungstoken (AUT1) aus der Nachricht ab. Hierfür verwendet die Terminalsoftware einen Einmalschlüssel 252, welcher dem Zahlungsauslöseendgerät 204 vorzugsweise bereits vor dem Erhalt des Triggersignals vorlag, auf die Nachricht an. Beispielsweise kann das Authentifizierungstoken mit einem MAC Algorithmus berechnet werden, welcher den Einmalschlüssel 252 auf die Nachricht anwendet um einen "MAC-Wert" zu erhalten, der als erster Authentifizierungstoken oder als ein Bestandteil des ersten Authentifizierungstoken verwendet wird. Der MAC-Wert ist eine Prüfsumme, die es Empfängern, welche über den gleichen Einmalschlüssel ("Prüfschlüssel") verfügen, ermöglicht zu prüfen, ob sie mit dem Prüfschlüssel einen MAC-Wert aus der empfangenen Nachricht ableiten können, der identisch zu dem ersten Authentifizierungstoken bzw. dessen MAC-Wert Bestandteil ist.

In manchen Ausführungsformen ist die Terminalsoftware so konfiguriert, dass sie einen einmal verwendeten Einmalschlüssel unmittelbar nach Gebrauch löscht oder als nicht-valide kennzeichnet. In anderen Ausführungsformen wird der gebrauchte Einmalschlüssel einfach im Zuge des Empfangs eines neuen Einmalschlüssels vom Vermittlungs-Server überschrieben. Das erste Authentifizierungstoken dient der Authentifizierung des Zahlungsauslöseendgeräts gegenüber einem Vermittlungs-Server 250.

Um dem Vermittlungs-Server die Prüfung des ersten Authentifizierungstokens zu ermöglichen sendet das Zahlungsauslöseendgerät in Schritt 106 das erste Authentifizierungstoken und die Nachricht an den Vermittlungsserver. Das Token und die Nachricht wird über eine Netzwerkverbindung, insbesondere eine geschützte (zum Beispiel verschlüsselte) Netzwerkverbindung, gesendet.

Der Vermittlungs-Server 250 kann zum Beispiel ein Standardcomputer sein. Typischerweise ist er als besonders leistungsfähiger Computer ausgebildet, welcher erste Authentifizierungstoken einer großen Anzahl von Zahlungsauslöseendgeräten in Echtzeit und mit minimalen Reaktionszeiten prüfen kann. Der Vermittlungs-Server hat Zugriff auf einen Datenspeicher, in welchen ein Prüfschlüssel 252' und zumindest ein Referenzwert 242', 258' gespeichert sind. Bei dem Prüfschlüssel handelt es sich um einen zur einmaligen Verwendung bestimmter und dem Zahlungsauslöseendgerät 204 aktuell zugeordneten Wert. Der zumindest eine Referenzwert ist ein Referenzwert für die Hardware-ID 258' des Zahlungsauslöseendgeräts 204. Typischerweise beinhaltet der Vermittlungs-Server ein Register (das zum Beispiel als Datenbank ausgebildet sein kann), welches die Hardware-IDs einer Vielzahl von bei dem Vermittlungs-Server registrierten Zahlungsauslöseendgeräten umfasst. Jede dieser Hardware-IDs (oder sonstigen eindeutigen Identifikatoren eines Zahlungsauslöseendgerätes) ist jeweils ein aktueller Prüfschlüssel zugeordnet, der dazu ausgebildet ist, das von einem Endgerät empfangene erste Authentifizierungstoken zu prüfen. Beispielsweise kann das erste Authentifizierungstoken zusammen mit der Hardware-ID des Zahlungsauslöseendgerätes an den Vermittlungs-Server gesendet werden um den Vermittlungs-Server zu ermöglichen, anhand der Hardware-ID den einen Prüfschlüssel in seiner Datenbank zu identifizieren, welcher funktional zu dem Einmalschlüssel 252 korrespondiert, der verwendet wurde, um das aktuell gesendete Authentifizierungstoken zu bilden.

In Schritt 108 prüft der Vermittlungs-Server das ersten Authentifizierungstoken AUT1. Dies geschieht z.B. dadurch, dass der Vermittlungs-Server den Prüfschlüssel 252', der dem Zahlungsauslöseendgerät aktuell zugeordnet ist, identifiziert, und den identifizierten Prüfschlüssel auf die empfangene Nachricht anwendet und das Resultat mit dem empfangenen ersten Authentifizierungstoken vergleicht. Die empfangene Nachricht beinhaltet neben der Hardware-ID auch transaktionsbezogene Daten sowie gegebenenfalls Metadaten der Terminalsoftware, welche im Schritt 102 zur Erzeugung der Nachricht verwendet wurden. Diese Prüfung stellt sicher, dass das Endgerät, das die Nachricht erstellt hat, über einen zu dem Prüfschlüssel identischen Einmalschlüssel verfügt und die Nachricht nicht während ihrer Übermittlung manipuliert wurde.

In Schritt 110 prüft der Vermittlungs-Server die empfangene Nachricht. Die Prüfung umfasst einen Vergleich der Nachricht bzw. deren Teile mit ein oder mehreren diesen Teilen der Nachricht korrespondierenden Referenzwerten. Zumindest manche der Referenzwerte sind der Hardware-ID der bei dem Vermittlungs-Server registrierten Zahlungsauslöseendgeräten eindeutig zugeordnet. Zu den Referenzwerten gehört zum Beispiel die Hardware-ID selbst, zum Beispiel eine MAC-Adresse des Zahlungsauslöseendgeräts. Zu den Referenzwerten gehören optional auch Metadaten von als gültig und vertrauenswürdig angesehenen Versionen der Terminalsoftware. Zu den Metadaten kann beispielsweise die Versionsnummer und/oder ein vom Quellcode einer als valide erachteten Terminalsoftware abgeleitete Wert, zum Beispiel Hashwert, gehören.

Der Vermittlungs-Server ist nach Ausführungsformen der Erfindung dazu ausgebildet, festzustellen, dass das erste Authentifizierungstoken valide und damit das Zahlungsauslöseendgerät als vertrauenswürdig erachtet wird, sofern der Vermittlungs-Server mit dem aktuellen Prüfschlüssel des Endgeräts aus der empfangenen Nachricht einen Wert ableiten kann, der zu dem empfangenen ersten Authentifizierungstoken identisch ist. Die Nachricht wird zusätzlich daraufhin geprüft, ob ihre Bestandteile mit den entsprechenden Referenzwerten korrespondieren. Korrespondenz kann im einfachsten Fall Identität der verglichenen Werte bedeuten. Es ist aber auch möglich, dass der Vermittlungs-Server die rekonstruierte Nachricht oder Teile derselben nochmals verarbeitet und abgeleitete Werte erzeugt, sodass der Vergleich der abgeleiteten Werte mit den entsprechenden Referenzwerten komplexer sein kann als eine bloße Identitätsprüfung.

Nach einer alternativen Ausführungsform wird der erste Authentifizierungstoken AUT1 dadurch gebildet, dass zunächst ein Hashwert der Eingangsdaten bzw. Nachrichtenbestandteile gebildet wird, sodass der Hashwert die Nachricht 243 repräsentiert. Der Einmalschlüssel 252 wird sodann auf den Hashwert angewendet, um den ersten Authentifizierungstoken zu bilden. In diesem Fall besteht auch der zumindest eine Referenzwert, der von dem Vermittlungs-Server bezüglich des Zahlungsauslöseendgerätes gespeichert ist, aus einem Hashwert der erwarteten Daten. In diesem Fall müssen Daten, die an den Autorisierungsserver weitergegeben werden sollen, zum Beispiel ein Identifikator des Händlerkontos und des Kundenkontos, oder die vom Vermittlungs-Server zur Identifikation des sendenden Endgeräts nötig sind, in "nicht-gehashter" Klartextform zusätzlich zu dem ersten Authentisierungstoken von dem Zahlungsauslöseendgerät an den Vermittlungs-Server übertragen werden.

Nur für den Fall, dass der Vermittlungs-Server im Zuge der Prüfungen des ersten Authentifizierungstokens und der Nachricht zu dem Ergebnis kommt, dass der erste Authentifizierungstoken valide ist und die Nachricht die zu prüfenden Referenzwerte, insbesondere eine Hardware-ID eines beim Vermittlungs-Server registrierten Endgeräts, enthält, leitet der Vermittlungs-Server einen zweiten Prüfschritt ein, welcher von einem Autorisierungsserver 234 durchgeführt wird. Der Autorisierungsserver kann beispielsweise als ein POS-Netzknotensystem "Poseidon OLTP" des Herstellers Atos Worldline, ausgebildet sein.

Dies geschieht dadurch, dass der Vermittlungs-Server im Schritt 112 einen zweiten Authentifizierungstoken (AUT2) generiert und an den Autorisierungsserver 234 sendet. Der Autorisierungsserver ist dazu ausgebildet, die Transaktion, auf welche sich die Nachricht und das erste Authentifizierungstoken bezieht, in Abhängigkeit vom Ergebnis einer Prüfung des zweiten Authentifizierungstoken (AUT2) zu autorisieren. Bei dem Autorisierungsserver handelt es sich typischerweise um einen Server in einem Rechenzentrum 230 der für den Karteninhaber abrechnenden Bank. Der Autorisierungsserver nimmt also im oben beschriebenen Beispiel die Autorisierung des aufsummierten Kaufbetrages und die Überweisung dieses Betrags vom Kundenkonto auf das Händlerkonto vor. Im Rahmen der Prüfung des zweiten Authentifizierungstokens ("zweiten Autorisierungsanfrage") durch den Autorisierungsserver erfolgt typischerweise auch eine Sperrabfrage und die Feststellung der Karteninhaberechtheit (cardholder verification). Verläuft alles positiv, sendet der Autorisierungsserver eine entsprechende Nachricht an den Vermittlungs-Server.

Falls der Vermittlungs-Server in Schritt 114 eine Nachricht von dem Autorisierungsserver 234 erhält, welche beinhaltet, ob die Transaktion autorisiert wurde, leitet er die Mitteilung über die erfolgreiche oder gescheiterte Durchführung der geplanten Transaktion an das Zahlungsauslöseendgerät. Eine Zurückweisung der Transaktion durch den Autorisierungsserver kann z.B. dann erfolgen, wenn das Kundenkonto nicht gedeckt oder die Bezahlkarte vom Bankinstitut gesperrt wurde. Vorzugsweise ist das Zahlungsauslöseendgerät dazu konfiguriert, dem Kunden anzuzeigen oder anderweitig mitzuteilen, ob die gewünschte Transaktion erfolgreich ausgeführt wurde bzw. dass und warum dies nicht der Fall war.

Nach jeder Prüfung eines von dem Zahlungsauslöseendgerät empfangenen ersten Authentifizierungstokens erzeugt der Vermittlungs-Server in Schritt 116 einen neuen Einmalschlüssel für das Zahlungsauslöseendgerät, von welchen das erste Authentifizierungstoken empfangen wurde. Außerdem erzeugt der Vermittlungs-Server einen neuen Prüfschlüssel, der diesem neuen Einmalschlüssel zugeordnet ist. Der Vermittlungs-Server kann in diesem Fall außerdem die Nachricht der erfolgreich durchgeführten Zahlungstransaktion an das Zahlungsauslöseendgerät kommunizieren. Das Zahlungsauslöseendgerät kann dazu ausgebildet sein, im Falle des Erhalts diese Bestätigungsnachricht die erfolgreiche Durchführung der Überweisung des Kaufbetrages auf das Händlerkonto auf einem Anzeigegerät des Zahlungsauslöseendgeräts und/oder Drucker auszugeben, sodass der Käufer über die erfolgreiche Durchführung der bargeldlosen Transaktion informiert wird.

In Schritt 118 sendet der Vermittlungs-Server den neuen Einmalschlüssel an das Zahlungsauslöseendgerät. Dies kann zum Beispiel zusammen mit der Bestätigungsnachricht bezüglich der erfolgreich durchgeführten Geldtransaktion erfolgen.

In Schritt 120 speichert das Zahlungsauslöseendgerät den empfangenen neuen Einmalschlüssel in einem Datenspeicher des Zahlungsauslöseendgeräts. Die Speicherung kann zum Beispiel so erfolgen, dass der von dem Zahlungsauslöseendgerät zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

Falls der Vermittlungs-Server in Schritt 110 feststellt, dass das erste Authentifizierungstoken nicht valide ist kann die aktuelle Transaktion mit einer Fehlermeldung beendet werden. Gemäß anderen Ausführungsformen ist es jedoch auch möglich, dass in diesem Fall gemäß einer Unter-Routine 113 der Vermittlungs-Server automatisch einen neuen Einmalschlüssel und zugehörigen Prüfschlüssel erzeugt und den neuen Einmalschlüssel an das Zahlungsauslöseendgerät sendet. Das Zahlungsauslöseendgerät verwendet den neuen Einmalschlüssel um erneut die für die aktuell angeforderte Transaktion erstellte Nachricht in einen neuen ersten Authentifizierungstoken abzuleiten und diesen über das Netzwerk an den Vermittlungs-Server 250 zur erneuten Prüfung zu senden. Dieser führt die Schritte 108 und 110 mit dem neu erstellten ersten Authentifizierungstoken erneut durch und erhöht dabei einen Fehler-Zähler. Ist das bei der erneuten Durchführung von Schritt 110 erhaltene Prüfergebnis erneut negativ, kann erneut die unter-Routine 113 ausgeführt werden, wobei der Fehler-Zähler erneut um 1 erhöht wird, sollte dieser neue Versuch erneut scheitern und zu einem negativen Prüfergebnis in Schritt 110 führen. Wenn der Fehler-Zähler einen vordefinierten Höchstwert an gescheiterten Prüfschritten 110 erreicht, leitet der Vermittlungs-Server eine Neu-Initialisierung des Zahlungsauslöseendgerätes ein oder sendet ein entsprechendes Triggersignal zur Neu-Initialisierung an das Zahlungsauslöseendgerät. Vorzugsweise wird im Zuge dieser Neu-Initialisierung eine neue, aktuelle und vertrauenswürdige Version der Terminalsoftware auf dem Zahlungsauslöseendgerät instanziiert.

**Figur 2** zeigt ein Blockdiagramm eines verteilten Systems mit einem Zahlungsauslöseendgerät 204 und einem Vermittlungs-Server 250.

Bei dem Zahlungsauslöseendgerät kann es sich zum Beispiel um eine Selbstbedienungskasse handeln. Eine oder mehrere Selbstbedienungskassen können einem Nutzer 202 zugeordnet sein, welche hier als Händler bzw. dessen Verkaufspersonal repräsentiert ist. Das Zahlungsauslöseendgerät kann optional über eine Anzeigevorrichtung 206, zum Beispiel ein LED Display, und/oder ein Tastaturfeld oder ein berührungssensitives Display 208, verfügen. Über diese Schnittstelle kann ein Nutzer beispielsweise eine bestimmte Transaktion durch Interaktion mit den Tasten bzw. dem berührungssensitiven Bildschirm einleiten. Das Zahlungsauslöseendgerät kann mit weiteren Geräten oder Gerätekomponenten verbunden sein, zum Beispiel einen optischen Scanner zum Erfassen von Preisen auf Waren und eine Schnittstelle 262 einem elektronischen oder physischen Zahlungsmittel. Beispielsweise kann es sich bei der Schnittstelle 262 um eine Schnittstelle zu Nachweltkommunikation 222 mit einem Mobilfunkgerät 224 eines Käufers 240 handeln. Auf dem Mobilfunkgerät des Käufers kann eine bezahl-Applikation mit einer virtuellen Zahlkarte 264 installiert sein, welche mit einem Käuferkonto verknüpft ist. Zusätzlich oder alternativ dazu kann die Schnittstelle 262 mit einem Chipkartenlesegerät 226 operativ verbunden sein. Das Lesegerät 226 ermöglicht es, eine als Chipkarte ausgebildete Zahlkarte 228 mit einem Chip 266 zu verwenden, um eine bestimmte bargeldlose Transaktion zu veranlassen.

Die auf dem Zahlungsmittel 264, 266 codierten Daten, zum Beispiel Daten bezüglich des Bankkontos des Käufers, des entsprechenden Bankinstituts und sonstiger Käufer- bzw. Käuferkonto-bezogene Daten, werden vorzugsweise über einen Kernel 218 des Betriebssystems des Zahlungsauslöseendgerätes vor oder während der Anbahnung der Transaktion von dem Zahlungsmittel ausgelesen und von einer Routine 220 des Kernels 218 an eine Terminalsoftware 254 bereitgestellt. Zusätzlich kann der Kernel oder eine andere Funktion des Zahlungsauslöseendgerätes dazu ausgebildet sein, transaktionsbezogene Daten wie zum Beispiel eine aktuelle Uhrzeit 278, weitere transaktionsbezogene Daten 280 wie zum Beispiel den zu zahlenden Kaufpreis und Daten, die aus dem Zahlungsmittel ausgelesen wurden (z.B. Verfallsdatum einer Chipkarte, Kartenfolgenummer, EMV Daten bzw. allgemein Prüfdaten vom Chip einer Chipkarte u.a.) an die Terminalsoftware 254 zu übermitteln. Die Terminalsoftware 254 verwaltet einen Einmalschlüssel 252 und umfasst ein Modul 212 zur Generierung einer Nachricht 243 aus den von dem Kernel empfangenen Daten 278, 280 und weiterer Daten, z.B. einer Hardware-ID 258 des Zahlungsauslöseendgerätes und optional auch Metadaten 242 zu der Terminalsoftware 254. Vorzugsweise beinhaltet die Nachricht auch einen Identifikator des Eigentümers des Zahlungsauslöseendgeräts, z.B. eine Händler-ID. Diese wird dann zu einem späteren Zeitpunkt im Falle einer erfolgreichen Prüfung des ersten Authentifizierungstokens vom Vermittlungs-Server zusammen mit dem zweiten Authentifizierungstoken an den Autorisierungsserver weitergegeben und ermöglicht dem Autorisierungsserver die Identifikation des Händlerkontos, auf welches der Kaufbetrag überwiesen werden sollt. Neben der Händler-ID werden gemäß Ausführungsformen der Erfindung zusammen mit dem zweiten Authentifizierungstoken auch weitere Daten, die Bestandteil der Nachricht sind, an den Autorisierungsserver zur Prüfung weitergeleitet, z.B. eine PAN (Primary Account Number - ein eindeutiger Identifikator von Kreditkarten und Debitkarten), EMV (Europay International, MasterCard und VISA) Prüfdaten, eine Kartenfolgenummer, u.a.).

Beispielsweise kann die Nachricht durch Konkatenierung der vorgenannten Datenwerte entsprechend eines vorgegebenen Schemas bzw. einer vorgegebenen Reihenfolge erfolgen. Dieses Schema bzw. diese Reihenfolge ist vorzugsweise sowohl dem Zahlungsauslöseendgerät als auch dem Vermittlungsserver bekannt und erlaubt einen gezielten Vergleich bestimmter Teile der empfangenen Nachricht mit entsprechenden Referenzwerten durch den Vermittlungs-Server.

Ein weiteres Modul 214 der Terminalsoftware 254 ist dazu ausgebildet, den Einmalschlüssel 252 auf die Nachricht 243 anzuwenden und dadurch ein erstes Authentifizierungstoken AUT1 zu erzeugen. Beispielsweise kann es sich bei dem Einmalschlüssel 252 um einen vom Vermittlungs-Server erzeugten und bereitgestellten symmetrischen kryptografischen Schlüssel handeln, wobei der Vermittlungs-Server einen zu dem Einmalschlüssel korrespondierenden symmetrischen kryptografischen Schlüssel in Form eines aktuell dem Zahlungsauslöseendgerät zugeordneten Prüfschlüssels vorhält.

Ein weiteres Modul 216 der Terminalsoftware ist dazu ausgebildet, mithilfe der SSL Zertifikate 213, 272 eine verschlüsselte SSL Verbindung mit dem Vermittlungsserver 250 aufzubauen und über diese geschützte Verbindung das erste Authentifizierungstoken 214 an den Vermittlungsserver 250 zu übertragen.

Zum Aufbau der geschützten SSL Verbindung wird ein Secure-Sockets-Layer-Tunnel (kurz: SSL-Tunnel) aufgebaut, über den das erste Authentifizierungstoken versendet wird. Hierfür ist im Zahlungsauslöseendgerät ein SSL-ROOT-Zertifikat 213 hinterlegt, welches das SSL-Server-Zertifikat 270 des Vermittlungs-Servers prüft. Vorzugsweise ist zudem im Vermittlungs-Server ebenfalls ein SSL-Root-Zertifikat 274 hinterlegt, welches ein entsprechendes SSL-Client-Zertifikat 272 des Zahlungsauslöseendgerätes prüft. Im Zuge des Aufbaus der SSL Verbindung zwischen dem Endgerät und dem Vermittlungs-Server prüfen vorzugsweise die jeweiligen SSL Root-Zertifikate die ihnen zugeordneten SSL Client- bzw. Server-Zertifikate. Bei der SSL Verbindung handelt es sich also vorzugsweise um eine doppelseitig verschlüsselte SSL Verbindung.

Nach einer Ausführungsform ist das Root-Zertifikat 213 in jedem von einer Vielzahl von Zahlungsauslöseendgeräten gleich. Das Root - Zertifikat wird also nur einmal für eine Menge von Endgeräten, z.B. für alle Endgeräte eines bestimmten Herstellers, generiert und entspricht einem Stammzertifikat, also einem Public-Key-Zertifikat, das eine Stammzertifizierungsstelle identifiziert. Stammzertifikate sind selbstsigniert und bilden die Basis einer X.509-basierten Public-Key-Infrastruktur.

Nach einer Ausführungsform wird das Server-Zertifikat 270 als Ableitung des Root Zertifikats 213 erstellt. Das Server-Zertifikat 270 identifiziert eindeutig den Vermittlungs-Server (oder dessen SSL Gateway) über seinen DNS Namen. Ebenfalls enthält das Zertifikat 270 einen geheimen Schlüssel, der mit dem öffentlichen Schlüssel aus dem Root-Zertifikat 213 ein asymmetrisches kryptographisches Schlüsselpaar bildet. Über das Server-Zertifikat 270 kann das anfragende Endgerät sicher sein, dass die Gegenstelle 250 (bzw. 232) die ist, die sie vorgibt zu sein.

Nach einer Ausführungsform wird das Root Zertifikat 274 in dem Vermittlungs-Server (oder dessen SSL Gateway) gespeichert. Das Root Zertifikat 274 wird auf dem Vermittlungsserver dazu genutzt um das Client-Zertifikat 272 für jedes Endgerät bei der Initialisierung zu generieren. Das Root Zertifikat 274 ist auf dem Server 250 oder dessen Gateway also nur einmal vorhanden, es wird jedoch für die Erzeugung einer Vielzahl von endgerät-individuellen Client-Zertifikaten 272 verwendet.

Das Client-Zertifikat 272 ist ein endgerät-individuelles Zertifikat. Insbesondere kann es als SSL Zertifikat verwendet werden. Das Client-Zertifikat 272 wird als Ableitung des Root Zertifikats 274 auf dem Vermittlungsserver für jedes Endgerät ("Cilent") individuell bei der Initialisierung oder Re-Initialisierung des Zahlungsauslöseendgeräts generiert. Dieses Zertifikat 272 enthält einen Endgerät-individuellen privaten Schlüssel, der zu dem öffentlichen Schlüssel des Root Zertifikats 274 passt, d.h., mit diesem zusammen ein asymmetrisches kryptographisches Schlüsselpaar bildet.

Nach Ausführungsformen der Erfindung beinhaltet der Vermittlungs-Server ferner ein SSL-Server Zertifikat 282 für die Kommunikation mit dem Autorisierungsserver 230, der über ein entsprechendes Root-Zertifikat 284 verfügt. Die funktionale Beziehung von Zertifikat 282 zu Zertifikat 284 ist analog der Beziehung von Zertifikat 270 und 213. das Server-Zertifikat 282 wird erstellt als eine Ableitung des Root Zertifikats 284. Das Server-Zertifikat 282 identifiziert eindeutig den Vermittlungs-Server (oder dessen SSL Gateway) über seinen DNS Namen. Ebenfalls enthält das Zertifikat 282 einen geheimen Schlüssel, der mit dem öffentlichen Schlüssel aus dem Root-Zertifikat 284 ein asymmetrisches kryptographisches Schlüsselpaar bildet. Über das Server-Zertifikat 282 kann der Autorisierungsserver 234 sicher sein, dass die Gegenstelle 250 die ist, die sie vorgibt zu sein.

Bei der in Figur 2 dargestellten Ausführungsform läuft der Datenaustausch zwischen Zahlungsauslöseendgerät und Vermittlungs-Server 250 indirekt über einen SSL Gateway 232, welcher typischerweise im gleichen Rechenzentrum 260 steht wie der Vermittlungs-Server. Es sind jedoch auch andere Ausführungsformen möglich, bei welchem der Datenaustausch zwischen Zahlungsauslöseendgerät und Vermittlungs-Server direkt ohne Zwischenschaltung des SSL-Gateways 232 erfolgt.

Optional kann das erste Authentifizierungstoken vor der Übertragung zusätzlich mit einem kryptografischen Schlüssel 276 verschlüsselt werden, wobei der Vermittlungsserver 250 über einen entsprechenden privaten Schlüssel 276'verfügt, welcher dem Zahlungsauslöseendgerät zugeordnet ist und es dem Vermittlungs-Server ermöglicht, dass über die geschützte Verbindung empfangene, verschlüsselte erste Authentifizierungstoken wieder zu entschlüsseln. Beispielsweise kann es sich bei den Schlüsseln 276, 276' um ein symmetrisches kryptographisches Schlüsselpaar handeln, welches spezifisch für ein bestimmtes Zahlungsauslöseendgerät ist.

Nach Ausführungsformen der Erfindung wird ein Endgerät-individueller privater Schlüssel 276 (z.B. bei der Erstellung des Client-Zertifikats 272) durch den Vermittlungsserver 250 aus der Hardware-ID 258 des Zahlungsauslöseendgerätes und aus einem aus dem Quellcode der Terminalsoftware abgeleiteten Wert 242' (z.B. Hash-Wert) abgeleitet. Beispielsweise wird der geheime Schlüssel des Client-Zertifikates 272 zur Ableitung des Endgerät-individuellen Schlüssels 276 verwendet.

Dies kann vorteilhaft sein, da der resultierende Wert Eigenschaften der Hardware des Endgeräts mit Eigenschaften der darauf installierten Terminalsoftware verschränkt und dadurch besonders wirksam vor Manipulation der endgerätseitig an der Erzeugung der Nachricht und des AUT1-Tokens beteiligten Komponenten schützt. Die Verschränkung wird vorzugsweise bei jeder Neu-Initialisierung des Endgeräts erneut vorgenommen.

Beispielsweise kann der Endgerät-individuelle Schlüssels 276 wie folgt berechnet werden:

- Zunächst wird der Wert der Hardware-ID des Endgeräts empfangen und/oder ermittelt. Bei der Hardware-ID kann es sich beispielsweise um die Mac handeln, die z.B. den Wert D43D7E383B33 haben kann; Dieser Wert kann z.B. im Hexadezimalcode codiert und 6 Byte lang sein;

- Im einem weiteren Schritt wird ein Wert Psslcz erzeugt. Dies kann z.B. dadurch erfolgen, dass eine vordefinierte Anzahl von Stellen (z.B. die letzten 16 Stellen) des privaten Schlüssels des für das Endgerät ausgestellten SSL Client Zertifikats 272 in Hexadezimalcode konvertiert werden. Die Länge von Psslcz kann z.B. 8 Byte betragen; Der Wert Psslcz kann beispielsweise 2A0198671 29834FE sein;

- Im einem weiteren Schritt wird ein Ableitschlüssel, z.B. Ableitschlüssel 277, bereitgestellt; es ist möglich, dass der Vermittlungsserver den gleichen Ableitschlüssel für mehrere Endgeräte verwendet; der Ableitschlüssel kann z.B. ein 8 Byte langer Hexadezimalwert sein und z.B. den Wert 1C00392010A7E9DF haben;

- In einem weiteren Schritt wird ein vom Quellcode der aktuell auf dem Endgerät instanziierten Terminalsoftware abgeleiteter Wert ermittelt; Dieser Wert kann z.B. wie auch die Hardware-ID vom Endgerät durch den Vermittlungs-Server im Zuge einer (Neu)-Initialisierung des Endgeräts empfangen werden. Vorzugsweise ist dieser Wert nicht nur von dem Quellcode der Terminalsoftware sondern auch von deren Version abgeleitet. Beispielsweise kann es sich bei dem abgeleiteten Wert um einen Hashwert handeln, z.B. um einen 6 Byte langen Hexadezimalwert, z.B. 1A8DCC1F0110;

Die Reihenfolge dieser Schritte kann beliebig verändert werden. Im vorliegenden Beispiel liegen z.B. nach Durchführung der oben genannten Schritte folgende Werte vor:

- Hardware-ID (Mac):   D43D7E383B33
- Psslcz:                      2A0198671 29834FE
- Ableitschlüssel 277:   1C00392010A7E9DF
- Hashwert:                  1A8DCC1F0110

Nun wird der Endgerät-individuelle Schlüssel 276 als Funktion dieser vier Werte abgeleitet. Beispielsweise kann die Ableitung durch Konkatenation der Werte oder Teile dieser Werte nach einem vordefinierten Schema erfolgen. Beispielsweise kann die Ableitung nach folgendem Schema erfolgen:

## Schlüssel 276 = (Mac + Psslcz) - (Ableitschlüssel 277 + Hash),

wobei "+" für eine Summation und "-" für eine Subtraktion steht.

Es sind aber auch komplexere Ableitungsschemata möglich, die z.B. noch Shiftoperationen und/oder das Auffüllen von Stellen mit Nullen beinhalten, z.B.:

Schlüssel 276 = Byte Shift «Links 2 Bits(Mac)|Byte Shift »Rechts 2 Bits(Hash)|Letzte 2 Bytes von (Psslcz + Ableitschlüssel), wobei "|" für eine Konkatenation steht.

Es ergeben sich im obigen Beispiel somit folgende Werte:

- Mac geshiftet, auf 7 Byte mit Nullen aufgefüllt: 0350 F5F8 EOEC CC
- Hash geshiftet, auf 7 Byte mit Nullen aufgefüllt: 0006 A373 07C0 44
- Schlüssel 276 = Byte Shift «Links 2 Bits(D43D7E383B33)|Byte Shift »Rechts 2 Bits(1A8DCC1F0110)|Last 2 Bytes von (2A019867129834FE+1C00392010A7E9DF)
- Schlüssel 276 = 0350 F5F8 EOEC CC00 06A3 7307 C044|Last 2 Bytes from (4601 D187 2340 1EDD)
- Schlüssel 276 = 0350 F5F8 EOEC CC00 06A3 7307 C044 1EDD

Nach Ausführungsformen wird der endgerät-individuelle Schlüssel 276 im Zuge der Initialisierung des Endgeräts vom Vermittlungs-Server an das Endgerät gesendet und in Kopie (276') in der Datenbank 256 gespeichert. Der Schlüssel 276' wird nach Ausführungsformen vom Vermittlungs-Server zur Verschlüsselung der neu erzeugten Einmalschlüssel vor deren der Übertragung an das Endgerät und/oder zur Entschlüsselung von verschlüsselten ersten Authentifizierungstoken oder verschlüsselten Teilen der Nachricht, die mit dem Schlüssel 276 verschlüsselt wurden, verwendet.

Der Vermittlungsserver 250 beinhaltet einen Datenspeicher mit einer Datenbank 256, die das strukturierte Speichern von Daten ermöglicht. Die Datenbank 256 kann nach Ausführungsformen auch innerhalb des HSMs 210 gespeichert sein. Die Datenbank beinhaltet für jedes von einer Vielzahl von bei dem Vermittlungs-Server registrierten Zahlungsauslöseendgeräten eine eindeutige Kennung, die zum Beispiel eine Hardware-ID (zum Beispiel MAC-Adresse) des Zahlungsauslöseendgeräts sein kann. Dieser Kennung ist zu einem aktuellen Zeitpunkt genau ein aktiver Prüfschlüssel 252'zugeordnet, welcher funktional zu dem aktuell in dem betreffenden Zahlungsauslöseendgerät vorhandenen Einmalschlüssel 252 korrespondiert. Bei den Ausführungsformen, in welchen das Zahlungsauslöseendgerät das erste Authentifizierungstoken mit einem kryptografischen Schlüssel 276 vor dem Transfer über die SSL Verbindung verschlüsselt, ist in der Datenbank zudem ein entsprechender Entschlüsselungsschlüssel 276' dem Zahlungsauslöseendgerät über dessen Kennung zugeordnet und in der Datenbank 256 gespeichert. Die Prüfschlüssele 252'in der Datenbank werden immer aktualisiert, wenn für ein bestimmtes Zahlungsauslöseendgerät ein neuer Einmalschlüssel und dazu korrespondierende Prüfschlüssel gebildet wird. Der Vermittlungsserver 250 hat ein oder mehrere Referenzwerte 242', 258' gespeichert und umfasst ein Modul 146 zur Überprüfung des vom Zahlungsauslöseendgerät im Zuge der Anbahnung einer Transaktion erhaltenen ersten Authentifizierungstokens und der empfangenen Nachricht 243'. Im Zuge der Prüfung wird der Prüfschlüssel 252', welcher in der Datenbank aktuell dem Zahlungsauslöseendgerät 204 zugeordnet ist, auf die empfangene Nachricht 243' angewendet und das Resultat mit dem erste Authentifizierungstoken verglichen. Außerdem wird die Nachricht mit ein oder mehreren Referenzwerten 258', 242' verglichen. Der Vermittlungs-Server 250 kennt das Schema, nach welchem die Nachricht aus den verschiedenen Daten erzeugt wurde und prüft die einzelnen Bestandteile der Nachricht durch Vergleich mit den entsprechenden Referenzwerten. Beispielsweise wird der Teil der Nachricht, der zu der Hardware-ID korrespondiert, mit dem Referenzwert 258' verglichen, welcher der erwarteten Hardware-ID entspricht. Transaktionsbezogene Daten wie zum Beispiel Datum und Uhrzeit können im Zuge der Prüfung vom Vermittlungs-Server daraufhin überprüft werden, ob diese Zeitangaben ein maximales Alter gerechnet von einem aktuellen Prüfzeitpunkt haben. Nachrichtenbestandteile, welche beispielsweise Metadaten der Terminalsoftware repräsentieren, werden mit ein oder mehreren entsprechenden Referenzwerten verglichen, die zum Beispiel Hash Werte von Quellcode von validen und fehlerfreien Terminalsoftwareversionen sind.

Falls der Vergleich der Bestandteile der empfangenen Nachricht mit den entsprechenden Referenzwerten ergibt, dass die Authentifizierungsanfrage von einem bei dem Vermittlungs-Server registrierten Zahlungsauslöseendgerät stammt, dass die Anfrage das maximal erlaubte Alter nicht überschreitet und dass die Terminalsoftware, welche das erste Authentifizierungstoken erzeugt hat, auf einem Quellcode beruht, der als aktuell und fehlerfrei bekannt ist, hat sich das Zahlungsauslöseendgerät bezüglich der aktuellen Transaktion erfolgreich gegenüber dem Vermittlungs-Server 250 authentifiziert. Nur in diesem Fall führt der Vermittlungs-Server 250 nun weitere Schritte durch, um einen Autorisierungsserver 234 zu veranlassen, die angeforderte Transaktion zu prüfen und bei positiver Prüfung die bargeldlose Transaktion zu veranlassen.

Wie bereits zu Figur 1 beschrieben erzeugt der Vermittlungs-Server 250 ein zweites Authentifizierungstoken AUT2. Beispielsweise kann der Vermittlungs-Server bei dem Autorisierungsserver 234 registriert sein und vorab mit diesem ein geheimes kryptographisches Schlüsselpaar 244, 244' teilen.

Nach einer Ausführungsform verwendet der Vermittlungs-Server 250 zur Erzeugung des zweiten Authentifizierungstokens AUT2 immer den gleichen Schlüssel 244, um sich gegenüber dem Autorisierungsserver 234 zu authentifizieren. Der Schlüssel 244 ist ein geheimer Schlüssel und ist daher vorzugsweise in einem Sicherheitsmodul 210 des Vermittlungs-Servers 250 gespeichert. Beispielsweise kann AUT2 eine MAC (Message Authentication Code) enthalten, der mit dem privaten kryptographischen Schlüssel 244 erstellt wird. Dieser Schlüssel 244 wird für die Erzeugung aller AUT2 Token für alle beim Vermittlungs-Server registrierten Zahlungsauslöseendgeräte verwendet. Bei dem Sicherheitsmodul 210 handelt es sich typischerweise um ein HSM.

Die MAC (Nachrichtenauthentifizierungscode - nicht zu verwechseln mit der MAC, die als Hardware-ID des Zahlungsauslöseendgerätes 204 verwendet wird - dient dazu, Gewissheit über den Ursprung von Daten oder Nachrichten zu erhalten und ihre Integrität zu überprüfen. MAC-Algorithmen erfordern zwei Eingabeparameter, erstens die zu schützenden Daten und zweitens einen geheimen Schlüssel, und berechnen aus beidem eine Prüfsumme, den Message Authentication Code. Als zu schützende Daten kommen verschiedene Daten infrage, die als Bestandteil der Nachricht 243' an den Vermittlungs-Server übermittelt wurden, zum Beispiel diverse transaktionsbezogene Daten, zahlungsmittelbezogene Daten, Händler- und/oder Käufer-Konto bezogene Daten. Die zu schützenden Daten werden nach Ausführungsformen der Erfindung zusammen mit dem zweiten Authentifizierungstoken AUT2 an den Autorisierungsserver 234 über ein Netzwerk übertragen.

Optional kann das zweite Authentifizierungstoken AUT2 auch mit weiteren in dem HSM 210 enthaltenen Schlüsseln verschlüsselt und an den Autorisierungsserver gesendet werden. Dadurch ist die Strecke zwischen dem Vermittlungs-Server und dem Autorisierungssystem genauso gesichert wie heute die Nachrichten gemäß ZVT-Host Protokoll zwischen einen konventionellen Kartenzahlungsterminal und einem konventionellen Poseidon-Autorisierungsserver. Somit entsteht die Möglichkeit ein Endgerät 250 ohne eigenes HSM in diesem System zu betreiben, da die Sicherheitsaspekte von dem Vermittlungs-Server übernommen werden.

Die Erzeugung des Einmalschlüssels 252 durch den Vermittlungs-Server kann auf verschiedene Weise erfolgen. Beispielsweise kann ein Zufallsgenerator oder Pseudo-Zufallsgenerator zur Erzeugung des Einmalschlüssels verwendet werden. Gemäß einer alternativen Ausführungsform beinhaltet der Vermittlungs-Server einen Ableitungsschlüssel 277, welche vorzugsweise ebenfalls in dem HSM 210 gespeichert ist und typischerweise identisch ist für eine Vielzahl von Zahlungsauslöseendgeräten. Dieser Ableitungsschlüssel 277 wird auf das erste Authentifizierungstoken AUT1 angewandt, welches im Zuge einer aktuellen Autorisierungsanfrage für eine aktuelle Transaktion T1 vom Vermittlungs-Server empfangen wurde. Der so erzeugte Einmalschlüssel wird in der Datenbank 256 als neuer, aktueller Prüfschlüssel gespeichert und an das Zahlungsauslöseendgerät als neuer, aktueller Einmalschlüssel gesendet. Er dient dann typischerweise als Einmalschlüssel im Kontext der Anbahnung einer nachfolgenden Transaktion T2. Die Ableitung des Einmalschlüssels kann beispielsweise durch eine bestimmte Funktion oder ein Modul 268 eine auf dem Vermittlungs-Server instanziierten Vermittlungssoftware durchgeführt werden.

Gemäß Ausführungsformen der Erfindung beinhaltet das HSM 210 des Vermittlungs-Server 250 also zumindest zwei kryptographische Schlüssel, welche nicht einzelnen Händlern bzw. Zahlungsauslöseendgeräten zugeordnet sind, nämlich den Ableitschlüssel 277 zur Erzeugung der Einmalschlüssel sowie den privaten Schlüssel 244, welcher zur Erzeugung des zweiten Authentifizierungstokens verwendet wird.

Gemäß Ausführungsformen der Erfindung ist die Netzwerkverbindung zwischen dem Vermittlungs-Server und dem Autorisierungsserver genauso gesichert wie heute die Nachrichten zwischen einem konventionellen Kartenzahlungsterminal mit HSM und dem Autorisierungsserver. Somit entsteht die Möglichkeit ein Zahlungsauslöseendgerät ohne HSM in diesem System zu betreiben, da die Sicherheitsaspekte von dem Vermittlungs-Server in Zusammenarbeit mit einer speziellen Terminalsoftware übernommen werden. Aus der Sicht des Autorisierungsservers stellen der Vermittlungs-server und jedes von einer Vielzahl von beim Vermittlungs-Server registrierten Zahlungsauslöseendgeräten eine funktionale Einheit dar, die mit dem Autorisierungsserver entsprechend des ZVT-Host-Protokolls genauso interagieren wie die konventionellen POS-Terminals mit HSM.

Falls der Vermittlungs-Server von dem Autorisierung-Server die Nachricht erhält, dass die Transaktion nicht durchgeführt werden kann, zum Beispiel weil das Konto nicht gedeckt ist oder andere Probleme aufgetreten sind, leitet der Vermittlungs-Server diese Information an das Zahlungsauslöseendgerät weiter, von welchem das für diese Transaktion gebildete erste Autorisierungstoken empfangen wurde. Unabhängig davon, ob die Prüfung des zweiten Autorisierungstoken durch den Autorisierungsserver ein positives oder negatives Ergebnis liefert erzeugt der Vermittlungs-server für das betroffene Zahlungsauslöseendgerät einen neuen Einmalschlüssel und einen dazu korrespondierenden neuen Prüfschlüssel und leitet den neuen Einmalschlüssel an das Zahlungsauslöseendgerät weiter.

Vorzugsweise beinhaltet der Vermittlungsserver einen Zähler für negative Prüfergebnisse bezüglich der ersten Authentifizierungstoken eines bestimmten Zahlungsauslöseendgeräts. Zusätzlich oder alternativ dazu kann der Vermittlungsserver einen Zähler für sämtliche Prüfprozesse bezüglich der ersten Authentifizierungstoken eines bestimmten Zahlungsauslöseendgeräts sein. Diese Zähler ermöglichen es dem Vermittlungsserver, nach Überschreiten einer vordefinierten maximalen Anzahl an Prüfschritten (mit einem negativen Ergebnis bzw. unabhängig vom Ergebnis) eine neue Initialisierung des Zahlungsauslöseendgeräts zu veranlassen, wodurch die Sicherheit des Verfahrens gegenüber einer Manipulation des Endgeräts erhöht wird.

Falls die Mitteilung an das Endgerät beinhaltet, dass die aktuell angeforderte Transaktion nicht durchgeführt werden kann, können in der Mitteilung optional auch die Gründe für das Scheitern der Transaktion in dieser Mitteilung enthalten sein, sodass der Nutzer, der die Transaktion veranlasst hat, gegebenenfalls Rücksprache mit seiner Bank halten kann. Typischerweise führt eine Zurückweisung der Transaktion durch den Autorisierungsserver nicht zu einer Neu-Initialisierung des Zahlungsauslöseendgerätes, da die Probleme in diesem Fall eher im Bereich der Kontodeckung als im Bereich einer korrumpierten Terminalsoftware bzw. Hardware liegen.

Falls der Vermittlungs-Server eine Nachricht von dem Autorisierungsserver erhält, dass die aktuell angeforderte Transaktion autorisiert wurde, erzeugt der Vermittlungs-Server (typischerweise mit einer "Vermittlungssoftware", die mit der Terminalsoftware interoperabel ist, neuen Einmalschlüssel für das Zahlungsauslöseendgerät und eines diesem neuen Einmalschlüssel zugeordneten neuen Prüfschlüssel. Der Prüfschlüssel wird als neuer aktueller Prüfschlüssel in der Datenbank 256 gespeichert. Der Einmalschlüssel wird über die SSL Verbindung an das Zahlungsauslöseendgerät übertragen sodass der Einmalschlüssel bereits vorliegt, wenn zu einem späteren Zeitpunkt eine neue Transaktion durchgeführt werden soll.

Dieser neue Einmalschlüssel wird in dem Zahlungsauslöseendgerät so gespeichert, dass der zuletzt verwendete Einmalschlüssel überschrieben oder auf andere Weise invalidiert wird. Es ist auch möglich, dass die Terminalsoftware den Einmalschlüssel unmittelbar nach Gebrauch löscht oder invalidiert.

Die Kommunikation zwischen dem Vermittlungs-Server 250 und dem Autorisierungsserver 234 erfolgt gemäß bevorzugten Ausführungsformen der Erfindung gemäß des ZVT-Host Protokolls. Dies kann vorteilhaft sein, da dieses Protokoll von den Autorisierungsservern vieler Banken verwendet wird, wenn auch eigentlich zur direkten Kommunikation mit den im Stand der Technik bekannten Zahlungsauslöseendgeräten.

Der Vermittlungs-Server 250 und gegebenenfalls auch der ihm zugeordnete SSL Gateway 232 werden typischerweise in einem Rechenzentrum 260 betrieben, welches dem Hersteller der Terminalsoftware 254 und/oder vom Hersteller des Zahlungsauslöseendgerätes 204 unterstellt ist. Der Autorisierungsserver 234 wird demgegenüber in der Regel in einem Rechenzentrum 230 betrieben, welches einen Bankinstitut unterstellt ist, bei welchem der Käufer 240 sein Konto hat.

Gemäß Ausführungsformen der Erfindung besitzt das Zahlungsauslöseendgerät kein HSM oder vergleichbares Hardwaremodul zur sicheren Speicherung von kryptografischen Schlüsseln. Allerdings besitzen typischerweise sowohl der Vermittlungsserver 250 als auch der Autorisierungsserver 234 jeweils über ein HSM 210, 236 zur sicheren Speicherung kryptographische Schlüssel. In dieser Architektur wird der Vermittlungs-Server zwischen das Zahlungsauslöseendgerät und den Autorisierungsserver platziert um diesen zu ermöglichen, eine Prüfung des ersten Authentifizierungstokens durchzuführen. Diese Prüfung garantiert die Integrität und Vertrauenswürdigkeit des Zahlungsauslöseendgerätes und kompensiert somit das Fehlen eines terminalseitigen HSMs.

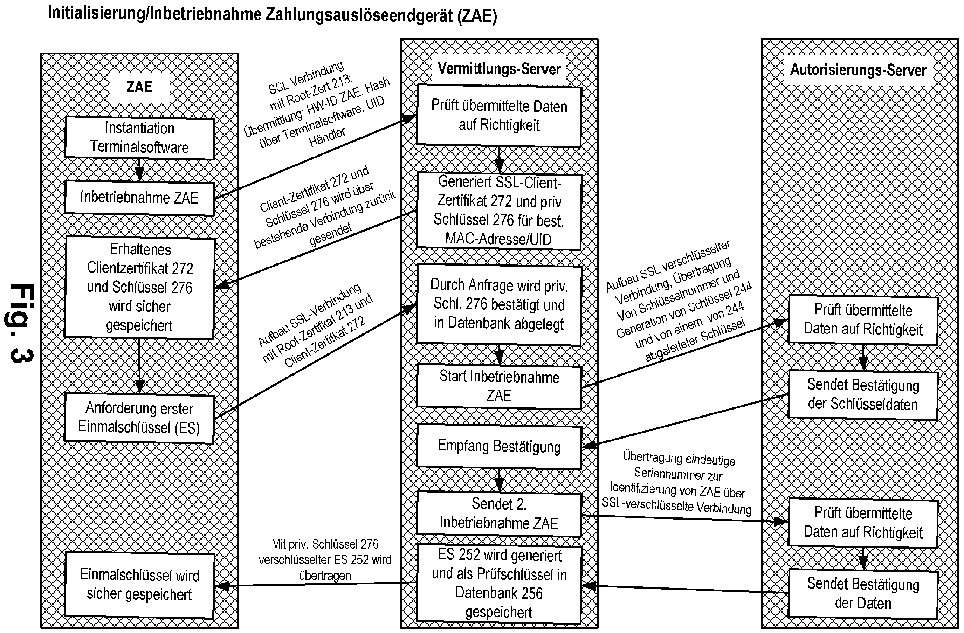

**Figur 3** zeigt ein Ablaufschema der Initialisierung eines Zahlungsauslöseendgeräts. Um die Sicherheit zwischen einem beliebigen Endgerät und dem Vermittlungs-Server herzustellen, ist ein mehrstufiger Prozess zur Validierung des Endgerätes und Austausch der Schlüssel notwendig. Darüber kann erreicht werden, dass der Datenaustausch zwischen Endgerät und Vermittlungs-Servers auch bei Abwesenheit eines Sicherheitsmoduls im Endgerät 204 genauso sicher ist wie der Datenaustausch zwischen einem konventionellen POS-Terminal mit HSM und dem Autorisierungsserver. Die Inbetriebnahme eines Endgerätes und der Austausch der Schlüssel wird in folgenden Ablaufdiagrammen beschrieben.

Die Initialisierung kann beispielsweise im Zuge einer erstmaligen Ingebrauchnahme des Zahlungsauslöseendgerätes durchgeführt werden. Ergänzend oder alternativ dazu kann die Initialisierung aber auch dann automatisch eingeleitet und durchgeführt werden, wenn z.B. der Vermittlungs-Server mehrfach (zum Beispiel häufiger als eine vordefinierte maximale Anzahl) die von einem bestimmten Zahlungsauslöseendgerät erzeugten ersten Authentifizierungstoken als nicht-valide zurückweist. Im Zuge einer (Re-) Initialisierung wird in der Regel eine aktuelle Version der Terminalsoftware instantiiert und kryptographische Schlüssel, z.B. ein endgerät-individueller Schlüssel 276 und ein endgerät-individuelles Client-Zertifikat 272 samt zugehörigem privaten SSL Schlüssel Vermittlungs-Server-seitig erzeugt und an das Endgerät übertragen.

Zunächst wird die Terminalsoftware auf dem Zahlungsauslöseendgerät instanziiert. Dies kann zum Beispiel dadurch erfolgen, dass eine bereits vorinstallierte Terminalsoftware gestartet wird oder dadurch, dass eine aktuelle Version der Terminalsoftware an das Zahlungsauslöseendgerät übertragen und dort installiert wird und dadurch die vorinstallierte Version ersetzt.

Im Zuge der Inbetriebnahme bzw. der Initialisierung wird eine SSL verschlüsselte Verbindung mittels eines SSL Root-Zertifikats 213 zwischen dem Zahlungsauslöseendgerät 204 und dem Vermittlungs-Server 250 aufgebaut. Die instanziierte Terminalsoftware erzeugt eine Initialisierungsnachricht in welche eine geheime Prüfsumme der Terminalsoftware (zum Beispiel ein Hashwert ihres Quellcodes oder von Teilen ihres Quellcodes) eingeht. Die Initialisierungsnachricht beinhaltet zudem eine Hardware-ID (zum Beispiel MAC-Adresse) des Endgeräts 204 und optional auch eine Händler-ID (UID), die dem Zahlungsauslöseendgerät und/oder einer zugehörigen Person oder Organisation zugeordnet ist. Die Händler-ID ermöglicht es einem Autorisierungsserver, ein Händlerkonto zu identifizieren, welches der UID bzw. dem Händler zugeordnet ist und welches beispielsweise als Empfängerkonto für eine Transaktion dienen soll.

Der Vermittlungsserver prüft sodann die übertragenen Daten. Beispielsweise kann der Vermittlungs-Server prüfen, ob die übertragene Hardware-ID in einer Datenbank mit einer Vielzahl von Hardware-IDs registrierter Endgeräte enthalten ist. Es kann eine Prüfung durchgeführt werden, ob der Hashwert bzw. der auf andere Weise von der Terminalsoftware abgeleitete Wert einem Referenzwert entspricht, der durch Anwendung der gleichen Ableitfunktion auf den Quellcode einer mit Sicherheit validen und vertrauenswürdigen Version der Terminalsoftware erzeugt wurde.

Falls die Prüfung der übermittelten Daten ergibt, dass diese richtig sind und einem registrierten Endgerät bzw. einer validen Terminalsoftwareversion entsprechen, erzeugt der Vermittlungs-Server ein Client-Zertifikat 272 und einen privaten Schlüssel 276 spezifisch für ein bestimmtes Endgerät bzw. dessen Hardware ID und/oder Händler-ID.

Das Client-Zertifikat 272 kann insbesondere als SSL-Client-Zertifikat ausgebildet sein. Es handelt sich also um ein Endgerät- individuelles Zertifikat 272 bzw. um einen Endgerät-individuellen Schlüssel 276. Beispielsweise kann der Schlüssel 276 wie oben beschrieben aus der Hardware-ID 258 des Zahlungsauslöseendgerätes und aus einem aus dem Quellcode der Terminalsoftware abgeleiteten Wert 242' (z.B. HashWert) abgeleitet werden.

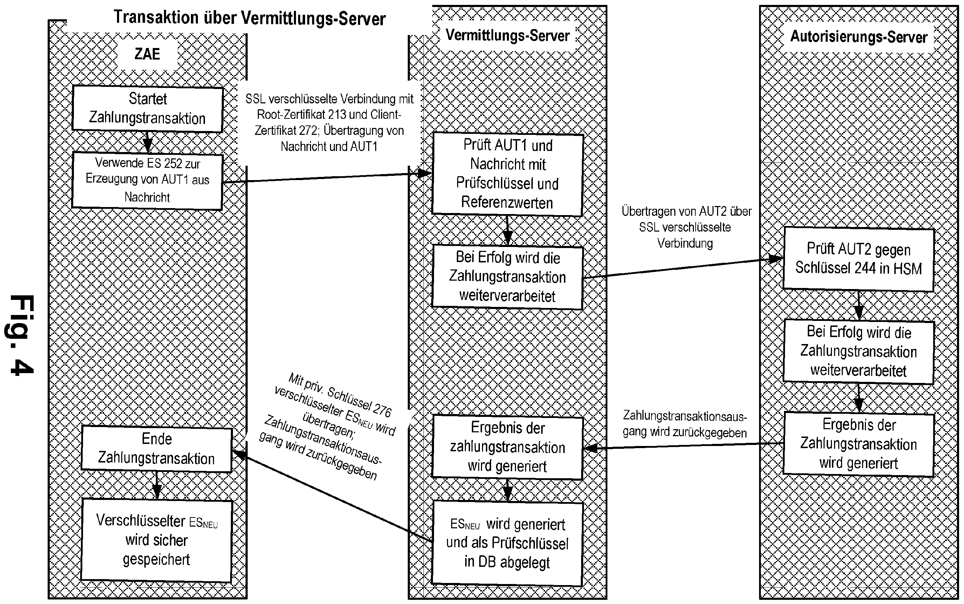

Der private Schlüssel 276 wird vom Endgerät 204 später dazu verwendet werden (siehe Figur 4), um bei einer Transaktion ein erstes Authentifizierungstoken zu berechnen, welches eine MAC-Prüfsumme enthalten kann. Diese Prüfsumme bildet zusätzlich zu der beidseitigen verschlüsselten SSL-Verbindung, auf einer zweiten Schicht des OSI Modells, zusätzlichen Schutz hinsichtlich der Integrität des AUT1 Tokens.

In manchen Ausführungsformen beinhaltet das Client-Zertifikat 272 einen geheimen Schlüssel, für dessen Ableitung der Vermittlungs-Server den geheimen Schlüssel 276 verwendet. Dies kann vorteilhaft sein, da sowohl der private Schlüssel 276 als auch gegebenenfalls der private Schlüssel des Client-Zertifikats 272 eine Verschränkung aus der Hardware-ID und der auf dem Endgerät aktuell installierten Terminalsoftware Dies kann vorteilhaft sein, da der resultierende Wert Eigenschaften der Hardware des Endgeräts mit Eigenschaften der darauf installierten Terminalsoftware miteinander verschränkt und dadurch besonders wirksam vor Manipulation der endgerätseitig an der Erzeugung der Nachricht und des AUT1-Tokens beteiligten Komponenten schützt. Die Verschränkung wird vorzugsweise bei jeder Neu-Initialisierung des Endgeräts erneut vorgenommen.

Das Client-Zertifikat 272 und der private Schlüssel 276 werden vom Vermittlungs-Server an das Endgerät 204 über die bestehende Netzwerkverbindung übertragen.

Dieses speichert die empfangenen Daten auf sichere Weise, beispielsweise in einem kryptographisch gesicherten Laufwerk oder Speicherbereich.

Im nächsten Schritt baut das Endgerät eine geschützte Verbindung zum Vermittlungs-Server auf. Beispielsweise kann die geschützte Verbindung eine SSL-verschlüsselte Verbindung sein, die mit dem Root-Zertifikat 213 und dem Client-Zertifikat 272 aufgebaut wird.

Über diese geschützte Verbindung fordert das Endgerät einen Einmalschlüssel auf sichere Weise vom Vermittlungs-Server an. Der Vermittlungs-Server ist dazu ausgebildet, diese Anforderung als Empfangsbestätigung des Endgeräts bezüglich des geheimen Schlüssels 276 zu interpretieren und eine Kopie des geheimen Schlüssels 276' in Antwort auf den Erhalt dieser Anfrage in der Datenbank 256 so zu speichern, dass der private Schlüssel 276'mit der Hardware-ID oder einen sonstigen Identifikator des Endgeräts verknüpft gespeichert ist.

Nach dem Erhalt der Anforderung des ersten Einmalschlüssels startet der Vermittlungs-Server zunächst weitere Schritte zur Inbetriebnahme des Endgeräts in Zusammenarbeit mit dem Autorisierung-Server 234.

Zunächst baut der Vermittlungs-Server eine geschützte Verbindung zum Autorisierung-Server auf. Beispielsweise kann die geschützte Verbindung aus einer SSL-Verbindung bestehen. Zum Beispiel können ein SSL-Server-Zertifikat 282, dass im Vermittlungs-Server 250 gespeichert ist, und ein SSL-rot-Zertifikat 284, dass im Autorisierungsserver 234 gespeichert ist, zum Aufbau der SSL Verbindung verwendet werden. Über die geschützte Verbindung wird ein privater Schlüssel 244 des Vermittlungs-Servers und damit in Verbindung stehende Werte, insbesondere eine Generation des Schlüssels 244 und ein weiterer, von Schlüssel 244 abgeleitete Schlüssel, an den Autorisierungsserver übertragen.

Der Autorisierung-Server prüft die übermittelten Daten auf Richtigkeit und sendet, falls die Daten korrekt sind, eine Bestätigungsnachricht bezüglich des Schlüssels 244 an den Vermittlungs-Server.

In Antwort auf den Erhalt der Bestätigungsnachricht sendet der Vermittlungs-Server einen eindeutigen Identifikator des Endgerätes 204 über die SSL Verbindung an den Autorisierung-Server. Bei dem Identifikator kann es sich beispielsweise um eine Seriennummer des Zahlungsauslöseendgerätes 204 handeln, die in der Datenbank 256 mit der Hardware-ID des Endgerätes verknüpft gespeichert ist. Die Seriennummer kann beispielsweise bei der Registrierung des Endgerätes bei dem Vermittlungs-Server 250 oder zusammen mit der Hardware-ID bei der Inbetriebnahme des Endgerätes an den Vermittlungs-Server übermittelt worden sein. Die Seriennummer kann die Funktion einer Händler-ID einnehmen oder mit der Händler-ID verknüpft gespeichert sein und ermöglicht eine Zuordnung von Endgerät 204 zu einem Händler-Konto und/oder eine Identifizierung des Händlers durch den Autorisierungs-Server.

In Antwort auf den Erhalt des eindeutigen Identifikators des Endgerätes führt der Autorisierung-Server eine Prüfung der Daten auf Richtigkeit durch. Beispielsweise kann der Autorisierungsserver prüfen, ob mit dem Identifikator ein Konto verknüpft ist, auf welches eine Transaktion verbucht werden kann, ob dieses Konto gesperrt ist oder sonstige das Konto oder den Händler betreffenden relevanten Kriterien erfüllt sind.

Falls die Prüfung positiv verläuft, also ein gültiges Händlerkonto identifiziert werden konnte, sendet der Autorisierung-Server eine Bestätigung des eindeutigen Identifikators an den Vermittlungs-Server.

In Antwort auf die Bestätigung durch den Autorisierung-Server erstellt der Vermittlungs-Server einen Einmalschlüssel 252. Dieser Einmalschlüssel wird nach jeder Prüfung eines ersten Authentifizierungstokens erneuert. Eine identische Kopie des Einmalschlüssels 252' wird in der Datenbank des Vermittlungs-Servers als Prüfwert für die Prüfung eines ersten Authentifizierungs-Tokens im Kontext einer künftigen ersten Transaktion gespeichert.

Der Vermittlungs-Server verwendet eine Kopie des Endgerät-individuellen Schlüssels 276, um den Einmalschlüssel 252 zu verschlüsseln und um den verschlüsselten Einmalschlüssel an das Endgerät zu übertragen.

Das Endgerät 204 kann den verschlüsselten Einmalschlüssel 252 auf sichere Weise, nämlich vorzugsweise verschlüsselt, speichern. Die sichere Speicherung des Einmalschlüssels ist also auch dann möglich, wenn das Endgerät nicht über ein HSM verfügt. Da das Endgerät im Zuge seiner Initialisierung auch eine Kopie des privaten Schlüssels 276 empfangen hat, kann es jederzeit den verschlüsselten Einmalschlüssel wieder entschlüsseln, zum Beispiel um den Einmalschlüssel zur Ableitung eines ersten Authentifizierungstokens im Kontext einer Transaktionsanforderung zu verwenden.

Die gemäß Ausführungsformen der Erfindung beschriebene Verwendung eines SSL Client-Zertifikats und des Einmalschlüssels 252 ermöglichen es einem Nutzer, zum Beispiel den Betreiber des Vermittlungs-Servers, den Zugriff eines bestimmten Endgerätes auf den Vermittlungs-Server zu sperren und darüber hinaus auch die Erneuerung der Einmalschlüssel zu unterbinden. Andere registrierte Händler und deren Schlüssel und Endgeräte sind hiervon nicht betroffen.

Nach einer beispielhaften Ausführungsform verfügt das Client-Zertifikat 272 über ein Ablaufdatum. Das Client-Zertifikat 272 enthält nach Ausführungsformen der Erfindung einen individuellen privaten Schlüssel, der mit dem öffentlichen Schlüssel des Root Zertifikats 274 ein asymmetrisches kryptographisches Schlüsselpaar bildet. Ohne ein gültiges Client-Zertifikat 272 kann das Endgerät keine SSL geschützte Verbindung zu dem Vermittlungs-Server aufbauen. Dies bedeutet, dass das Endgerät und/oder der Vermittlungs-Server nach einer gewissen Zeit eine Neu-Initialisierung des Endgeräts verbunden mit einer Aktualisierung bzw. Neuerstellung der hier beschriebenen Schlüssel und Zertifikate durchführen müssen. Andernfalls kann nach Ablauf der Gültigkeitsdauer des Client-Zertifikats 272 keine Transaktion mehr über dieses Endgerät eingeleitet werden. Dadurch kann sichergestellt werden, sollte es zu einer unerlaubten Übernahme des Endgerätes und einer Manipulation der darauf installierten Terminalsoftware durch Dritte kommen, ohne dass dies zunächst bemerkt wird, dass dieses nach einer gewissen Zeit automatisch nicht mehr an dem Zahlungsverkehr teilnehmen kann: Zumindest im Zuge der Neu-Initialisierung des Endgeräts wird werden Metadaten der Terminalsoftware, z.B. ein Hash über Teile oder die Gesamtheit des Quellcodes der Terminalsoftware, an den Vermittlungsserver übermittelt und mit dort hinterlegten Referenzwerten valider Softwareversionen verglichen. Falls die Terminalsoftware des entwendeten Endgeräts manipuliert wurde, kann keine neue Initialisierung des Endgeräts durchgeführt werden. Bei Ausführungsformen, in welchen die Metadaten der Terminalsoftware bei jeder einzelnen Transaktion vorab von dem Vermittlungs-Server geprüft werden fällt eine Manipulation der Software noch früher auf und führt zu einem Unterbinden der Transaktion durch den Vermittlungs-Server. Zudem kann im Falle eines Verlusts des Endgeräts speziell dieses Endgerät funktional deaktiviert werden, indem in der Datenbank des Vermittlungsservers das diesem Endgerät zugeordnete Client-Zertifikat als nicht-valides Zertifikat gekennzeichnet wird und erste Authentifizierungstoken, die mit Hilfe von Schlüsseln geschützt übertragen wurden, denen dieses invalidierte Client-Zertifikat zugeordnet ist, als nichtvalide gelten.

Nach Ausführungsformen kann ein Betreiber des Vermittlungs-Servers über eine Nutzer-Schnittstelle, z.B. eine GUI, das einem bestimmten Endgerät zugeordnete SSL-Client-Zertifikat und/oder den diesem Endgerät zugeordneten Prüfschlüssel jederzeit gezielt löschen und/oder sperren. Dadurch ist der Zugriff des Endgerätes auf den Vermittlungs-Server gesperrt, da keine sichere Verbindung zur Übertragung des ersten Authentifizierungswertes aufgebaut werden kann, da der Vermittlungs-Server nach Ausführungsformen so konfiguriert ist, dass er Authentifizierungstoken nur von solchen Endgeräten empfängt und prüft, zu welchen er eine geschützte Verbindung, z.B. eine SSL Verbindung, aufbauen kann. Auch kann die Erneuerung des Einmalschlüssels für ein bestimmtes Endgerät durch gezielte Sperrung oder Löschung des diesem zugeordneten geheimen kryptographischen 'Prüfschlüssels 252' unterbunden werden.

**Figur 4** zeigt ein Ablaufschema einer Transaktion unter Einbeziehung eines Vermittlungs-Servers und die Übertragung eines neuen Einmalschlüssels für eine weitere Transaktion an ein bereits mindestens einmal initialisiertes Endgerät. Bei dem Vermittlungsserver und dem Endgerät kann es sich beispielsweise um den Vermittlungs-Server 250 und das Endgerät 204 aus Figur 2 handeln.

Durch die Erstellung eines für jedes Endgerät individuellen privaten Client-Zertifikates 272 kann einmal die SSL-Verbindung zwischen dem Endgerät und dem Vermittlungs-Server aufgebaut werden. Der ebenfalls endgerät-individuelle private Schlüssel 276' wird gemäß Ausführungsformen der Erfindung vom Vermittlungs-Server verwendet um ein weiteren geheimen Einmalschlüssel 252' sicher an das Endgerät zu übertragen. Dieser Einmalschlüssel wird genutzt um bei einer Transaktion ein erstes Authentifizierungstoken, das z.B. eine MAC-Prüfsumme beinhalten kann, zu generieren. Diese Prüfsumme ermöglicht die Prüfung der Integrität der zusammen mit dem ersten Authentifizierungstoken übertragenen Nachricht. Dieser Einmalschlüssel wird nach jeder angebahnten oder durchgeführten Transaktion, für welche der Vermittlungs-Server ein erstes Authentifizierungstoken prüft, erneuert.

In einem ersten Schritt wird eine Transaktion, zum Beispiel eine Zahlungstransaktion gestartet. Wie zuvor bereits beschrieben kann dies automatisch oder manuell erfolgen, zum Beispiel dadurch, dass ein Käufer, welcher mehrere Produkte über eine Selbstbedienung-Kasse erfassen ließ, auf einen Bestätigungsknopf der als Zahlungsauslöseendgerät dienenden Selbstbedienungskasse drückt und dadurch die Zahlung des Gesamtbetrages für die erfassten Produkte einleitet. Außerdem hat der Käufer 240 dafür gesorgt, dass das Endgerät Zugriff auf ein virtuelles oder physikalisches Zahlungsmittel des Käufers hat.

In Antwort auf das Drücken des Bestätigungsknopf bis generiert das Endgerät eine Nachricht, welche zumindest eine Hardware-ID des Endgerätes und transaktionsbezogene Daten, typischerweise auch eine Händler-ID und Daten bezüglich des Zahlungsmittels des Käufers 240 beinhaltet. Das Endgerät verwendet den (bei der Endgerät-Initialisierung oder eines im Zuge einer vorher durchgeführten Transaktion generierten) Einmalschlüssel 252, um aus der Nachricht und dem Einmalschlüssel ein erstes Authentifizierungstoken AUT1 abzuleiten.

Außerdem bauen Endgerät und Vermittlungs-Server eine geschützte Verbindung über das Netzwerk auf. Die geschützte Verbindung kann insbesondere eine zweifach geschützte SSL-Verbindung sein, welche mit dem Endgerätseitigen SSL-Root-Zertifikat 213 und SSL-Client-Zertifikat 272 und dem serverseitigen SSL-Server-Zertifikat 270 und SSL-Root-Zertifikat 274 aufgebaut wird.

Das Endgerät sendet das erste Authentifizierungstoken über die geschützte Verbindung an den Vermittlungs-Server.

Der Server prüft das erste Authentifizierungstoken mithilfe eines dem Endgerät aktuell zugewiesenen Prüfschlüssels und prüft die Nachricht gegen die serverseitig hinterlegten Referenzwerte, insbesondere eine Hardware-ID-Referenz.

Falls die Prüfung ergibt, dass ein mittels des Prüfschlüssels aus der empfangenen Nachricht abgeleiteter Werte identisch ist zu dem übermittelten ersten Authentifizierungstoken und falls alle mit einem Referenzwert verglichenen Teile der Nachricht einem validen Referenzwert entsprechen, gelten die Prüfungen als erfolgreich durchgeführt, d. h., die Nachricht und dass die Nachricht erzeugende Endgerät gelten als vertrauenswürdig und nicht manipuliert. Nur in diesem Fall sendet der Vermittlungs-Server ein zweites Authentifizierungstoken an den Autorisierungsserver-Server 234, typischerweise ein Server im Rechenzentrum eines Bankinstituts. Vorzugsweise werden zusätzlich zum zweiten Authentifizierungstoken auch weitere Daten übertragen, zum Beispiel eine Händler-ID, anhand welcher der Autorisierungsserver ein dem Händler bzw. Endgerät 204 zugeordnetes Händlerkonto identifizieren und prüfen kann, und/oder eine Kennung des Kontos des Käufers 240.

Beispielsweise kann das zweite Authentifizierungstoken eine MAC-Prüfsumme enthalten, die mit einem privaten Schlüssel 224 des Vermittlungs-Servers 250 erzeugt wurde, wobei der private Schlüssel 244 ein mit dem Autorisierungsserver 234 geteiltes Geheimnis (symmetrischer kryptographische Schlüssel) ist. In diesem Fall wird vorzugsweise auch der Datenwert, welcher zur Erzeugung der MAC-Wertes verwendet wurde, zusammen mit dem zweiten Authentifizierungstoken an den Autorisierungsserver übertragen.

Das zweite Authentifizierungstoken AUT2 wird über eine geschützte Verbindung an den Autorisierung-Server übertragen. Beispielsweise kann eine SSL Verbindung mithilfe des SSL-Server-Zertifikats 282 und des SSL-Root-Zertifikats 284 und den zugehörigen Schlüsseln aufgebaut werden.

Der Autorisierungsserver prüft den vom Vermittlungs-Server empfangenen Schlüssel. Beispielsweise kann dies mittels des privaten Schlüssels 244' erfolgen.

Falls die Prüfung des zweiten Authentifizierungstokens positiv verläuft und wenn zusätzlich weitere, das Konto des Händlers und/oder des Käufers betreffende Prüfungen erfolgreich abgeschlossen wurden, leitet der Autorisierungsserver die angefragte Transaktion ein und gibt als Ergebnis zurück, ob die angefragte Transaktion durchgeführt werden konnte. Dieses Ergebnis wird über die SSL Verbindung an den Vermittlungs-Server gesendet.

Der Vermittlungs-Server erzeugt nach Erhalt des Ergebnisses einen neuen Einmalschlüssel und einen neuen Prüfschlüssel. Der neue Prüfschlüssel wird in der Datenbank 256 gespeichert. Das von dem Autorisierungsserver erhaltene Ergebnis der Transaktion kann optional vom Vermittlungs-Server umformatiert und/oder ergänzt werden. Das Ergebnis der Transaktion wird nun von dem Vermittlungs-Server an das Endgerät übertragen. Vorzugsweise geschieht die Übertragung zusammen mit dem neuen Einmalschlüssel.

Das Endgerät zeigt das übermittelte Ergebnis der Transaktion (durchgeführt oder gescheitert, gegebenenfalls ergänzt um einen Fehlerbericht) dem Käufer und/oder Händler an oder gibt das Ergebnis auf sonstige Weise aus, zum Beispiel über einen Kaufbeleg. Der verschlüsselte Einmalschlüssel wird auf dem Endgerät gespeichert und kann nun für folgende Transaktionen verwendet werden.

Falls die von dem Vermittlungs-Server durchgeführten Prüfungen negativ verlaufen, also falls beispielsweise mindestens ein Teil der Nachricht nicht zu einem gültigen Referenzwert korrespondiert oder wenn der mit dem Prüfschlüssel von der empfangenen Nachricht abgeleitete Wert nicht identisch ist zu dem ersten Authentifizierungstoken, gelten die Prüfungen als nicht erfolgreich bestanden. In diesem Fall wird eine Nachricht bezüglich des negativen Prüfergebnisses an das Endgerät gesendet. Dieses negative Prüfergebnis kann über eine Schnittstelle des Endgerätes ausgegeben werden und die Transaktion kann abgebrochen werden. Zusätzlich oder stattdessen kann ein negatives Prüfergebnis eine automatische Neu-Initialisierung des Endgerätes zur Folge haben wie dies in Figur 3 beschrieben ist. In diesem Fall muss die Transaktion nicht notwendigerweise abgebrochen werden. Es ist auch möglich, dass die neu-Initialisierung im Hintergrund abläuft, sodass mit den neuen Schlüsseln und Einmalschlüsseln automatisch ein zweiter Versuch zur Autorisierung der noch anhängigen Transaktion durchgeführt werden kann.

Ausführungsformen der Erfindung umfassen beispielsweise die folgenden Merkmale:

1. Verfahren zur Autorisierung einer bargeldlosen Transaktion, umfassend:

- Erzeugung (102) einer Nachricht (243) durch eine Terminalsoftware (254) eines Zahlungsauslöseendgeräts (204), wobei in die Nachricht zumindest transaktionsbezogene Daten (280) der Transaktion, Daten eines digitalen und/oder elektronischen Zahlungsmittels (264, 228), und eine für das Zahlungsauslöseendgerät (204) eindeutige Hardware-ID (258) eingehen;

- Ableitung (104) eines ersten Authentifizierungstokens (AUT1) aus der Nachricht durch die Terminalsoftware mit Hilfe eines nur einmal für die Transaktion gültigen Einmalschlüssels (252);

- Senden (106) des ersten Authentifizierungstokens und der Nachricht vom Zahlungsauslöseendgerät (204) an einen Vermittlungs-Server (250) über eine geschützte Netzwerkverbindung, wobei der Vermittlungs-Server einen Prüfschlüssel (252') und zumindest einen Referenzwert (242', 258') umfasst, wobei der Prüfschlüssel ein zur einmaligen Verwendung bestimmter und dem Zahlungsauslöseendgerät aktuell zugeordneter Wert ist, wobei der zumindest eine Referenzwert einen Referenzwert für die Hardware-ID (258') des Zahlungsauslöseendgeräts umfasst;

- Prüfung (108) des ersten Authentifizierungstokens anhand der gesendeten Nachricht und des dem Zahlungsauslöseendgerät aktuell zugeordneten Prüfschlüssels(252') durch den Vermittlungs-Server (250) ;

- Prüfen (110) der Nachricht durch Vergleich der Nachricht mit dem zumindest einen Referenzwert durch den Vermittlungs-Server (250), wobei der zumindest eine Referenzwert den Referenzwert für die Hardware-ID umfasst;

- Nur falls die Prüfungen ergeben, dass das erste Authentifizierungstoken (AUT1) valide ist und die Nachricht den zumindest einen Referenzwert enthält, Senden (112) eines zweiten Authentifizierungstoken (AUT2) von dem Vermittlungs-Server an einen Autorisierungsserver (234), welcher zur Autorisierung der Transaktion in Abhängigkeit vom Ergebnis einer Prüfung des zweiten Authentifizierungstoken (AUT2) ausgebildet ist;

- Nach jeder Prüfung eines von dem Zahlungsauslöseendgerät empfangenen ersten Authentifizierungstokens, Erzeugung (116) eines neuen Einmalschlüssels für das Zahlungsauslöseendgerät und eines diesem neuen Einmalschlüssel zugeordneten neuen Prüfschlüssels durch den Vermittlungs-Server und Senden (118) des neuen Einmalschlüssels an das Zahlungsauslöseendgerät; und

- Speichern (120) des neuen Einmalschlüssels durch das Zahlungsauslöseendgerät so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

2. Das Verfahren nach Anspruch 1, wobei das Zahlungsmittel als Chipkarte oder als eine auf einem portablen Nutzer-Computersystem instanziierte virtuelle Bezahlkarte ausgebildet ist.

3. Das Verfahren nach einem der vorigen Ansprüche, wobei es sich bei dem Zahlungsauslöseendgerät um ein Mobilfunkgerät, ein Notebook, einen Tablet-Computer oder um einen Standard-Desktop Computer handelt, oder wobei es sich bei dem Zahlungsauslöseendgerät um ein POS Terminal handelt, insbesondere um eine Selbstbedientungskasse.

4. Das Verfahren nach einem der vorigen Ansprüche, wobei die Nachricht in Reaktion auf eine Interaktion eines Nutzers (240) mit dem Zahlungsauslöseendgerät automatisch erzeugt wird, um die Durchführung der Transaktion zu initialisieren, und/oder wobei der Einmalschlüssel und der dem Zahlungsauslöseendgerät aktuell zugeordnete Prüfschlüssel eine funktionale Einheit zur Prüfung der Integrität einer einzigen, die Transaktion initialisierenden Nachricht bilden und bereits vor der Erzeugung der Nachricht im Zahlungsauslöseendgerät bzw. dem Vermittlungs-Server vorliegen.

5. Das Verfahren nach einem der vorigen Ansprüche, wobei das Zahlungsauslöseendgerät frei ist von Hardwaresicherheitsmodulen (HSMs) und vorzugsweise frei ist von sonstigen internen oder externen Hardwarebauteilen, die speziell für die sichere Speicherung kryptographischer Schlüssel und/oder die sichere Ausführung kryptographischer Operationen oder Applikationen ausgebildet sind.

6. Das Verfahren nach einem der vorigen Ansprüche, wobei in die Nachricht außerdem Metadaten (242) der Terminalsoftware eingehen und wobei der zumindest eine Referenzwert auch ein oder mehrere Referenzwerte für die Metadaten (242) umfasst.

7. Das Verfahren nach Anspruch 6, ferner umfassend:

- Erzeugung der Metadaten oder eines Teils der Metadaten durch die Terminalsoftware durch Anwenden einer nicht-injektiven Funktion auf zumindest einen Teil oder die Gesamtheit des Quellcodes der Terminalsoftware, wobei die nicht-injektive Funktion insbesondere eine Hash-Funktion ist.

8. Das Verfahren nach einem der vorigen Ansprüche, ferner umfassend:

- Erzeugung des zweiten Authentifizierungstokens (AUT2) durch den Vermittlungs-Server durch einen geheimen kryptographischen Schlüssel (244), welcher einem geheimen kryptographischen Schlüssel des Autorisierungsservers (244') zugeordnet ist.

9. Das Verfahren einem der vorigen Ansprüche, wobei das Verfahren eine Initialisierung des Zahlungsauslöseendgeräts umfasst, wobei die Initialisierung beinhaltet:

- Senden einer Initialisierungsnachricht mit Metadaten (242) der Terminalsoftware von dem Zahlungsauslöseendgerät an den Vermittlungs-Server (250);

- Prüfen der Metadaten der Terminal-Software durch den Vermittlungs-Server und nur im Falle, dass die Prüfung ergibt, dass die Terminal-Software des Zahlungsauslöseendgeräts valide ist:

  o Erzeugen eines neuen geheimen Zahlungsauslöseendgerät-individuellen kryptographischen Schlüssels (276) durch den Vermittlungs-Server;

  ◦ Übertragung des geheimen Zahlungsauslöseendgerät -individuellen kryptographischen Schlüssels (276) über das Netzwerk an das Zahlungsauslöseendgerät;

  ◦ Speicherung des geheimen Zahlungsauslöseendgerät-individuellen kryptographischen Schlüssels (276) in einem Speicher des Zahlungsauslöseendgeräts;

  ◦ Senden einer Anforderung zum Erhalt eines Einmalschlüssels (252); von dem Zahlungsauslöseendgerät an den Vermittlungs-Server;

  ◦ In Antwort auf den Erhalt der Anfrage, Speicherung des erzeugten Zahlungsauslöseendgerät-individuellen kryptographischen Schlüssels (276) in Verbindung mit der Hardware-ID des Zahlungsauslöseendgeräts in einer Datenbank (256) durch den Vermittlungs-Server und Erzeugen eines Einmalschlüssels (252, 252') durch den Vermittlungs-Server;

  ◦ Speicherung des erzeugten Einmalschlüssels (252') in Verbindung mit der Hardware-ID des Zahlungsauslöseendgeräts in der Datenbank (256) durch den Vermittlungs-Server; und

  ◦ Übertragung des Einmalschlüssels (252) an das Zahlungsauslöseendgerät über das Netzwerk;

◦ Initialisierung des Zahlungsauslöseendgeräts durch Speicherung des Einmalschlüssels (252) in einem Datenspeicher des Zahlungsauslöseendgeräts.

10. Das Verfahren nach Anspruch 9, umfassend:

- Falls der Vermittlungs-Server feststellt, dass eine vordefinierte maximale Anzahl an ersten Authentifizierungstoken, die von dem Zahlungsauslöseendgerät nacheinander empfangen und als nicht-valide erkannt wurden, erreicht ist, automatische Veranlassung der Re-Initialisierung des Zahlungsauslöseendgeräts.

11. Das Verfahren nach einem der vorigen Ansprüche, wobei der Vermittlungs-Server eine Datenbank (256) mit den Hardware-IDs einer Vielzahl von registrierten Zahlungsauslöseendgeräten umfasst, ferner umfassend:

- Bereitstellen einer Nutzer-Schnittstelle durch den Vermittlungs-Server, die es einem Betreiber des Vermittlungs-Servers ermöglicht, die von dem Vermittlungs-Server zur Erzeugung und/oder sicheren Kommunikation von Einmalschlüsseln benötigten kryptographischen Schlüssel und/oder Zertifikate selektiv für bestimmte Zahlungsauslöseendgeräte zu löschen oder in-validieren; und/oder

- Bereitstellen einer Nutzer-Schnittstelle durch den Vermittlungs-Server, die es einem Betreiber des Vermittlungs-Servers ermöglicht, selektiv ein oder mehrere der Referenzwerte (242', 258') selektiv für bestimmte Zahlungsauslöseendgeräte zu löschen oder zu in-validieren.

12. Das Verfahren nach einem der vorigen Ansprüche, wobei das Senden des zweiten Authentifizierungstokens an den Autorisierungsserver, die Prüfung des zweiten Authentifizierungstokens und der Erhalt der Nachricht von dem Autorisierungsserver durch den Vermittlungs-Server gemäß des ZVT Protokolls erfolgt.

13. Zahlungsauslöseendgerät (204), umfassend:

- eine Schnittstelle (262), welche dazu ausgebildet ist, Daten aus einem elektronischen oder digitalen Zahlungsmittel (264, 266) auszulesen;

- eine für das Zahlungsauslöseendgerät (204) oder eine seiner Hardware-Komponenten eindeutige Hardware-ID (258);

- eine Schnittstelle zum Aufbau einer Netzwerkverbindung mit einem Vermittlungs-Server (250);

- einen Datenspeicher, welcher einen Einmalschlüssel (252) beinhaltet;

- eine Terminal-Software (254) welche dazu ausgebildet ist, eine bargeldlose Transaktion zu veranlassen durch Ausführung folgender Schritte:

   ◦ Erzeugung einer Nachricht (243), wobei in die Nachricht zumindest transaktionsbezogene Daten (280) der Transaktion, aus dem digitalen und/oder elektronischen Zahlungsmittel (264, 228) ausgelesene Daten, und die Hardware-ID (258) eingehen;

   ◦ Ableitung eines ersten Authentifizierungstokens (AUT1) aus der Nachricht mit Hilfe des nur für eine Transaktion gültigen Einmalschlüssels (252) durch die Terminalsoftware;

   ◦ Senden des ersten Authentifizierungstokens und der Nachricht vom Zahlungsauslöseendgerät (204) an einen Vermittlungs-Server (250) über eine geschützte Netzwerkverbindung;

   ◦ Empfang eines neuen Einmalschlüssels für das Zahlungsauslöseendgerät von dem Vermittlungs-Server; und

   ◦ Speichern des neuen Einmalschlüssels so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

14. Vermittlungs-Server (250), umfassend:

- eine Schnittstelle zum Aufbau einer Netzwerkverbindung mit einem Zahlungsauslöseendgerät (204) und einem Autorisierungsserver (234);

- einen Datenspeicher, welcher einen Prüfschlüssel (252') und zumindest einen Referenzwert (242', 258') umfasst, wobei der Prüfschlüssel ein zur einmaligen Verwendung bestimmter und dem Zahlungsauslöseendgerät aktuell zugeordneter Wert ist, wobei der zumindest eine Referenzwert einen Referenzwert für die Hardware-ID (258') des Zahlungsauslöseendgeräts umfasst;

- eine Vermittlungssoftware, welche dazu ausgebildet ist, eine Autorisierung einer angebahnten bargeldlosen Transaktion durch einen Autorisierungsserver zu vermitteln mit den folgenden Schritten:

  ◦ Empfang einer ersten Authentifizierungstokens (AUT1) und einer Nachricht von dem Zahlungsauslöseendgerät über das Netzwerk;

  ◦ Prüfen des ersten Authentifizierungstokens anhand der empfangenen Nachricht und eines dem Zahlungsauslöseendgerät aktuell zugeordneten Prüfschlüssels (252');

  ◦ Prüfen der empfangenen Nachricht durch Vergleich der Nachricht mit dem zumindest einen Referenzwert, wobei der zumindest eine Referenzwert den Referenzwert für die Hardware-ID umfasst;

  ◦ Nur falls die Prüfungen ergeben, dass das erste Authentifizierungstoken (AUT1) valide ist und die Nachricht den zumindest einen Referenzwert enthält, Senden eines zweiten Authentifizierungstoken (AUT2) von dem Vermittlungs-Server an den Autorisierungsserver (234), welcher zur Autorisierung der Transaktion in Abhängigkeit vom Ergebnis einer Prüfung des zweiten Authentifizierungstoken (AUT2) ausgebildet ist;

- Wobei die Vermittlungssoftware ferner dazu ausgebildet ist, um eine Veranlassung einer weiteren bargeldlosen Transaktion zu ermöglichen, ach jeder Prüfung eines von dem Zahlungsauslöseendgerät empfangenen ersten Authentifizierungstokens, einen neuen Einmalschlüssel für das Zahlungsauslöseendgerät und einen diesem neuen Einmalschlüssel zugeordneten neuen Prüfschlüssel zu erzeugen, und den neuen Einmalschlüssel an das Zahlungsauslöseendgerät zu senden.

15. Der Vermittlungs-Server (250) nach Anspruch 14, wobei der Vermittlungs-Server dazu ausgebildet ist, nach Prüfungen einer vordefinierten Zahl von ersten Authentifizierungstoken eines Zahlungsauslöseendgeräts die Neu-Initialisierung des Zahlungsauslöseendgeräts zu veranlassen, wobei vorzugsweise der Vermittlungs-Server dazu ausgebildet ist, im Zuge der Initialisierung für das Zahlungsauslöseendgerät einen endgerät-individuellen privaten Schlüssel (276) aus der Hardware-ID 258 des Zahlungsauslöseendgerätes und aus einem aus dem Quellcode der Terminalsoftware abgeleiteten Wert (242') abzuleiten, wobei der Vermittlungs-Server ferner dazu ausgebildet ist, diesen endgerät-individuellen privaten Schlüssel (276) im Zuge der Initialisierung an das Endgerät zu übertragen, und wobei der Vermittlungs-Server vorzugsweise ferner dazu ausgebildet ist, den endgerät-individuellen privaten Schlüssel (276) bei nach der Initialisierung stattfindenden Transaktionen jeweils zur Verschlüsselung des transaktionsspezifischen Einmalschlüssels zu verwenden und den jeweils vom Vermittlungs-Server generierten Einmalschlüssel in verschlüsselter Form an das Zahlungsauslöseendgerät zu senden.

List of reference numerals

| 102-120 | Schritte |
|---|---|
| 202 | Nutzer (Händler) |
| 204 | Zahlungsauslöseendgerät |
| 206 | Anzeigevorrichtung |
| 208 | Touchscreen |
| 210 | HSM eines Vermittlungs-Servers |
| 212 | Software zur Nachrichtengenerierung |
| 213 | SSL Root-Zertifikat 1 |
| 214 | Software zur Generierung eines ersten Tokens |
| 216 | Software zur SSL Verschlüsselung |
| 218 | Kernel des Betriebssystems |

| | |
|---|---|
| 220 | Software zur Datenbereitstellung |
| 222 | NFC Schnittstelle |
| 224 | Mobilfunkgerät |
| 226 | Chipkartenlesegerät |
| 228 | Bezahlkarte |
| 230 | Rechenzentrum |
| 232 | SSL Gateway |
| 234 | Transaktion-Server |
| 236 | HSM des Transaktions-Servers |
| 242 | Metadaten der Terminalsoftware 254 |
| 243 | Nachricht |
| 244 | privater Schlüssel |
| 246 | Software zum Prüfen des ersten Tokens |
| 248 | Software zum Prüfen des zweiten Tokens |
| 250 | Vermittlungs-Server |
| 252 | Einmalschlüssel |
| 252' | Kopie Einmalschlüssel ("Prüfschlüssel") |
| 254 | Terminalsoftware |
| 256 | Zuordnungstabelle |
| 258 | MAC/Hardware-ID des Händler-Smartphones 204 |
| 260 | Rechenzentrum |
| 262 | Schnittstelle Girokarte |
| 264 | virtuelle Bezahlkarte |
| 266 | Chip einer physischen Bezahlkarte |
| 268 | Software zur Erzeugung des Einmalschlüssels |
| 270 | SSL-Server Zertifikat 1 |
| 272 | SSL-Client Zertifikat 2 |
| 274 | SSL-Root-Zertifikat 2 |
| 276 | privater endgerätspezifischer Schlüssel |
| 277 | geheimer Ableitungsschlüssel |
| 278 | Urzeit |
| 280 | transaktionsbezogene Daten |
| 282 | SSL-Server Zertifikat 1 |
| 284 | SSL-Root Zertifikat 1 |

**Patentansprüche**

1. Verfahren zur Initialisierung eines Zahlungsauslöseendgeräts, wobei das Zahlungsauslöseendgerät (204) eine Terminalsoftware (254) umfasst und wobei die Initialisierung beinhaltet:

- Senden einer Initialisierungsnachricht mit Metadaten (242) der Terminalsoftware von dem Zahlungsauslöseendgerät an einen Vermittlungs-Server (250);
- Prüfen der Metadaten der Terminal-Software durch den Vermittlungs-Server und nur im Falle, dass die Prüfung ergibt, dass die Terminal-Software des Zahlungsauslöseendgeräts valide ist:

  ◦ Erzeugen eines neuen geheimen Zahlungsauslöseendgerät-individuellen kryptographischen Schlüssels (276) durch den Vermittlungs-Server;
  ◦ Übertragung des geheimen Zahlungsauslöseendgerät -individuellen kryptographischen Schlüssels (276) über ein Netzwerk an das Zahlungsauslöseendgerät;
  ◦ Speicherung des geheimen Zahlungsauslöseendgerät-individuellen kryptographischen Schlüssels (276) in einem Speicher des Zahlungsauslöseendgeräts;
  ◦ Senden einer Anforderung zum Erhalt eines Einmalschlüssels (252); von dem Zahlungsauslöseendgerät an den Vermittlungs-Server;
  ◦ In Antwort auf den Erhalt der Anfrage, Speicherung des erzeugten Zahlungsauslöseendgerät-individuellen kryptographischen Schlüssels (276) in Verbindung mit der Hardware-ID des Zahlungsauslöseendgeräts in einer Datenbank (256) durch den Vermittlungs-Server, und Erzeugen eines Einmalschlüssels (252, 252') durch den Vermittlungs-Server;

○ Speicherung des erzeugten Einmalschlüssels (252') in Verbindung mit der Hardware-ID des Zahlungsauslöseendgeräts in der Datenbank (256) durch den Vermittlungs-Server; und

○ Übertragung des Einmalschlüssels (252) an das Zahlungsauslöseendgerät über das Netzwerk;

○ Initialisierung des Zahlungsauslöseendgeräts durch Speicherung des Einmalschlüssels (252) in einem Datenspeicher des Zahlungsauslöseendgeräts.

2. Das Verfahren nach Anspruch 1, wobei das Verfahren umfasst ein Verfahren zur Autorisierung einer bargeldlosen Transaktion, wobei das Verfahren zur Autorisierung einer bargeldlosen Transaktion umfasst:

- Erzeugung (102) einer Nachricht (243) durch die Terminalsoftware (254) des Zahlungsauslöseendgeräts (204), wobei in die Nachricht zumindest transaktionsbezogene Daten (280) der Transaktion, Daten eines digitalen und/oder elektronischen Zahlungsmittels (264, 228), und eine für das Zahlungsauslöseendgerät (204) eindeutige Hardware-ID (258) eingehen;

- Ableitung (104) eines ersten Authentifizierungstokens (AUT1) aus der Nachricht durch die Terminalsoftware mit Hilfe eines nur einmal für die Transaktion gültigen Einmalschlüssels (252);

- Senden (106) des ersten Authentifizierungstokens und der Nachricht vom Zahlungsauslöseendgerät (204) an einen Vermittlungs-Server (250) über eine geschützte Netzwerkverbindung, wobei der Vermittlungs-Server einen Prüfschlüssel (252') und zumindest einen Referenzwert (242', 258') umfasst, wobei der Prüfschlüssel ein zur einmaligen Verwendung bestimmter und dem Zahlungsauslöseendgerät aktuell zugeordneter Wert ist, wobei der zumindest eine Referenzwert einen Referenzwert für die Hardware-ID (258') des Zahlungsauslöseendgeräts umfasst;

- Prüfung (108) des ersten Authentifizierungstokens anhand der gesendeten Nachricht und des dem Zahlungsauslöseendgerät aktuell zugeordneten Prüfschlüssels(252') durch den Vermittlungs-Server (250) ;

- Prüfen (110) der Nachricht durch Vergleich der Nachricht mit dem zumindest einen Referenzwert durch den Vermittlungs-Server (250), wobei der zumindest eine Referenzwert den Referenzwert für die Hardware-ID umfasst;

- Nur falls die Prüfungen ergeben, dass das erste Authentifizierungstoken (AUT1) valide ist und die Nachricht den zumindest einen Referenzwert enthält, Senden (112) eines zweiten Authentifizierungstoken (AUT2) von dem Vermittlungs-Server an einen Autorisierungsserver (234), welcher zur Autorisierung der Transaktion in Abhängigkeit vom Ergebnis einer Prüfung des zweiten Authentifizierungstoken (AUT2) ausgebildet ist;

- Nach jeder Prüfung eines von dem Zahlungsauslöseendgerät empfangenen ersten Authentifizierungstokens, Erzeugung (116) eines neuen Einmalschlüssels für das Zahlungsauslöseendgerät und eines diesem neuen Einmalschlüssel zugeordneten neuen Prüfschlüssels durch den Vermittlungs-Server und Senden (118) des neuen Einmalschlüssels an das Zahlungsauslöseendgerät; und

- Speichern (120) des neuen Einmalschlüssels durch das Zahlungsauslöseendgerät so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

3. Das Verfahren nach Anspruch 2, wobei das Zahlungsmittel als Chipkarte oder als eine auf einem portablen Nutzer-Computersystem instanziierte virtuelle Bezahlkarte ausgebildet ist.

4. Das Verfahren nach einem der vorigen Ansprüche, wobei es sich bei dem Zahlungsauslöseendgerät um ein Mobilfunkgerät, ein Notebook, einen Tablet-Computer oder um einen Standard-Desktop Computer handelt, oder wobei es sich bei dem Zahlungsauslöseendgerät um ein POS Terminal handelt, insbesondere um eine Selbstbedienungskasse.

5. Das Verfahren nach einem der vorigen Ansprüche 2-4, wobei die Nachricht (243) in Reaktion auf eine Interaktion eines Nutzers (240) mit dem Zahlungsauslöseendgerät automatisch erzeugt wird, um die Durchführung der Transaktion zu initialisieren, und/oder wobei der Einmalschlüssel und der dem Zahlungsauslöseendgerät aktuell zugeordnete Prüfschlüssel eine funktionale Einheit zur Prüfung der Integrität einer einzigen, die Transaktion initialisierenden Nachricht bilden und bereits vor der Erzeugung der Nachricht im Zahlungsauslöseendgerät bzw. dem Vermittlungs-Server vorliegen.

6. Das Verfahren nach einem der vorigen Ansprüche, wobei das Zahlungsauslöseendgerät frei ist von Hardwaresicherheitsmodulen (HSMs) und vorzugsweise frei ist von sonstigen internen oder externen Hardwarebauteilen, die speziell für die sichere Speicherung kryptographischer Schlüssel und/oder die sichere Ausführung kryptographischer Operationen oder Applikationen ausgebildet sind.

7. Das Verfahren nach einem der vorigen Ansprüche 2-6, wobei in die Nachricht (243) außerdem Metadaten (242) der Terminalsoftware eingehen und wobei der zumindest eine Referenzwert auch ein oder mehrere Referenzwerte für die Metadaten (242) umfasst.

8. Das Verfahren nach Anspruch 7, ferner umfassend:

   - Erzeugung der Metadaten oder eines Teils der Metadaten durch die Terminalsoftware durch Anwenden einer nicht-injektiven Funktion auf zumindest einen Teil oder die Gesamtheit des Quellcodes der Terminalsoftware, wobei die nicht-injektive Funktion insbesondere eine Hash-Funktion ist.

9. Das Verfahren nach einem der vorigen Ansprüche 2-8, ferner umfassend:

   - Erzeugung des zweiten Authentifizierungstokens (AUT2) durch den Vermittlungs-Server durch einen geheimen kryptographischen Schlüssel (244), welcher einem geheimen kryptographischen Schlüssel des Autorisierungsservers (244') zugeordnet ist.

10. Das Verfahren nach einem der vorigen Ansprüche, umfassend:

    - Falls der Vermittlungs-Server feststellt, dass eine vordefinierte maximale Anzahl an ersten Authentifizierungstoken, die von dem Zahlungsauslöseendgerät nacheinander empfangen und als nicht-valide erkannt wurden, erreicht ist, automatische Veranlassung der Re-Initialisierung des Zahlungsauslöseendgeräts.

11. Das Verfahren nach einem der vorigen Ansprüche, wobei der Vermittlungs-Server eine Datenbank (256) mit den Hardware-IDs einer Vielzahl von registrierten Zahlungsauslöseendgeräten umfasst, ferner umfassend:

    - Bereitstellen einer Nutzer-Schnittstelle durch den Vermittlungs-Server, die es einem Betreiber des Vermittlungs-Servers ermöglicht, die von dem Vermittlungs-Server zur Erzeugung und/oder sicheren Kommunikation von Einmalschlüsseln benötigten kryptographischen Schlüssel und/oder Zertifikate selektiv für bestimmte Zahlungsauslöseendgeräte zu löschen oder in-validieren; und/oder
    - Bereitstellen einer Nutzer-Schnittstelle durch den Vermittlungs-Server, die es einem Betreiber des Vermittlungs-Servers ermöglicht, selektiv ein oder mehrere der Referenzwerte (242', 258') selektiv für bestimmte Zahlungsauslöseendgeräte zu löschen oder zu in-validieren.

12. Das Verfahren nach einem der vorigen Ansprüche 2-11, wobei das Senden des zweiten Authentifizierungstokens an den Autorisierungsserver, die Prüfung des zweiten Authentifizierungstokens und der Erhalt der Nachricht (243) von dem Autorisierungsserver durch den Vermittlungs-Server gemäß des ZVT-Host-Protokolls erfolgt.

13. Zahlungsauslöseendgerät (204), umfassend:

    - eine Schnittstelle (262), welche dazu ausgebildet ist, Daten aus einem elektronischen oder digitalen Zahlungsmittel (264, 266) auszulesen;
    - eine für das Zahlungsauslöseendgerät (204) oder eine seiner Hardware-Komponenten eindeutige Hardware-ID (258);
    - eine Schnittstelle zum Aufbau einer Netzwerkverbindung mit einem Vermittlungs-Server (250);
    - einen Datenspeicher, welcher einen Einmalschlüssel (252) beinhaltet;
    - eine Terminal-Software (254),
    - wobei das Zahlungsauslöseendgerät dazu ausgebildet ist, in Interoperation mit dem Vermittlungsserver das Zahlungsauslöseendgerät zu initialisieren, wobei das Zahlungsauslöseendgerät ausgebildet ist zum:

      ∘ Senden einer Initialisierungsnachricht mit Metadaten (242) der Terminalsoftware von dem Zahlungsauslöseendgerät an einen Vermittlungs-Server (250), um dem Vermittlungsserver eine Prüfung der Metadaten der Terminal-Software zu ermöglichen und um dem Vermittlungsserver zu ermöglichen, einen neuen geheimen Zahlungsauslöseendgerät-individuellen kryptographischen Schlüssel (276) zu erzeugen im Falle, dass die Prüfung ergibt, dass die Terminal-Software des Zahlungsauslöseendgeräts valide ist;
      ∘ Empfang eines neuen geheimen Zahlungsauslöseendgerät-individuellen kryptographischen Schlüssels (276) von dem Vermittlungs-Server über ein Netzwerk;
      ∘ Speicherung des geheimen Zahlungsauslöseendgerät-individuellen kryptographischen Schlüssels (276) in einem Speicher des Zahlungsauslöseendgeräts;

◦ Senden einer Anforderung zum Erhalt eines Einmalschlüssels (252); von dem Zahlungsauslöseendgerät an den Vermittlungs-Server, um dem Vermittlungs-Server zu ermöglichen, in Antwort auf den Erhalt der Anfrage, den erzeugten Zahlungsauslöseendgerät-individuellen kryptographischen Schlüssel (276) in Verbindung mit der Hardware-ID des Zahlungsauslöseendgeräts in einer Datenbank (256) zu speichern und einen Einmalschlüssel (252, 252') zu erzeugen und den Einmalschlüssel in Verbindung mit der Hardware-ID des Zahlungsauslöseendgeräts in einer Datenbank (256) zu speichern; und
◦ Empfang des Einmalschlüssels (252) von dem Vermittlungs-Server über das Netzwerk;
◦ Initialisierung des Zahlungsauslöseendgeräts durch Speicherung des Einmalschlüssels (252) in einem Datenspeicher des Zahlungsauslöseendgeräts.

**14.** Das Zahlungsauslöseendgerät nach Anspruch 13, wobei die Terminalsoftware dazu ausgebildet ist, eine bargeldlose Transaktion zu veranlassen durch Ausführung folgender Schritte:

◦ Erzeugung einer Nachricht (243), wobei in die Nachricht zumindest transaktionsbezogene Daten (280) der Transaktion, aus dem digitalen und/oder elektronischen Zahlungsmittel (264, 228) ausgelesene Daten, und die Hardware-ID (258) eingehen;
◦ Ableitung eines ersten Authentifizierungstokens (AUT1) aus der Nachricht mit Hilfe des nur für eine Transaktion gültigen Einmalschlüssels (252) durch die Terminalsoftware;
◦ Senden des ersten Authentifizierungstokens und der Nachricht vom Zahlungsauslöseendgerät (204) an den Vermittlungs-Server (250) über eine geschützte Netzwerkverbindung;
◦ Empfang eines neuen Einmalschlüssels für das Zahlungsauslöseendgerät von dem Vermittlungs-Server; und
◦ Speichern des neuen Einmalschlüssels so, dass der zuletzt verwendete Einmalschlüssel überschrieben oder invalidiert wird, sodass bei einer künftigen Transaktion der neue Einmalschlüssel zur Ableitung eines neuen ersten Authentifizierungstokens verwendet wird.

**15.** Vermittlungs-Server (250), umfassend:

- eine Schnittstelle zum Aufbau einer Netzwerkverbindung mit einem Zahlungsauslöseendgerät (204) und einem Autorisierungsserver (234);
- einen Datenspeicher, welcher einen Prüfschlüssel (252') und zumindest einen Referenzwert (242', 258') umfasst, wobei der Prüfschlüssel ein zur einmaligen Verwendung bestimmter und dem Zahlungsauslöseendgerät aktuell zugeordneter Wert ist, wobei der zumindest eine Referenzwert einen Referenzwert für die Hardware-ID (258') des Zahlungsauslöseendgeräts umfasst;
wobei der Vermittlungs-Server dazu ausgebildet ist, nach Prüfungen einer vordefinierten Zahl von ersten Authentifizierungstoken das Zahlungsauslöseendgeräts eine Neu-Initialisierung des Zahlungsauslöseendgeräts zu veranlassen, wobei der Vermittlungs-Server dazu ausgebildet ist, im Zuge der Initialisierung für das Zahlungsauslöseendgerät einen endgerät-individuellen privaten Schlüssel (276) aus der Hardware-ID 258 des Zahlungsauslöseendgerätes und aus einem aus dem Quellcode der Terminalsoftware abgeleiteten Wert (242') abzuleiten, wobei der Vermittlungs-Server ferner dazu ausgebildet ist, diesen endgerät-individuellen privaten Schlüssel (276) im Zuge der Initialisierung an das Endgerät zu übertragen, und wobei der Vermittlungs-Server vorzugsweise ferner dazu ausgebildet ist, den endgerät-individuellen privaten Schlüssel (276) bei nach der Initialisierung stattfindenden Transaktionen jeweils zur Verschlüsselung eines transaktionsspezifischen Einmalschlüssels zu verwenden und den jeweils vom Vermittlungs-Server generierten Einmalschlüssel in verschlüsselter Form an das Zahlungsauslöseendgerät zu senden.

**16.** Der Vermittlungs-Server (250) nach Anspruch 15, ferner umfassend:

- eine Vermittlungssoftware, welche dazu ausgebildet ist, eine Autorisierung einer angebahnten bargeldlosen Transaktion durch einen Autorisierungsserver zu vermitteln mit den folgenden Schritten:

◦ Empfang einer ersten Authentifizierungstokens (AUT1) und einer Nachricht von dem Zahlungsauslöseendgerät über das Netzwerk;
◦ Prüfen des ersten Authentifizierungstokens anhand der empfangenen Nachricht und eines dem Zahlungsauslöseendgerät aktuell zugeordneten Prüfschlüssels (252');
◦ Prüfen der empfangenen Nachricht durch Vergleich der Nachricht mit dem zumindest einen Referenzwert, wobei der zumindest eine Referenzwert den Referenzwert für die Hardware-ID umfasst;
◦ Nur falls die Prüfungen ergeben, dass das erste Authentifizierungstoken (AUT1) valide ist und die Nachricht den zumindest einen Referenzwert enthält, Senden eines zweiten Authentifizierungstoken (AUT2) von dem Vermittlungs-Server an den Autorisierungsserver (234), welcher zur Autorisierung der Transaktion in Abhängigkeit vom Ergebnis einer Prüfung des zweiten Authentifizierungstoken (AUT2) ausgebildet ist;

- wobei die Vermittlungssoftware ferner dazu ausgebildet ist, um eine Veranlassung einer weiteren bargeldlosen Transaktion zu ermöglichen, ach jeder Prüfung eines von dem Zahlungsauslöseendgerät empfangenen ersten Authentifizierungstokens, einen neuen Einmalschlüssel für das Zahlungsauslöseendgerät und einen diesem neuen Einmalschlüssel zugeordneten neuen Prüfschlüssel zu erzeugen, und den neuen Einmalschlüssel an das Zahlungsauslöseendgerät zu senden.

ZAE

Erzeugung einer Nachricht — 102

Ableitung 1. Authentifizierungstoken AUT1 aus der Nachricht mit Einmalschlüssel — 104

Senden von AUT1 und der Nachricht an den Vermittlungs-Server — 106

Vermittlungs-Server

Prüfen des 1. Authentifizierungstokens mit Prüfschlüssel — 108

Prüfen der Nachricht durch Vergleich der Nachricht mit einem Referenzwert — 110

AUT1 valide und Referenzwerte identisch?

**Nein**

**Ja**

Veranlassung des ZAE zur erneuten Erstellung der Nachricht und AUT1 so oft, bis MaxNumber invalide Prüfergebnisse erhalten wurden; Dann Neu-Initialisierung ZAE — 113

Erzeugen&Senden von AUT2 von dem Vermittlungs-Server an einen Autorisierungsserver zur Prüfung des AUT2 — 112

Empfang eienr Mitteilung von dem Autorisierungsserver, ob die Transaktion autorisiert wurde, Weiterleitung an ZAE — 114

Erzeugung eines neuen Einmalschlüssels ES$_{NEU}$ — 116

Senden des neuen Einmalschlüssels an das Zahlungsauslöseendgerät — 118

ZAE

Speichern des neuen Einmalschlüssels und Invalidierung des zuletzt verwendeten Einmalschlüssels durch das Zahlungsauslöseendgerät — 120

# Fig. 1

202
Händler

Zahlungsauslöseendgerät · 204

| Anzeigevorrichtung 206 |

| Touchscreen/Tastaturfeld 208 |

TerminalSoftware 254

| EinmalS 252 |

**242**
Hash&Version

**212**
Nachricht-Generierung

| NA 243 |

| MAC 258 |

Kernel 218

**220**
Daten-Bereitstellung

| D |

**214**
AUT-Token Generierung

| AUT1 |

Uhrzeit
**278**

Transakt.D.
**280**

**216**
SSL-Verschl.

| SSL-RootZert1 213 |

| SSL-ClientZert2 272 |

| Priv Schl. 276 |

Schnittstelle Girokarte 262

**222**
NFC Schnittstelle

**224**
Mobilfunkgerät

**264**
Virt.Zahlkart.

**226**
Chipkartenlese-gerät

**228**
(Giro)Zahlkarte

**266**
Chip

240
Käufer

Rechenzentrum I · 260

SSL Gateway 232

| SSL-ServerZert1 270 |

| SSL-RootZert2 274 |

AUT1

Vermittlungs-Server 250

| Hash&Version' 242' |

| NA1' 243' | MAC' 258' |

| Prüfen AUT1 146 |

**256**

| MAC | ES | Priv. Schl. | SerNr |
|-----|-----|-----|-----|
| XXX | 252' | 276' | xxx |
| XXX | XXX | XXX | xxx |

HSM 210

| AbleitS. 277 |

| Priv S2 244 |

| Ableit(AUT1)->Einm.S 268 |

| SSL-ServerZert1 282 |

AUT2

Rechenzentrum II · 230

**234**
Transaktions-Server

| SSL-RootZert1 284 |

| Prüfen AUT2 248 |

HSM 236

| Priv S2' 244' |

① (Proprietäre) SSL Verbindung

② SSL Verbindung
[ZVT-Host Protokoll mit AUT2]

# Fig. 2

# Initialisierung/Inbetriebnahme Zahlungsauslöseendgerät (ZAE)

**Fig. 3**

EP 4 053 771 A1

Fig. 4

**EUROPÄISCHER RECHERCHENBERICHT**

Europäisches Patentamt
European Patent Office
Office européen des brevets

Nummer der Anmeldung

EP 22 15 1700

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/070041 A2 (ELECTRONIC TRANSACTION SERVICE [NZ]; GILL JASON NIGEL [NZ] ET AL.) 4. Juni 2009 (2009-06-04) * Seite 10, Zeile 20 – Seite 15, Zeile 6 * * Abbildung 1 * ----- | 1-16 | INV. G06Q20/02 G06Q20/20 G06Q20/38 |
| A | US 4 578 530 A (ZEIDLER HOWARD M [US]) 25. März 1986 (1986-03-25) * Spalte 3, Zeile 51 – Spalte 7, Zeile 13 * * Spalte 8, Zeile 4 – Spalte 10, Zeile 66 * * Spalte 13, Zeile 1 – Spalte 19, Zeile 38 * ----- | 1-16 | |
| A | US 2014/052642 A1 (SPIES TERENCE [US] ET AL) 20. Februar 2014 (2014-02-20) * Absatz [0031] – Absatz [0079] * * Abbildung 1 * ----- | 1-16 | |
| A | US 2017/255915 A1 (CHANDRASEKARAN SASHIKANTH [US] ET AL) 7. September 2017 (2017-09-07) * Absatz [0043] – Absatz [0045] * * Absatz [0141] – Absatz [0195] * ----- | 1-16 | **RECHERCHIERTE SACHGEBIETE (IPC)** G06Q G07F |
| A | WO 2004/055634 A2 (FINITE STATE MACHINE LABS INC [US]; YODAIKEN VICTOR J [US]) 1. Juli 2004 (2004-07-01) * Absatz [0006] – Absatz [0015] * * Absatz [0024] – Absatz [0041] * ----- -/-- | 1-16 | |

Der vorliegende Recherchenbericht wurde für alle Patentansprüche erstellt

| Recherchenort | Abschlußdatum der Recherche | Prüfer |
|---|---|---|
| Den Haag | 6. Juli 2022 | Bohner, Michael |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

**EP 22 15 1700**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Lucian Constantin: "Poor security decisions expose payment terminals to mass fraud", PCWorld, 23. Dezember 2015 (2015-12-23), XP055609618, Gefunden im Internet: URL:https://www.pcworld.com/article/3017790/poor-security-decisions-expose-payment-terminals-to-mass-fraud.html [gefunden am 2019-07-30] * das ganze Dokument * ----- | 1-16 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 6. Juli 2022 | Bohner, Michael |

EPO FORM 1503 03.82 (P04C03)

**Seite 2 von 2**

**ANHANG ZUM EUROPÄISCHEN RECHERCHENBERICHT ÜBER DIE EUROPÄISCHE PATENTANMELDUNG NR.**

EP 22 15 1700

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-07-2022

| Im Recherchenbericht angeführtes Patentdokument | Datum der Veröffentlichung | Mitglied(er) der Patentfamilie | Datum der Veröffentlichung |
|---|---|---|---|
| WO 2009070041 A2 | 04-06-2009 | KEINE | |
| US 4578530 A | 25-03-1986 | KEINE | |
| US 2014052642 A1 | 20-02-2014 | EP 2438580 A2 | 11-04-2012 |
| | | US 2011137802 A1 | 09-06-2011 |
| | | US 2014052642 A1 | 20-02-2014 |
| | | WO 2010141501 A2 | 09-12-2010 |
| US 2017255915 A1 | 07-09-2017 | CN 108476228 A | 31-08-2018 |
| | | EP 3375166 A1 | 19-09-2018 |
| | | JP 6476352 B1 | 27-02-2019 |
| | | JP 2019509649 A | 04-04-2019 |
| | | KR 20180087429 A | 01-08-2018 |
| | | US 2017255915 A1 | 07-09-2017 |
| | | WO 2017151820 A1 | 08-09-2017 |
| WO 2004055634 A2 | 01-07-2004 | AU 2003302996 A1 | 09-07-2004 |
| | | CA 2509579 A1 | 01-07-2004 |
| | | CN 1748203 A | 15-03-2006 |
| | | EP 1584034 A2 | 12-10-2005 |
| | | US 2004123137 A1 | 24-06-2004 |
| | | US 2010011444 A1 | 14-01-2010 |
| | | US 2012066766 A1 | 15-03-2012 |
| | | US 2013145467 A1 | 06-06-2013 |
| | | WO 2004055634 A2 | 01-07-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4578530 A